(19) Europäisches Patentamt
European Patent Office
Office européen des brevets

(11) EP 3 365 411 B1

(12) EUROPEAN PATENT SPECIFICATION

(45) Date of publication and mention of the grant of the patent:
**13.05.2020 Bulletin 2020/20**

(21) Application number: **16775469.6**

(22) Date of filing: **30.09.2016**

(51) Int Cl.:
*C09K 19/02* (2006.01) *C09K 19/60* (2006.01)
*G02F 1/137* (2006.01) *C09K 19/04* (2006.01)

(86) International application number:
**PCT/EP2016/001628**

(87) International publication number:
**WO 2017/067630 (27.04.2017 Gazette 2017/17)**

(54) **LIGHT MODULATION ELEMENT**

LICHTMODULATIONSELEMENT

ÉLÉMENT DE MODULATION DE LUMIÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.10.2015 EP 15191161**

(43) Date of publication of application:
**29.08.2018 Bulletin 2018/35**

(73) Proprietor: **Merck Patent GmbH**
**64293 Darmstadt (DE)**

(72) Inventors:
- **WILKES, David**
  **64291 Darmstadt (DE)**
- **HAENSEL, Helmut**
  **64367 Mühltal (DE)**

(56) References cited:
**WO-A1-2014/005670 WO-A1-2014/183825**
**WO-A1-2015/090511 WO-A1-2015/096879**
**GB-A- 2 356 629**

- **PRAMODA KUMAR ET AL: "Converse Flexoelectric Effect in Bent-Core Nematic Liquid Crystals", JOURNAL OF PHYSICAL CHEMISTRY PART B: CONDENSED MATTER, MATERIALS, SURFACES, INTERFACES & BIOPHYSICAL, vol. 113, no. 27, 9 July 2009 (2009-07-09) , pages 9168-9174, XP055325961, US ISSN: 1520-6106, DOI: 10.1021/jp903241z**
- **VAN LE K ET AL: "Flexoelectric effect in a bent-core mesogen", LIQUID CRYSTALS, TAYLOR & FRANCIS, vol. 36, no. 10-11, 1 October 2009 (2009-10-01), pages 1119-1124, XP001550213, ISSN: 0267-8292, DOI: 10.1080/02678290902854086**
- **J. HARDEN ET AL: "Converse flexoelectric effect in a bent-core nematic liquid crystal", PHYSICAL REVIEW E (STATISTICAL, NONLINEAR, AND SOFT MATTER PHYSICS), vol. 78, no. 3, 1 September 2008 (2008-09-01), XP055325966, US ISSN: 1539-3755, DOI: 10.1103/PhysRevE.78.031702**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 365 411 B1

## Description

### Technical Field

The invention relates to a window comprising a device for the regulation of light transmission, more preferably a privacy window, comprising a liquid crystalline medium exhibiting a converse flexoelectric effect, and which is sandwiched between two substrates, wherein at least one substrate is provided with an electrode structure.

Moreover, the invention relates to a method of production of the window comprising the device according to the present invention.

### State of the Art

Liquid-crystal displays are known from prior art. The most common display devices are based on the Schadt-Helfrich effect and contain a liquid-crystal medium having a twisted nematic structure, such as, for example, TN ("twisted nematic") cells having twist angles of typically 90° and STN ("super-twisted nematic") cells having twist angles of typically from 180 to 270°. The twisted structure in these displays is usually achieved by addition of one or more chiral dopants to a nematic or smectic liquid-crystal medium.

Also known are liquid-crystal displays, which contain liquid-crystal (LC) media having a chiral nematic or cholesteric structure. These media have significantly higher twist compared with the media from TN and STN cells.

Cholesteric liquid crystals exhibit selective reflection of circular-polarised light, with the direction of rotation of the light vector corresponding to the direction of rotation of the cholesteric helix. The reflection wavelength $\lambda$ is given by the pitch p of the cholesteric helix and the mean birefringence n of the cholesteric liquid crystal in accordance with equation (1):

$$\lambda = n \cdot p \qquad (1)$$

Examples of customary cholesteric liquid crystal (CLC) displays are the so-called SSCT ("surface stabilised cholesteric texture") and PSCT ("polymer stabilised cholesteric texture") displays. SSCT and PSCT displays usually contain a CLC medium which has, for example in the initial state, a planar structure which reflects light having a certain wavelength, and can be switched into a focally conical, light-scattering structure by application of an electrical alternating-voltage pulse, or vice versa. On application of a stronger voltage pulse, the CLC medium is converted into a homeotropic, transparent state, from where it relaxes into the planar state after rapid switching-off of the voltage or into the focally conical state after slow switch ing-off.

The planar alignment of the CLC medium in the initial state, i.e. before application of a voltage, is achieved in SSCT displays by, for example, surface treatment of the cell walls. In PSCT displays, the CLC medium additionally comprises a phase-separated polymer or polymer network, which stabilises the structure of the CLC medium in the respective addressed state.

SSCT and PSCT displays generally do not require backlighting. In the planar state, the CLC medium in a pixel exhibits selective light reflection of a certain wavelength in accordance with the above equation (1), meaning that the pixel appears in the corresponding reflection colour, for example in front of a black background. The reflection colour disappears on changing into the focally conical, scattering or homeotropic, transparent state.

SSCT and PSCT displays are bistable, i.e. the respective state is retained after the electric field has been switched off and is only converted back into the initial state by application of a fresh field. In order to produce a pixel, a short voltage pulse is therefore sufficient. In contrast, for example, to electro-optical TN or STN displays, in which the LC medium in an addressed pixel immediately returns to the initial state after the electric field has been switched off, meaning that maintenance of the addressing voltage is necessary for durable production of a pixel.

For the above-mentioned reasons, CLC displays have significantly lower power consumption compared with TN or STN displays. In addition, they exhibit only slight viewing-angle dependence or none at all, in the scattering state. In addition, they do not require active-matrix addressing as in the case of TN displays, but instead can be operated in the simpler multiplex or passive-matrix mode.

WO 92/19695 and US 5,384,067 describe, for example, a PSCT display containing a CLC medium having positive dielectric anisotropy and up to 10% by weight of a phase-separated polymer network which is dispersed in the liquid-crystal material. US 5,453,863 describe, for example, an SSCT display containing a polymer-free CLC medium having positive dielectric anisotropy.

Devices utilizing the flexoelectric effect or corresponding mixtures are disclosed for example in PRAMODA KUMAR ET AL: "Converse Flexoelectric Effect in Bent-Core Nematic Liquid Crystals", JOURNAL OF PHYSICAL CHEMISTRY PART B: CONDENSED MATTER, MATERIALS, SURFACES, INTERFACES & BIOPHYSICAL, vol. 1 13, no.

27, 9 July 2009 (2009-07-09), pages 91 68-9174, XP055325961, ISSN: 1520-6106, DOI: 10.1021/jp903241z; VAN LE K ET AL: "Flexoelectric effect in a bent-core mesogen' , LIQUID CRYSTALS, TAYLOR & FRANCIS, vol. 36, no. 10-1 1 , I October 2009 (2009-10-01), pages 1 1 1 9-1 1 24, XPOOI 55021 3, ISSN: 0267-8292, DOI: 10.1080/02678290902854086; J. HARDEN ET AL: "Converse flexoelectric effect in a bent-core nematic liquid crystal", PHYSICAL REVIEW E (STATISTICAL, NONLINEAR, AND SOFT MATTER PHYSICS), vol. 78, no. 3, I September 2008 (2008-09-01), XP055325966, US ISSN: 1539-3755, DOI: 10.1 103/ PhysRevE.78.031 702; WO 2015/090511 A1; WO 2015/096879 A1; WO 2014/005670 A1 or WO 2014/183825 A1.

There is a great demand for polariser-free reflective displays with high contrast that are transparent in the off state. This is of particular interest for applications that need to be transparent or black when they are separated from a power supply. Possible applications are transparent communication boards, signage application (football arena) but also any other reflective display application, such as background image shielding in transparent OLED displays, which are transparent in the off state. Other applications that need to be transparent or black when they are separated from a power supply are, for example, privacy windows in after an accident, security windows during a power shortage, etc.

Thus, one aim of the invention is to provide an alternative or preferably improved devices, preferably a light shutter or a switchable window, more preferably a privacy window, which is transparent in the off-state and which does not have the drawbacks of the prior art and preferably have the advantages mentioned above and below.

Surprisingly, the inventors have found out that the so-called converse flexoelectric effect can be effectively utilized in a window for the regulation of light transmission. Preferably, the window comprising the device is characterized by exhibiting one boundary state being a transparent state and another boundary state being a translucent state. Thus, the invention is related to a window comprising the device containing a flexoelectric liquid crystalline medium, which is sandwiched between two substrates, wherein at least one of the substrates is provided with an electrode structure. A liquid crystalline medium which comprises one or more bimesogenic compounds are found to be particularly useful.

Other aims of the present invention are immediately evident to the person skilled in the art from the following detailed description.

## Terms and Definitions

The term "liquid crystal", "mesomorphic compound", or "mesogenic compound" (also shortly referred to as "mesogen") means a compound that under suitable conditions of temperature, pressure and concentration can exist as a mesophase (nematic, smectic, etc.) or in particular as a LC phase. Non-amphiphilic mesogenic compounds comprise for example one or more calamitic, banana-shaped or discotic mesogenic groups.

The term "mesogenic group" means in this context, a group with the ability to induce liquid crystal (LC) phase behaviour. The compounds comprising mesogenic groups do not necessarily have to exhibit an LC phase themselves. It is also possible that they show LC phase behaviour only in mixtures with other compounds. For the sake of simplicity, the term "liquid crystal" is used hereinafter for both mesogenic and LC materials.

Throughout the application, the term "aryl and heteroaryl groups" encompass groups, which can be monocyclic or polycyclic, i.e. they can have one ring (such as, for example, phenyl) or two or more rings, which may also be fused (such as, for example, naphthyl) or covalently linked (such as, for example, biphenyl), or contain a combination of fused and linked rings. Heteroaryl groups contain one or more heteroatoms, preferably selected from O, N, S and Se. Particular preference is given to mono-, bi- or tricyclic aryl groups having 6 to 25 C atoms and mono-, bi- or tricyclic heteroaryl groups having 2 to 25 C atoms, which optionally contain fused rings, and which are optionally substituted. Preference is furthermore given to 5-, 6- or 7-membered aryl and heteroaryl groups, in which, in addition, one or more CH groups may be replaced by N, S or O in such a way that O atoms and/or S atoms are not linked directly to one another. Preferred aryl groups are, for example, phenyl, biphenyl, terphenyl, [1,1':3',1"]terphenyl-2'-yl, naphthyl, anthracene, binaphthyl, phenanthrene, pyrene, dihydropyrene, chrysene, perylene, tetracene, pentacene, benzopyrene, fluorene, indene, indenofluorene, spirobifluorene, more preferably 1,4-phenylene, 4,4'-biphenylene, 1, 4-tephenylene.

Preferred heteroaryl groups are, for example, 5-membered rings, such as pyrrole, pyrazole, imidazole, 1,2,3-triazole, 1,2,4-triazole, tetrazole, furan, thiophene, selenophene, oxazole, isoxazole, 1,2-thiazole, 1,3-thiazole, 1,2,3-oxadiazole, 1,2,4-oxadiazole, 1,2,5-oxadiazole, 1,3,4-oxadiazole, 1,2,3-thiadiazole, 1,2,4-thiadiazole, 1,2,5-thiadiazole, 1,3,4-thiadiazole, 6-membered rings, such as pyridine, pyridazine, pyrimidine, pyrazine, 1,3,5-triazine, 1,2,4-triazine, 1,2,3-triazine, 1,2,4,5-tetrazine, 1,2,3,4-tetrazine, 1,2,3,5-tetrazine, or condensed groups, such as indole, isoindole, indolizine, indazole, benzimidazole, benzotriazole, purine, naphthimidazole, phenanthrimidazole, pyridimidazole, pyrazinimidazole, quinoxalinimidazole, benzoxazole, naphthoxazole, anthroxazole, phenanthroxazole, isoxazole, benzothiazole, benzofuran, isobenzofuran, dibenzofuran, quinoline, isoquinoline, pteridine, benzo-5,6-quinoline, benzo-6,7-quinoline, benzo-7,8-quinoline, benzoisoquinoline, acridine, phenothiazine, phenoxazine, benzopyridazine, benzopyrimidine, quinoxaline, phenazine, naphthyridine, azacarbazole, benzocarboline, phenanthridine, phenanthroline, thieno[2,3b]thiophene, thieno[3,2b]thiophene, dithienothiophene, isobenzothiophene, dibenzothiophene, benzothiadiazothiophene, or combinations of these groups. The heteroaryl groups may also be substituted by alkyl, alkoxy, thioalkyl,

fluorine, fluoroalkyl or further aryl or heteroaryl groups.

In the context of this application, the term "(non-aromatic) alicyclic and heterocyclic groups" encompass both saturated rings, i.e. those that contain exclusively single bonds, and partially unsaturated rings, i.e. those that may also contain multiple bonds. Heterocyclic rings contain one or more heteroatoms, preferably selected from Si, O, N, S and Se. The (non-aromatic) alicyclic and heterocyclic groups can be monocyclic, i.e. contain only one ring (such as, for example, cyclohexane), or polycyclic, i.e. contain a plurality of rings (such as, for example, decahydronaphthalene or bicyclooctane). Particular preference is given to saturated groups. Preference is furthermore given to mono-, bi- or tricyclic groups having 3 to 25 C atoms, which optionally contain fused rings and that are optionally substituted. Preference is furthermore given to 5-, 6-, 7- or 8-membered carbocyclic groups in which, in addition, one or more C atoms may be replaced by Si and/or one or more CH groups may be replaced by N and/or one or more non-adjacent $CH_2$ groups may be replaced by -O- and/or -S-. Preferred alicyclic and heterocyclic groups are, for example, 5-membered groups, such as cyclopentane, tetrahydrofuran, tetrahydrothiofuran, pyrrolidine, 6-membered groups, such as cyclohexane, silinane, cyclohexene, tetrahydropyran, tetrahydrothiopyran, 1,3-dioxane, 1,3-dithiane, piperidine, 7-membered groups, such as cycloheptane, and fused groups, such as tetrahydronaphthalene, decahydronaphthalene, indane, bicyclo[1.1.1]-pentane-1,3-diyl, bicyclo[2.2.2]octane-1,4-diyl, spiro[3.3]heptane-2,6-diyl, octahydro-4,7-methanoindane-2,5-diyl, more preferably 1,4-cyclohexylene 4,4'- bicyclohexylene, 3,17-hexadecahydro-cyclopenta[a]phenanthrene, optionally being substituted by one or more identical or different groups L. Especially preferred aryl-, heteroaryl-, alicyclic- and heterocyclic groups are 1,4-phenylene, 4,4'-biphenylene, 1, 4-terphenylene, 1,4-cyclohexylene, 4,4'- bicyclohexylene, and 3,17-hexadecahydro-cyclopenta[a]-phenanthrene, optionally being substituted by one or more identical or different groups L.

Preferred substituents (L) of the above-mentioned aryl-, heteroaryl-, alicyclic- and heterocyclic groups are, for example, solubility-promoting groups, such as alkyl or alkoxy and electron-withdrawing groups, such as fluorine, nitro or nitrile. Particularly preferred substituents are, for example, F, Cl, CN, $NO_2$, $CH_3$, $C_2H_5$, $OCH_3$, $OC_2H_5$, $COCH_3$, $COC_2H_5$, $COOCH_3$, $COOC_2H_5$, $CF_3$, $OCF_3$, $OCHF_2$ or $OC_2F_5$.

Above and below "halogen" denotes F, Cl, Br or I.

Above and below, the terms "alkyl", "aryl", "heteroaryl", etc., also encompass polyvalent groups, for example alkylene, arylene, heteroarylene, etc. The term "aryl" denotes an aromatic carbon group or a group derived there from. The term "heteroaryl" denotes "aryl" in accordance with the above definition containing one or more heteroatoms.

Preferred alkyl groups are, for example, methyl, ethyl, n-propyl, isopropyl, n-butyl, isobutyl, s-butyl, t-butyl, 2-methylbutyl, n-pentyl, s-pentyl, cyclopentyl, n-hexyl, cyclohexyl, 2-ethylhexyl, n-heptyl, cycloheptyl, n-octyl, cyclooctyl, n-nonyl, n-decyl, n-undecyl, n-dodecyl, dodecanyl, trifluoromethyl, perfluoro-n-butyl, 2,2,2-trifluoroethyl, perfluorooctyl, perfluorohexyl, etc.

Preferred alkoxy groups are, for example, methoxy, ethoxy, 2-methoxy-ethoxy, n-propoxy, i-propoxy, n-butoxy, i-butoxy, s-butoxy, t-butoxy, 2-methylbutoxy, n-pentoxy, n-hexoxy, n-heptoxy, n-octoxy, n-nonoxy, n-decoxy, n-undecoxy, n-dodecoxy.

Preferred alkenyl groups are, for example, ethenyl, propenyl, butenyl, pentenyl, cyclopentenyl, hexenyl, cyclohexenyl, heptenyl, cycloheptenyl, octenyl, cyclooctenyl.

Preferred alkynyl groups are, for example, ethynyl, propynyl, butynyl, pentynyl, hexynyl, octynyl.

Preferred amino groups are, for example, dimethylamino, methylamino, methylphenylamino, phenylamino.

The term "chiral" in general is used to describe an object that is non-superimposable on its mirror image.

"Achiral" (non- chiral) objects are objects that are identical to their mirror image.

The terms "chiral nematic" and "cholesteric" are used synonymously in this application, unless explicitly stated otherwise.

The term "bimesogenic compound" relates to compounds comprising two mesogenic groups in the molecule. Just like normal mesogens, they can form many mesophases, depending on their structure. In particular, bimesogenic compound may induce a second nematic phase, when added to a nematic liquid crystal medium. Bimesogenic compounds are also known as "dimeric liquid crystals".

As with the common dyes, a "dichroic dye" absorbs light when exposed to the correct wavelength. The dichroic dye make use of the dichroic absorption: light with polarization along the absorption transition dipole is absorbed while light with polarization perpendicular to the dipole is not absorbed.

The term "alignment" or "orientation" relates to alignment (orientation ordering) of anisotropic units of material such as small molecules or fragments of big molecules in a common direction named "alignment direction". In an aligned layer of liquid-crystalline material, the liquid-crystalline director coincides with the alignment direction so that the alignment direction corresponds to the direction of the anisotropy axis of the material.

The term "planar orientation/alignment", for example in a layer of an liquid-crystalline material, means that the long molecular axes (in case of calamitic compounds) or the short molecular axes (in case of discotic compounds) of a proportion of the liquid-crystalline molecules are oriented substantially parallel (about 180°) to the plane of the layer.

The term "homeotropic orientation/alignment", for example in a layer of a liquid-crystalline material, means that the long molecular axes (in case of calamitic compounds) or the short molecular axes (in case of discotic compounds)

of a proportion of the liquid-crystalline molecules are oriented at an angle θ ("tilt angle") between about 80° to 90° relative to the plane of the layer.

The wavelength of light generally referred to in this application is 550 nm, unless explicitly specified otherwise.

The birefringence Δn herein is defined in equation (2)

$$\Delta n = n_e - n_o \qquad (2)$$

wherein $n_e$ is the extraordinary refractive index and $n_o$ is the ordinary refractive index, and the average refractive index $n_{av.}$ is given by the following equation (3).

$$n_{av.} = [(2\, n_o^2 + n_e^2)/3]^{1/2} \qquad (3)$$

The extraordinary refractive index $n_e$ and the ordinary refractive index $n_o$ can be measured using an Abbe refractometer. Δn can then be calculated from equation (2).

In the present application the term "dielectrically positive" is used for compounds or components with $\Delta\varepsilon > 3.0$, "dielectrically neutral" with $-1.5 \leq \Delta\varepsilon \leq 3.0$ and "dielectrically negative" with $\Delta\varepsilon < -1.5$. Δε is determined at a frequency of 1 kHz and at 20 °C. The dielectric anisotropy of the respective compound is determined from the results of a solution of 10 % of the respective individual compound in a nematic host mixture. In case the solubility of the respective compound in the host medium is less than 10 % its concentration is reduced by a factor of 2 until the resultant medium is stable enough at least to allow the determination of its properties. Preferably, the concentration is kept at least at 5 %, however, in order to keep the significance of the results a high as possible. The capacitance of the test mixtures are determined both in a cell with homeotropic and with homogeneous alignment. The cell gap of both types of cells is approximately 20 μm. The voltage applied is a rectangular wave with a frequency of 1 kHz and a root mean square value typically of 0.5 V to 1.0 V, however, it is always selected to be below the capacitive threshold of the respective test mixture.

Δε is defined as $(\varepsilon\| - \varepsilon_\perp)$, whereas $\varepsilon_{av.}$ is $(\varepsilon\| + 2\,\varepsilon\perp) / 3$.

The dielectric permittivity of the compounds is determined from the change of the respective values of a host medium upon addition of the compounds of interest. The values are extrapolated to a concentration of the compounds of interest of 100 %. The host mixture is disclosed in H.J. Coles et al., J. Appl. Phys. 2006, 99, 034104 and has the composition given in the table 1.

Table 1: Host mixture composition

| Compound | Concentration |
|---|---|
| F-PGI-ZI-9-ZGP-F | 25 % |
| F-PGI-ZI-11-ZGP-F | 25 % |
| FPGI-O-5-O-PP-N | 9.5 % |
| FPGI-O-7-O-PP-N | 39 % |
| CD-1 | 1.5 % |

For the purposes of the present application, the term boundary state is taken to mean a state in which the transmission reaches a maximum or minimum value and changes no further or virtually no further if no electrical field is applied.

The device for the regulation of light transmission according to the present invention preferably has two boundary states, one, a boundary state A with a corresponding transmission $T_A$ when no electrical field is applied the so-called "off' state or transparent state, and the other, a boundary state B with a corresponding transmission $T_B$ when an electrical field is applied the so-called "on" state or light scattering state, whereby:

$T_A > T_B$

For the purposes of the present application, the term light transmission is taken to mean the passage of electromagnetic radiation in the visible (VIS), near infrared (near-IR, NIR) and UV-A region through the light modulation element and encompasses explicitly also translucent states. The term light in the present application is correspondingly likewise taken to mean electromagnetic radiation in the visible, near infrared and UV-A region of the spectrum. In accordance with physical definitions usually used, UV-A light, visible light and near infrared light together are taken to mean radiation having a wavelength of 320 to 3000 nm.

Flexoelectricity is the generation of a spontaneous polarization in a liquid crystal due to a deformation of the director, or conversely, the deformation of the director due to an applied electric field, which is also called flexoelectric switching.

Typically, the flexoelectric effect arises from molecules with a shape asymmetry. The first cases to be considered were wedge- and banana-shaped molecules. Wedge-shaped molecules with longitudinal dipoles show spontaneous polarization when splayed. Likewise, banana shaped molecules with transverse dipoles exhibit spontaneous polarization under bend deformation.

In the above cases, the polarization couples to a splay and/or bend deformation. It can be seen from symmetry arguments that the twist deformation cannot give rise to a polarization. Thus, a phenomenological formula for the flexoelectric polarization ($P_f$) can be written as

$$P_f = e_1 n(\mathrm{div}\ n) + e_3(\mathrm{curl}\ n) \times n$$

where $e_1$ and $e_3$ are the splay, bend flexoelectric coefficients, and n (div n), and (curl n) x n are the splay and bend vectors respectively.

For example, when a DC field is applied transversely through the homeotropic cell, a coupling between the induced flexoelectric polarisation ($P_f$) and an external electric field (E) is observed, which leads to the bending deformation of the director, the so-called converse flexoelectric effect.

The relation of the physical parameters involved in this effect can be expressed as

$$\delta n = \frac{e_3^2}{K_{33}^2} E^2 n_o \left(1 - \frac{n_o^2}{n_e^2}\right) \frac{d^3}{24},$$

where $\delta$n is the induced birefringence, $K_{33}$ the bend elastic constant, E the strength of the applied field, d the thickness of the liquid-crystalline medium layer, and $n_o$, $n_e$ are the ordinary and extraordinary refractive indices, respectively.

All temperatures, such as, for example, the melting point T(C,N) or T(C,S), the transition from the smectic (S) to the nematic (N) phase T(S,N) and the clearing point T(N,I) of the liquid crystals, are quoted in degrees Celsius. All temperature differences are quoted in differential degrees.

The term "clearing point" means the temperature at which the transition between the mesophase with the highest temperature range and the isotropic phase occurs.

Throughout this application and unless explicitly stated otherwise, all concentrations are given in weight percent and relate to the respective complete medium. All physical properties have been and are determined according to "Merck Liquid Crystals, Physical Properties of Liquid Crystals", Status Nov. 1997, Merck KGaA, Germany and are given for a temperature of 20 °C, unless explicitly stated otherwise.

In case of doubt the definitions as given in C. Tschierske, G. Pelzl and S. Diele, Angew. Chem. 2004, 116, 6340-6368 shall apply.

The ranges of the parameters that are indicated in this application all include the limit values, unless expressly stated otherwise.

Throughout this application, the substituents on the saturated 1,4-substituted ring systems are, unless indicated otherwise, in the trans configuration. The other formulae stand for both configurations and preferably for the trans-configuration

The different upper and lower limit values indicated for various ranges of properties in combination with one another give rise to additional preferred ranges.

Throughout the description and claims of this specification, the words "comprise" and "contain" and variations of the words, for example "comprising" and "comprises", mean "including but not limited to", and are not intended to (and do not) exclude other components. On the other hand, the word "comprise" also encompasses the term "consisting of" but is not limited to it.

## Detailed Description

Suitable liquid crystalline media for the window comprising the device for the regulation of light transmission according to the present invention typically comprise at least one bimesogenic compound. Preferably, the liquid crystalline media for the window comprising the device for the regulation of light transmission according to the present invention substantially consists of one or more bimesogenic compounds.

Suitable bimesogenic compounds, exhibit typically relatively high values of the elastic constant $K_{11}$, low values of the bend elastic constant $K_{33}$ and the flexoelectric coefficient.

In view of the bimesogenic compounds, the Coles group published a paper (Coles *et al.,* 2012 *(Physical Review E* **2012,** 85, 012701)) on the structure-property relationship for dimeric liquid crystals.

Further bimesogenic compounds are known in general from prior art (cf. also Hori, K., Limuro, M., Nakao, A., Toriumi, H., J. Mol. Struc. 2004, 699, 23-29 or GB 2 356 629).

Symmetrical dimeric compounds showing liquid crystalline behaviour are further disclosed in Joo-Hoon Park et al. "Liquid Crystalline Properties of Dimers Having o-, m- and p- Positional Molecular structures", Bill. Korean Chem. Soc., 2012, Vol. 33, No. 5, pp. 1647-1652.

EP 0 971 016 reports on mesogenic estradiols, which, as such, have a high flexoelectric coefficient.

Preferably, the liquid-crystalline medium utilized in a window for the regulation of light transmission in accordance with the present invention comprises one or more bimesogenic compounds which are preferably selected from the group of compounds of formulae A-I to A-III,

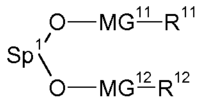

A-I

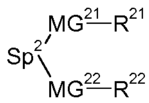

A-II

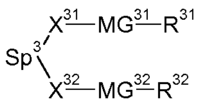

A-III

and wherein

| | |
|---|---|
| $R^{11}$ and $R^{12}$, $R^{21}$ and $R^{22,}$ and $R^{31}$ and $R^{32}$ | are each independently H, F, Cl, CN, NCS or a straight-chain or branched alkyl group with 1 to 25 C atoms which may be unsubstituted, mono- or polysubstituted by halogen or CN, it being also possible for one or more non-adjacent $CH_2$ groups to be replaced, in each occurrence independently from one another, by -O-, -S-, -NH-, -N($CH_3$)-, -CO-, -COO-, -OCO-, -O-CO-O-, -S-CO-, -CO-S-, -CH=CH-,-CH=CF-, -CF=CF- or -C≡C- in such a manner that oxygen atoms are not linked directly to one another, |
| $MG^{11}$ and $MG^{12}$, $MG^{21}$ and $MG^{22}$, and $MG^{31}$ and $MG^{32}$ | are each independently a mesogenic group, |
| $Sp^1$, $Sp^2$ and $Sp^3$ | are each independently a spacer group comprising 5 to 40 C atoms, wherein one or more non-adjacent $CH_2$ groups, with the exception of the $CH_2$ groups of $Sp^1$ linked to O-$MG^{11}$ and/or O-$MG^{12}$, of $Sp^2$ linked to $MG^{21}$ and/or $MG^{22}$ and of $Sp^3$ linked to $X^{31}$ and $X^{32}$, may also be replaced by -O-, -S-, -NH-, -N($CH_3$)-, -CO-, -O-CO-, -S-CO-, -O-COO-, -CO-S-, -CO-O-, -CH(halogen)-, -CH(CN)-, -CH=CH- or -C≡C-, however in such a way that no two O-atoms are adjacent to one another, no two -CH=CH- groups are adjacent to each other, and no two groups selected from -O-CO-, -S-CO-, -O-COO-, -CO-S-, -CO-O- and -CH=CH- are adjacent to each other and |
| $X^{31}$ and $X^{32}$ | are independently from one another a linking group selected from -CO-O-, -O-CO-, -CH=CH-, -C≡C- or-S-, and, alternatively, one of them may also be either -O- or a single bond, and, again alternatively, one of them may be -O- and the |

other one a single bond.

Preferably used are compounds of formulae A-I to A-III wherein

$Sp^1$, $Sp^2$ and $Sp^3$ are each independently $-(CH_2)n-$ with

n an integer from 1 to 15, most preferably an uneven integer, wherein one or more $-CH_2-$ groups may be replaced by -CO-.

Especially preferably used are compounds of formula A-III wherein

$-X^{31}-Sp^3-X^{32}-$ is $-Sp^3-O-$, $-Sp^3-CO-O-$, $-Sp^3-O-CO-$, $-O-Sp^3-$, $-O-Sp^3-CO-O-$, $-O-Sp^3-O-CO-$, $-O-CO-Sp^3-O-$, $-O-CO-Sp^3-O-CO-$, $-CO-O-Sp^3-O-$ or $-CO-O-Sp^3-CO-O-$, however under the condition that in $-X^{31}-Sp^3-X^{32}-$ no two O-atoms are adjacent to one another, no two -CH=CH- groups are adjacent to each other and no two groups selected from -O-CO-, -S-CO-, -O-COO-, -CO-S-, -CO-O- and -CH=CH- are adjacent to each other.

Preferably used are compounds of formula A-I in which

$MG^{11}$ and $MG^{12}$ are independently from one another $-A^{11}-(Z^1-A^{12})_m-$

wherein

$Z^1$ is -COO-, -OCO-, -O-CO-O-, $-OCH_2-$, $-CH_2O-$, $-CH_2CH_2-$, $-(CH_2)_4-$, $-CF_2CF_2-$, -CH=CH-,-CF=CF-, -CH=CH-COO-, -OCO-CH=CH-, -C≡C- or a single bond,

$A^{11}$ and $A^{12}$ are each independently in each occurrence 1,4-phenylene, wherein in addition one or more CH groups may be replaced by N, trans-1,4-cyclo-hexylene in which, in addition, one or two non-adjacent $CH_2$ groups may be replaced by O and/or S, 1,4-cyclohexenylene, 1,4-bicyclo-(2,2,2)-octylene, piperidine-1,4-diyl, naphthalene-2,6-diyl, decahydro-naphthalene-2,6-diyl, 1,2,3,4-tetrahydro-naphthalene-2,6-diyl, cyclobutane-1,3-diyl, spiro[3.3]heptane-2,6-diyl or dispiro[3.1.3.1] decane-2,8-diyl, it being possible for all these groups to be unsubstituted, mono-, di-, tri- or tetrasubstituted with F, Cl, CN or alkyl, alkoxy, alkylcarbonyl or alkoxycarbonyl groups with 1 to 7 C atoms, wherein one or more H atoms may be substituted by F or Cl, and

m is 0, 1, 2 or 3.

Preferably used are compounds of formula A-II in which

$MG^{21}$ and $MG^{22}$ are independently from one another $-A^{21}-(Z^2-A^{22})_m-$

wherein

$Z^2$ is -COO-, -OCO-, -O-CO-O-, $-OCH_2-$, $-CH_2O-$, $-CH_2CH_2-$, $-(CH_2)_4-$, $-CF_2CF_2-$, -CH=CH-,-CF=CF-, -CH=CH-COO-, -OCO-CH=CH-, -C≡C- or a single bond,

$A^{21}$ and $A^{22}$ are each independently in each occurrence 1,4-phenylene, wherein in addition one or more CH groups may be replaced by N, trans-1,4-cyclo-hexylene in which, in addition, one or two non-adjacent $CH_2$ groups may be replaced by O and/or S, 1,4-cyclohexenylene, 1,4-bicyclo-(2,2,2)-octylene, piperidine-1,4-diyl, naphthalene-2,6-diyl, decahydro-naphthalene-2,6-diyl, 1,2,3,4-tetrahydro-naphthalene-2,6-diyl, cyclobutane-1,3-diyl, spiro[3.3]heptane-2,6-diyl or dispiro[3.1.3.1] decane-2,8-diyl, it being possible for all these groups to be unsubstituted, mono-, di-, tri- or tetrasubstituted with F, Cl, CN or alkyl, alkoxy, alkylcarbonyl or alkoxycarbonyl groups with 1 to 7 C atoms, wherein one or more H atoms may be substituted by F or Cl, and

m is 0, 1, 2 or 3.

Most preferably used are compounds of formula A-III in which

$MG^{31}$ and $MG^{32}$ are independently from one another $-A^{31}-(Z^3-A^{32})_m-$

wherein

$Z^3$ is -COO-, -OCO-, -O-CO-O-, $-OCH_2-$, $-CH_2O-$, $-CH_2CH_2-$, $-(CH_2)_4-$, $-CF_2CF_2-$, -CH=CH-,-CF=CF-, -CH=CH-COO-, -OCO-CH=CH-, -C≡C- or a single bond,

$A^{31}$ and $A^{32}$ are each independently in each occurrence 1,4-phenylene, wherein in addition one or more CH groups may be replaced by N, trans-1,4-cyclo-hexylene in which, in addition, one or two non-adjacent $CH_2$ groups may be replaced by O and/or S, 1,4-cyclohexenylene, 1,4-bicyclo-(2,2,2)-octylene, piperidine-1,4-diyl, naphthalene-2,6-diyl, decahydro-naphthalene-2,6-diyl, 1,2,3,4-tetrahydro-naphthalene-2,6-diyl, cyclobutane-1,3-diyl, spiro[3.3]heptane-2,6-diyl or dispiro[3.1.3.1] decane-2,8-diyl, it being possible for all these groups to be unsubstituted, mono-, di-, tri- or tetrasubstituted with F, Cl, CN or alkyl, alkoxy, alkylcarbonyl or alkoxycarbonyl groups with 1 to 7 C atoms, wherein one or more H atoms may be substituted by F or Cl, and

m is 0, 1,2 or 3.

Preferably, the compounds of formula A-III are asymmetric compounds, preferably having different mesogenic groups $MG^{31}$ and $MG^{32}$

Generally preferred are compounds of formulae A-I to A-III in which the dipoles of the ester groups present in the mesogenic groups are all oriented in the same direction, i.e. all -CO-O- or all -O-CO-.

Especially preferred are compounds of formulae A-I and/or A-II and/or A-III wherein the respective pairs of mesogenic groups ($MG^{11}$ and $MG^{12}$) and ($MG^{21}$ and $MG^{22}$) and ($MG^{31}$ and $MG^{32}$) at each occurrence independently from each other comprise one, two or three six-atomic rings, preferably two or three six-atomic rings.

A smaller group of preferred mesogenic groups is listed below. For reasons of simplicity, Phe in these groups is 1,4-phenylene, PheL is a 1,4-phenylene group which is substituted by 1 to 4 groups L, with L being preferably F, Cl, CN, OH, $NO_2$ or an optionally fluorinated alkyl, alkoxy or alkanoyl group with 1 to 7 C atoms, very preferably F, Cl, CN, OH, $NO_2$, $CH_3$, $C_2H_5$, $OCH_3$, $OC_2H_5$, $COCH_3$, $COC_2H_5$, $COOCH_3$, COOC2H5, $CF_3$, $OCF_3$, $OCHF_2$, $OC_2F_5$, in particular F, Cl, CN, $CH_3$, $C_2H_5$, $OCH_3$, $COCH_3$ and $OCF_3$, most preferably F, Cl, $CH_3$, $OCH_3$ and COCHs and Cyc is 1,4-cyclohexylene. This list comprises the sub-formulae shown below as well as their mirror images

| | |
|---|---|
| -Phe-Z-Phe- | II-1 |
| -Phe-Z-Cyc- | II-2 |
| -Cyc-Z-Cyc- | II-3 |
| -PheL-Z-Phe- | II-4 |
| -PheL-Z-Cyc- | II-5 |
| -PheL-Z-PheL- | II-6 |
| -Phe-Z-Phe-Z-Phe- | II-7 |
| -Phe-Z-Phe-Z-Cyc- | II-8 |
| -Phe-Z-Cyc-Z-Phe- | II-9 |
| -Cyc-Z-Phe-Z-Cyc- | II-10 |
| -Phe-Z-Cyc-Z-Cyc- | II-11 |
| -Cyc-Z-Cyc-Z-Cyc- | II-12 |
| -Phe-Z-Phe-Z-PheL- | II-13 |
| -Phe-Z-PheL-Z-Phe- | II-14 |
| -PheL-Z-Phe-Z-Phe- | II-15 |
| -PheL-Z-Phe-Z-PheL- | II-16 |
| -PheL-Z-PheL-Z-Phe- | II-17 |
| -PheL-Z-PheL-Z-PheL- | II-18 |
| -Phe-Z-PheL-Z-Cyc- | II-19 |
| -Phe-Z-Cyc-Z-PheL- | II-20 |
| -Cyc-Z-Phe-Z-PheL- | II-21 |
| -PheL-Z-Cyc-Z-PheL- | II-22 |
| -PheL-Z-PheL-Z-Cyc- | II-23 |

(continued)

| | |
|---|---|
| -PheL-Z-Cyc-Z-Cyc- | II-24 |
| -Cyc-Z-PheL-Z-Cyc- | II-25 |

Particularly preferred are the sub formulae 11-1, II-4, II-6, II-7, 11-13, 11-14, 11-15, 11-16, 11-17 and 11-18.

In these preferred groups, Z in each case independently has one of the meanings of $Z^1$ as given above for $MG^{21}$ and $MG^{22}$. Preferably Z is -COO-, -OCO-, $-CH_2CH_2-$, -C≡C- or a single bond, especially preferred is a single bond.

Very preferably the mesogenic groups $MG^{11}$ and $MG^{12}$, $MG^{21}$ and $MG^{22}$ and $MG^{31}$ and $MG^{32}$ are each and independently selected from the following formulae and their mirror images

Very preferably, at least one of the respective pairs of mesogenic groups $MG^{11}$ and $MG^{12}$, $MG^{21}$ and $MG^{22}$ and $MG^{31}$ and $MG^{32}$ is, and preferably, both of them are each and independently, selected from the following formulae IIa to IIn (the two reference Nos. "II i" and "III" being deliberately omitted to avoid any confusion) and their mirror images

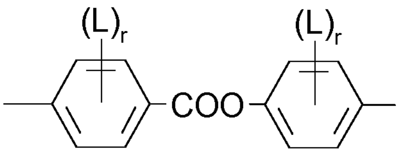

IIa

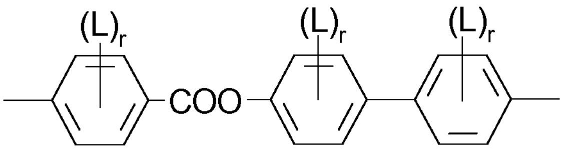

IIb

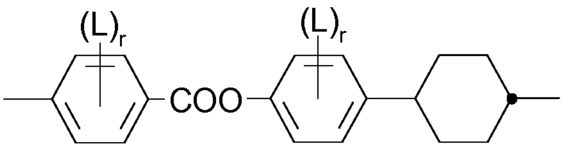

IIc

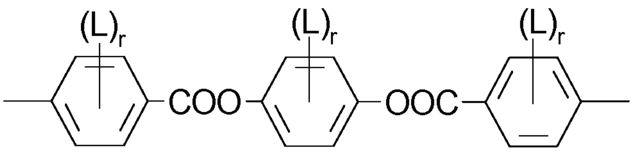

IId

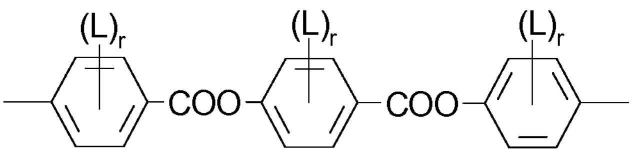

IIe

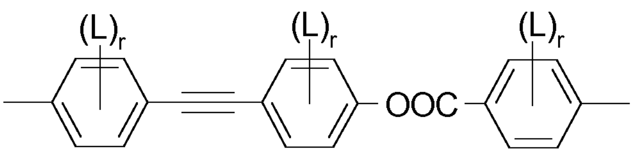

IIf

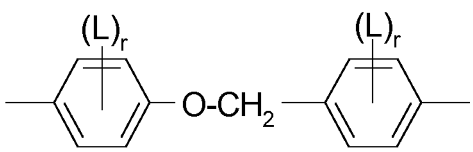

IIg

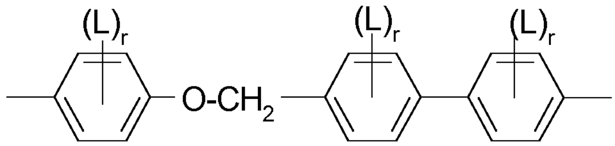 IIh

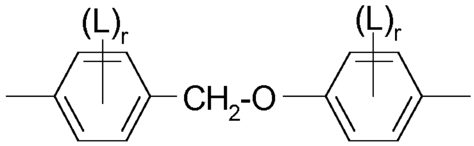 IIj

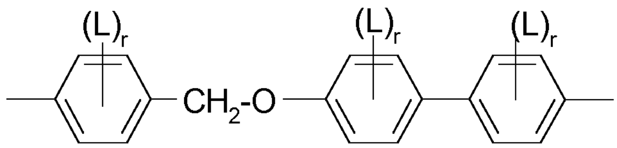 IIk

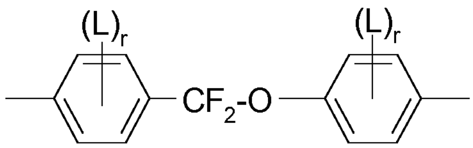 IIm

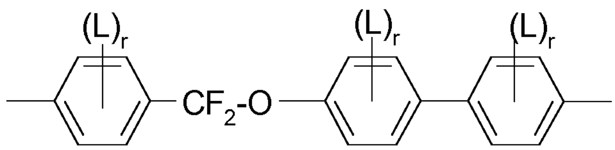 IIn

wherein

L is in each occurrence independently of each other F or Cl, preferably F and

r is in each occurrence independently of each other 0, 1, 2 or 3, preferably 0, 1 or 2.

The group

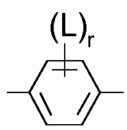

in these preferred formulae is very preferably denoting

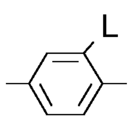 , 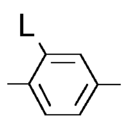 or 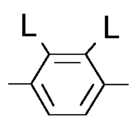 ,

furthermore

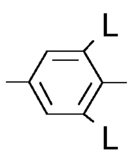 ,

Particularly preferred are the sub formulae IIa, IId, IIg, IIh, IIi, IIk and IIo, in particular the sub formulae IIa and IIg.

In case of compounds with a non-polar group, $R^{11}$, $R^{12}$, $R^{21}$, $R^{22}$, $R^{31}$, and $R^{32}$ are preferably alkyls with up to 15 C atoms or alkoxy with 2 to 15 C atoms.

If $R^{11}$ and $R^{12}$, $R^{21}$ and $R^{22}$ and $R^{31}$ and $R^{32}$ are an alkyl or alkoxy radical, i.e. where the terminal $CH_2$ group is replaced by -O-, this may be straight chain or branched. It is preferably straight-chain, has 2, 3, 4, 5, 6, 7 or 8 carbon atoms and accordingly is preferably ethyl, propyl, butyl, pentyl, hexyl, heptyl, octyl, ethoxy, propoxy, butoxy, pentoxy, hexoxy, heptoxy, or octoxy, furthermore methyl, nonyl, decyl, undecyl, dodecyl, tridecyl, tetradecyl, pentadecyl, nonoxy, decoxy, undecoxy, dodecoxy, tridecoxy or tetradecoxy, for example.

Oxaalkyl, i.e. where one $CH_2$ group is replaced by -O-, is preferably straight-chain 2-oxapropyl (=methoxymethyl), 2- (=ethoxymethyl) or 3-oxabutyl (=2-methoxyethyl), 2-, 3-, or 4-oxapentyl, 2-, 3-, 4-, or 5-oxahexyl, 2-, 3-, 4-, 5-, or 6-oxaheptyl, 2-, 3-, 4-, 5-, 6- or 7-oxaoctyl, 2-, 3-, 4-, 5-, 6-, 7- or 8-oxanonyl or 2-, 3-, 4-, 5-, 6-,7-, 8- or 9-oxadecyl, for example.

In case of a compounds with a terminal polar group, $R^{11}$ and $R^{12}$, $R^{21}$ and $R^{22}$ and $R^{31}$ and $R^{32}$ are selected from CN, $NO_2$, halogen, OCH3, OCN, SCN, $COR^x$, $COOR^x$ or a mono- oligo- or polyfluorinated alkyl or alkoxy group with 1 to 4 C atoms. $R^x$ is optionally fluorinated alkyl with 1 to 4, preferably 1 to 3 C atoms. Halogen is preferably F or Cl.

Especially preferably $R^{11}$ and $R^{12}$, $R^{21}$ and $R^{22}$ and $R^{31}$ and $R^{32}$ in formulae A-I, A-II, respectively A-III are selected of H, F, Cl, CN, $NO_2$, $OCH_3$, $COCH_3$, $COC_2H_5$, $COOCH_3$, $COOC_2H_5$, $CF_3$, $C_2F_5$, $OCF_3$, $OCHF_2$, and $OC_2F_5$, in particular of H, F, Cl, CN, $OCH_3$ and $OCF_3$, especially of H, F, CN and $OCF_3$

In addition, compounds of formulae A-I, A-II, respectively A-III containing an achiral branched group $R^{11}$ and/or $R^{21}$ and/or $R^{31}$ may occasionally be of importance, for example, due to a reduction in the tendency towards crystallization. Branched groups of this type generally do not contain more than one chain branch. Preferred achiral branched groups are isopropyl, isobutyl (=methylpropyl), isopentyl (=3-methylbutyl), isopropoxy, 2-methyl-propoxy and 3-methylbutoxy.

The spacer groups $Sp^1$, $Sp^2$ and $Sp^3$ are preferably a linear or branched alkylene group having 5 to 40 C atoms, in particular 5 to 25 C atoms, very preferably 5 to 15 C atoms, in which, in addition, one or more non-adjacent and non-terminal $CH_2$ groups may be replaced by -O-, -S-, -NH-, -N($CH_3$)-, -CO-, -O-CO-, -S-CO-, -O-COO-, -CO-S-, -CO-O-, -CH(halogen)-, -CH(CN)-, -CH=CH- or -C≡C-.

"Terminal" $CH_2$ groups are those directly bonded to the mesogenic groups. Accordingly, "non-terminal" $CH_2$ groups are not directly bonded to the mesogenic groups $R^{11}$ and $R^{12}$, $R^{21}$ and $R^{22}$ and $R^{31}$ and $R^{32}$.

Typical spacer groups are for example $-(CH_2)_o-$, $-(CH_2CH_2O)_p-CH_2CH_2-$, with o being an integer from 5 to 40, in particular from 5 to 25, very preferably from 5 to 15, and p being an integer from 1 to 8, in particular 1, 2, 3 or 4.

Preferred spacer groups are pentylene, hexylene, heptylene, octylene, nonylene, decylene, undecylene, dodecylene, octadecylene, diethyleneoxyethylene, dimethyleneoxybutylene, pentenylene, heptenylene, nonenylene and undecenylene, for example.

Especially preferred are compounds of formulae A-I, A-II and A-III wherein $Sp^1$, $Sp^2$, respectively $Sp^3$ are alkylene with 5 to 15 C atoms. Straight-chain alkylene groups are especially preferred.

Preferred are spacer groups with even numbers of a straight-chain alkylene having 6, 8, 10, 12 and 14 C atoms.

In another embodiment of the present invention are the spacer groups preferably with odd numbers of a straight-chain alkylene having 5, 7, 9, 11, 13 and 15 C atoms. Very preferred are straight-chain alkylene spacers having 5, 7, or 9 C atoms.

Especially preferred are compounds of formulae A-I, A-II and A-III wherein $Sp^1$, $Sp^2$, respectively $Sp^3$ are completely deuterated alkylene with 5 to 15 C atoms. Very preferred are deuterated straight-chain alkylene groups. Most preferred are partially deuterated straight-chain alkylene groups.

Preferred are compounds of formula A-I wherein the mesogenic groups $R^{11}$-$MG^{11}$- and $R^{12}$-$MG^1$- are different. Especially preferred are compounds of formula A-I wherein $R^{11}$-$MG^{11}$- and $R^{12-}$$MG^{12}$- in formula A-I are identical.

Preferred compounds of formula A-I are selected from the group of compounds of formulae A-I-1 to A-I-3

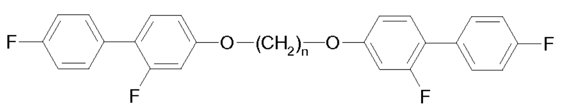

A-I-1

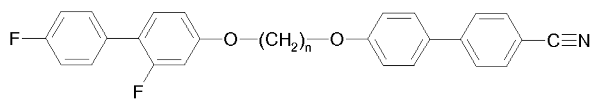

A-I-2

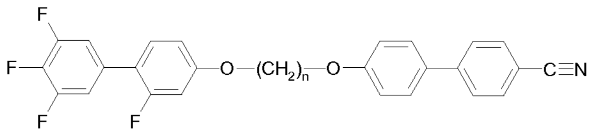

A-I-3

wherein the parameter n has the meaning given above and preferably is 3, 5, 7 or 9, more preferably 5, 7 or 9.

Preferred compounds of formula A-II are selected from the group of compounds of formulae A-II-1 to A-II-4

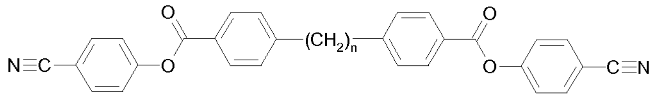

A-II-1

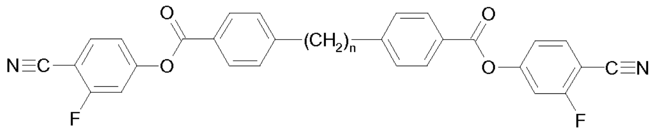

A-II-2

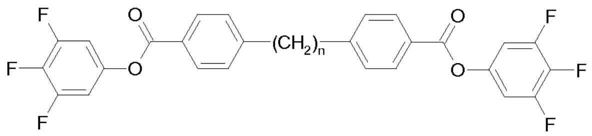

A-II-3

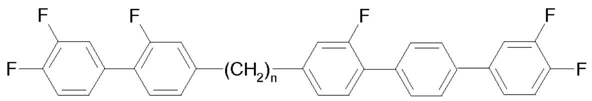

A-II-4

wherein the parameter n has the meaning given above and preferably is 3, 5, 7 or 9, more preferably 5, 7 or 9.

Preferred compounds of formula A-III are selected from the group of compounds of formulae A-III-1 to A-III-11

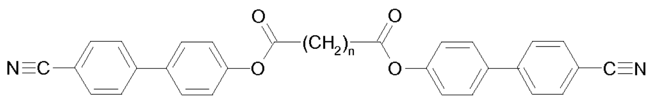

A-III-1

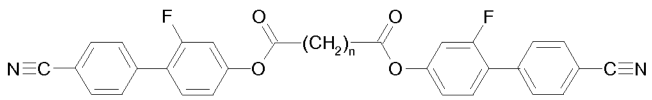

A-III-2

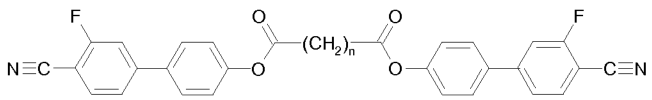

A-III-3

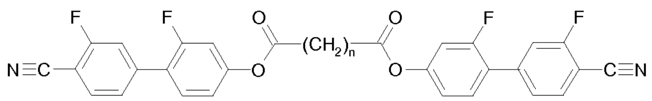

A-III-4

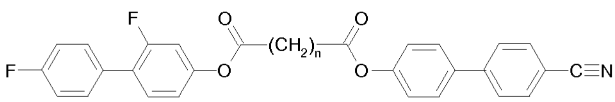

A-III-5

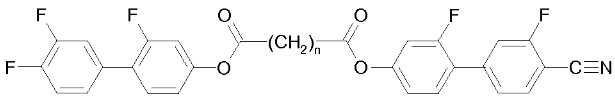

A-III-6

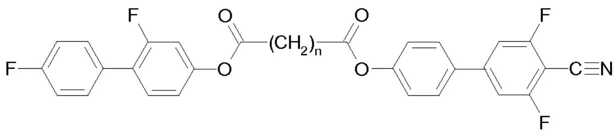

A-III-7

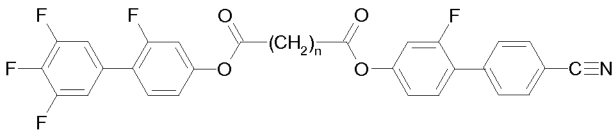

A-III-8

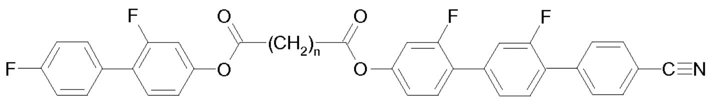

A-III-9

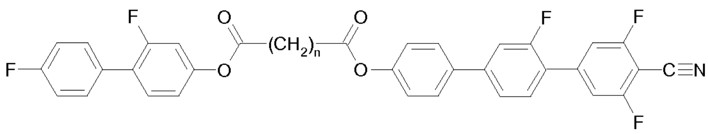

A-III-10

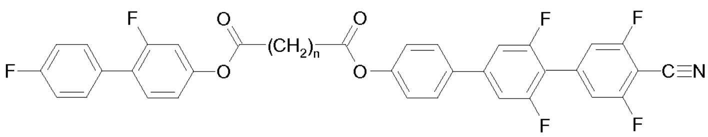

A-III-11

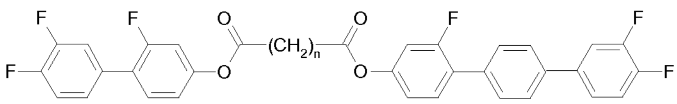

A-III-12

wherein the parameter n has the meaning given above and preferably is 3, 5, 7 or 9, more preferably 5, 7 or 9.

Particularly preferred exemplary compounds of formulae A-I are the following compounds:

symmetrical ones:

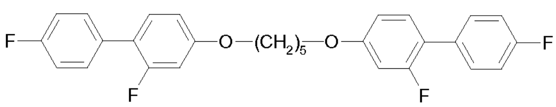

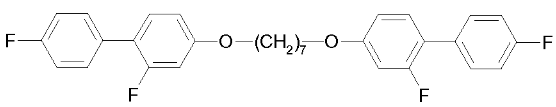

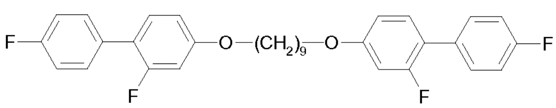

and non-symmetrical ones:

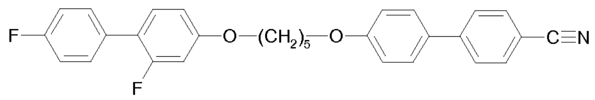

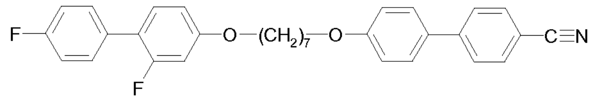

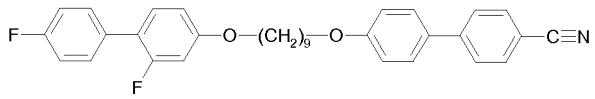

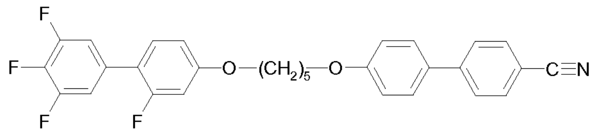

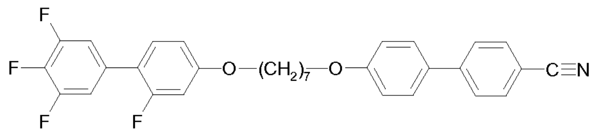

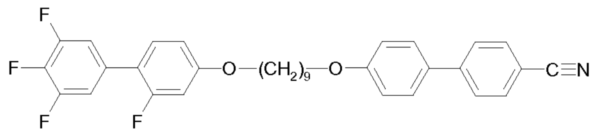

Particularly preferred exemplary compounds of formulae A-II are the following compounds:

symmetrical ones:

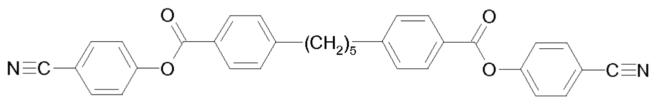

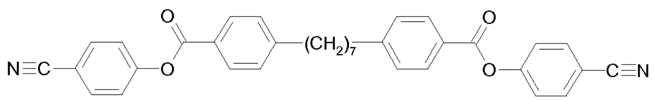

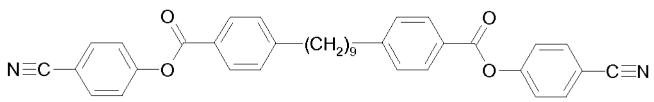

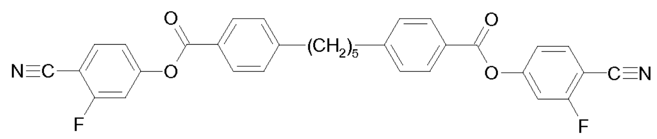

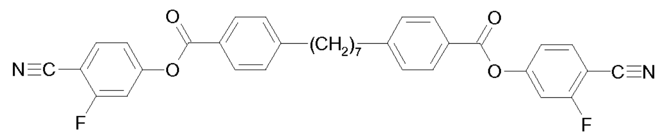

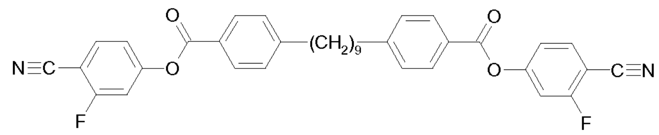

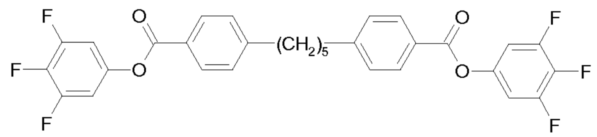

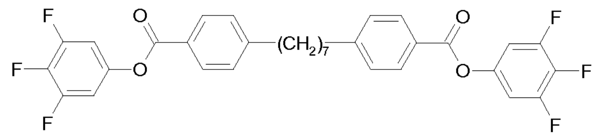

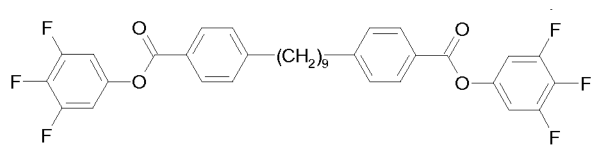

and non-symmetrical ones:

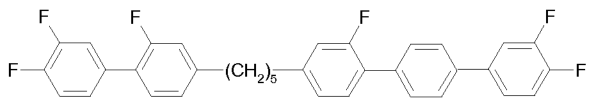

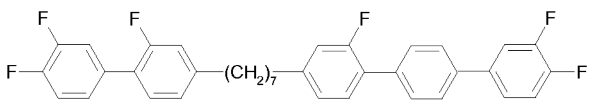

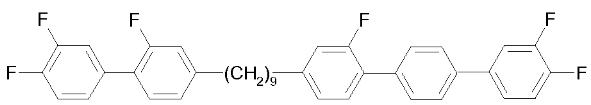

Particularly preferred exemplary compounds of formulae A-III are the following compounds:

symmetrical ones:

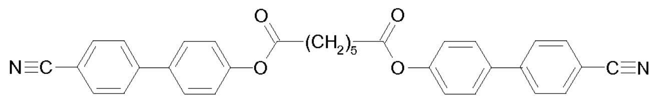

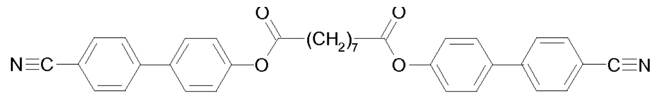

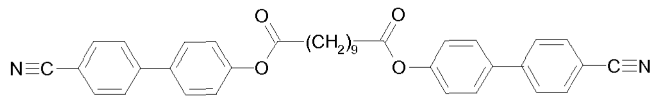

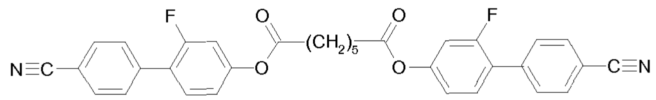

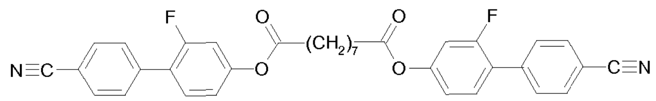

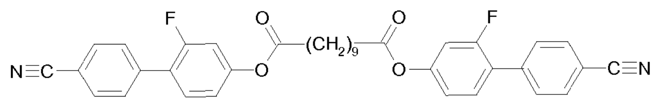

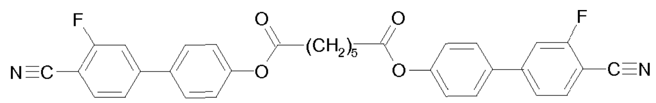

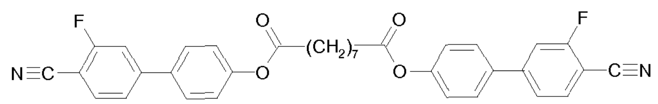

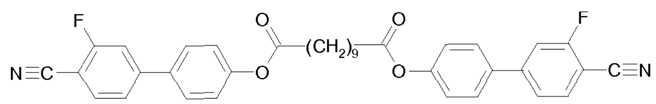

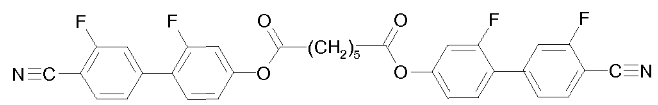

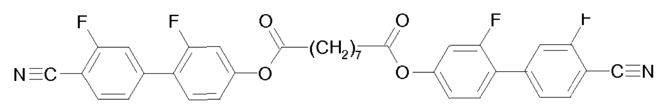

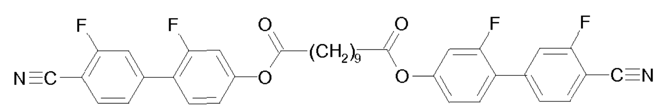

and non-symmetrical ones:

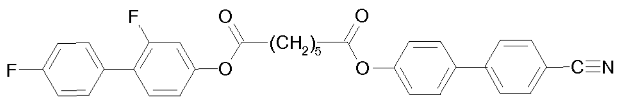

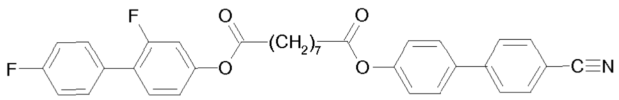

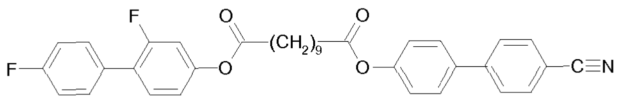

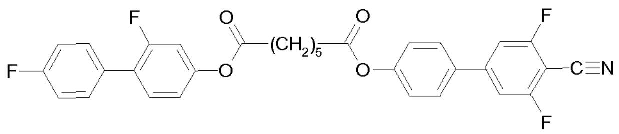

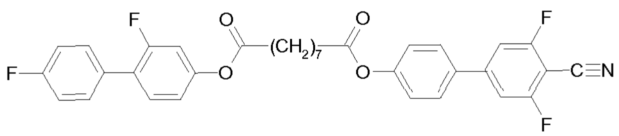

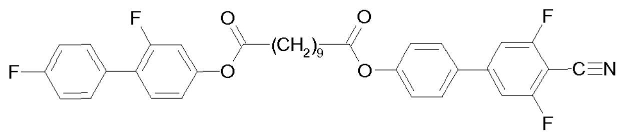

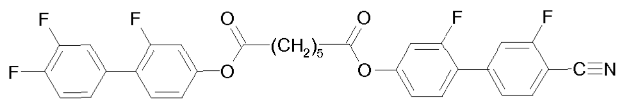

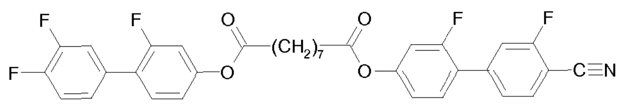

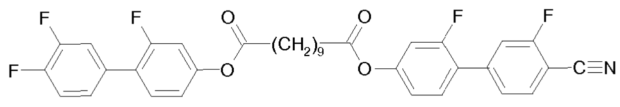

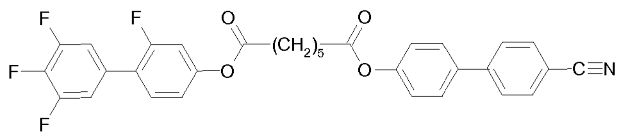

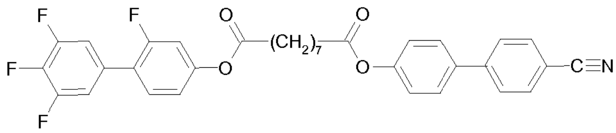

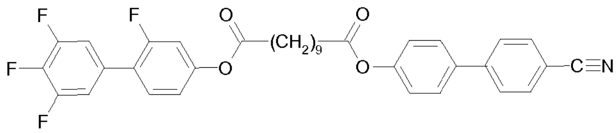

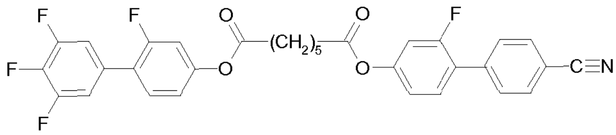

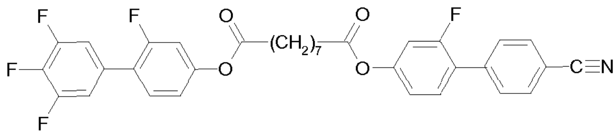

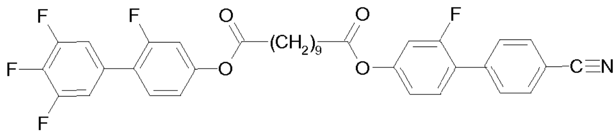

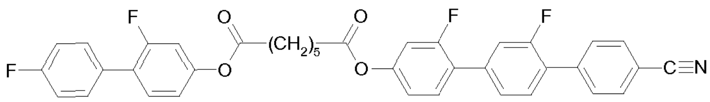

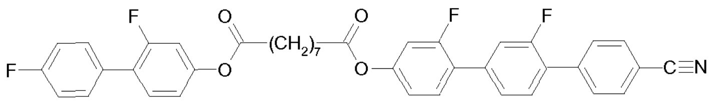

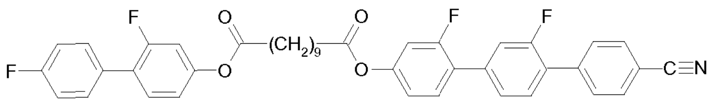

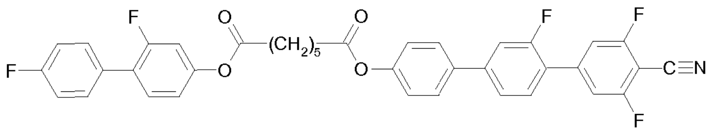

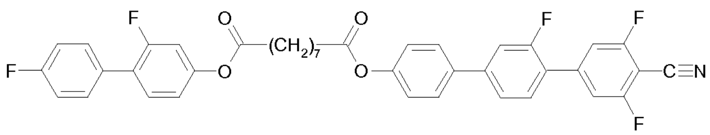

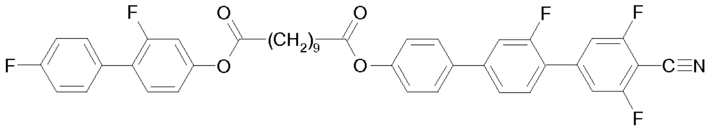

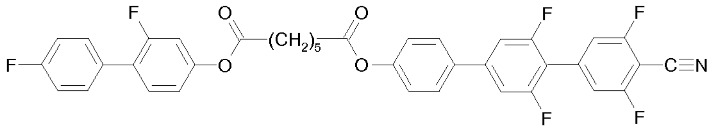

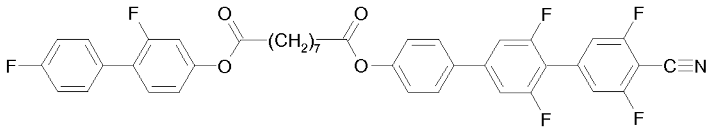

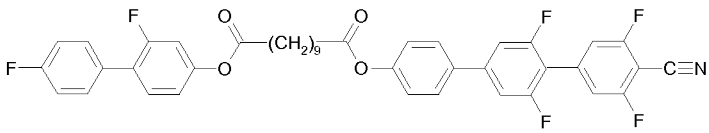

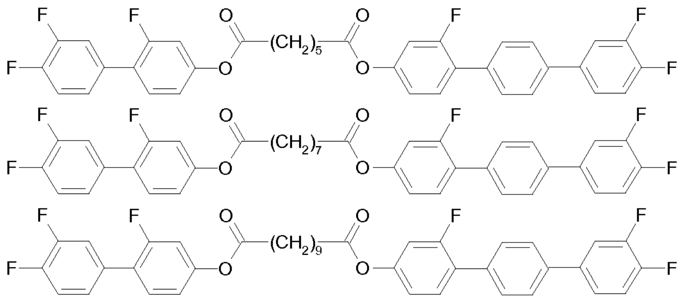

The bimesogenic compounds of formula A-I to A-III are particularly useful in flexoelectric liquid crystal displays as they can easily be aligned into macroscopically uniform orientation, and lead to high values of the elastic constant $k_{11}$ and a high flexoelectric coefficient e in the applied liquid crystalline media.

The compounds of formulae A-I to A-III can be synthesized according to or in analogy to methods which are known per se and which are described in standard works of organic chemistry such as, for example, Houben-Weyl, Methoden der organischen Chemie, Thieme-Verlag, Stuttgart.

The liquid crystalline medium utilized in a window comprising the device for the regulation of light transmission according to the present invention optionally comprises one or more dyes, preferably one or more dichroic dyes.

Preferably, the dichroic dyes are selected from the group of perylene dyes, anthrachinone dyes, and/or azo dyes.

More preferably, the dichroic dyes are selected from the group of compounds of formula I,

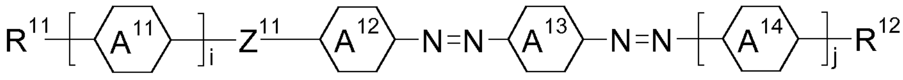

I

wherein,

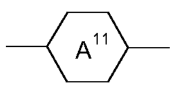

to

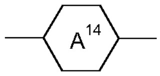

are at each occurrence , identically or differently , selected from

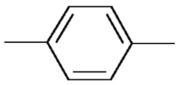 , 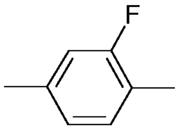 , 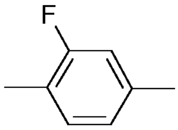 ,

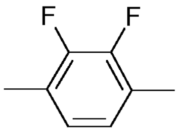 , 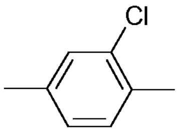 , 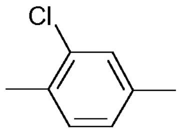 ,

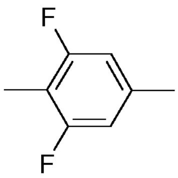 , 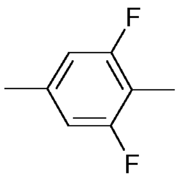

or

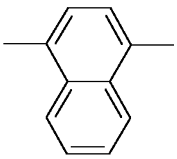 ,

and, in case i is 2 or more, the terminal one of group

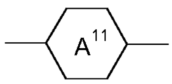

may also be

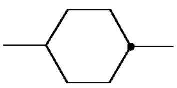 , 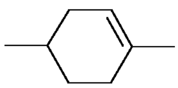 , 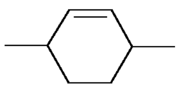 ,

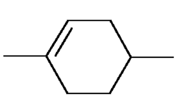 , 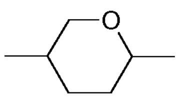 , 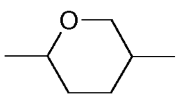 ,

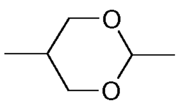 , 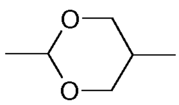

or

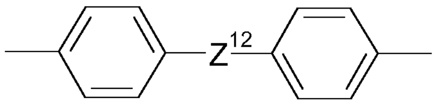

,

and, in case j is 2 or more, the terminal one of group

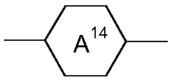

may also be

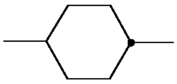

,

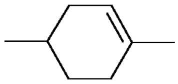

,

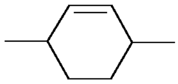

,

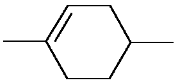

,

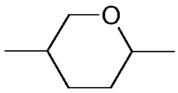

,

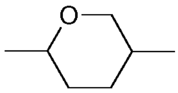

,

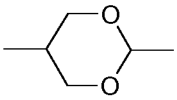

,

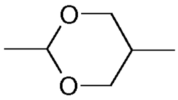

,

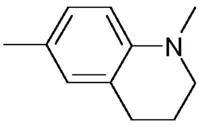

or

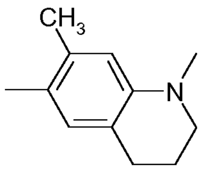

,

$Z^{11}$ and $Z^{12}$ are, independently of each other, -N=N-, -OCO- or -COO- ,

$R^{11}$ and $R^{12}$ are, independently of each other, alkyl, alkoxy, fluorinated alkyl or fluorinated alkoxy, alkenyl, alkenyloxy, alkoxyalkyl or fluorinated alkenyl, alkylaminyl, dialkylaminyl, alkylcarbonyl, alkyloxycarbonyl, alkylcarbonyloxy, alkyloxycarbonyloxy or alkylcyclohexylalkyl, and

i and j are independently of each other 1, 2, 3 or 4.

In a preferred embodiment of the present invention, the liquid crystalline medium comprises one or more dichroic dyes preferably selected from the group of compounds of formulae I-1 to I-7,

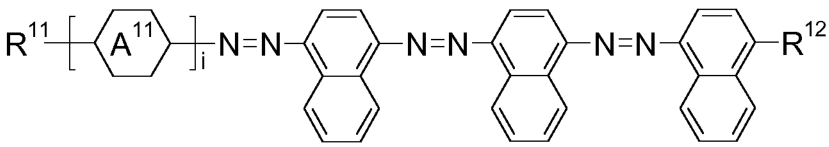

I-1

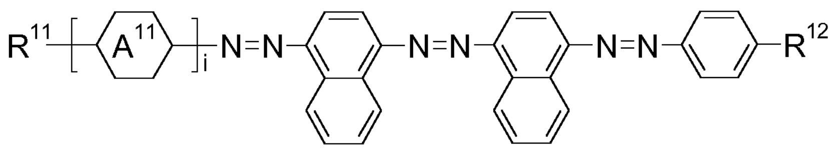

I-2

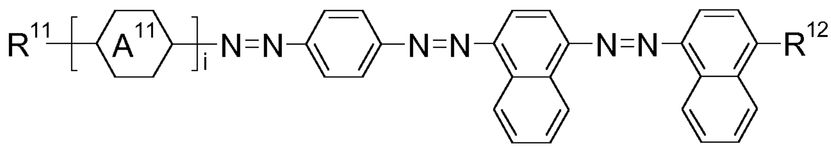

I-3

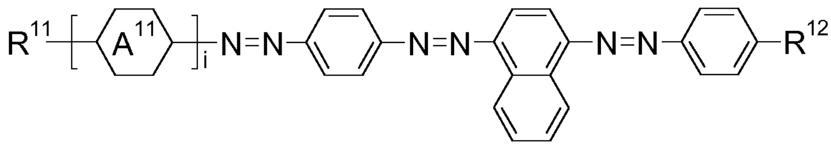

I-4

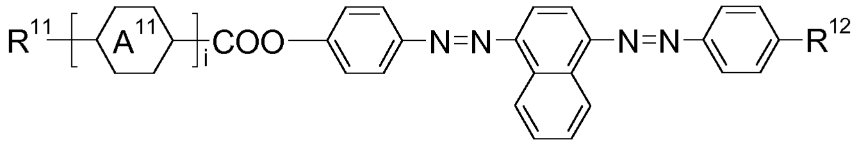

I-5

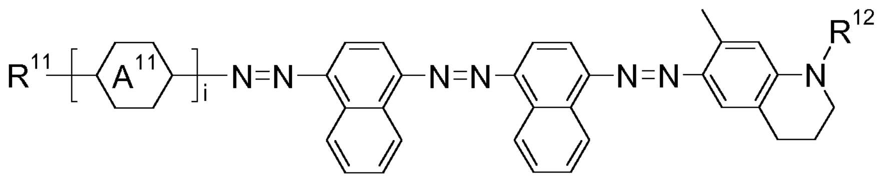

I-6

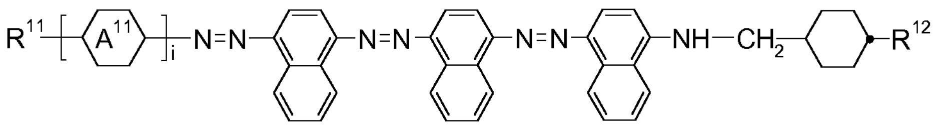

I-7

wherein the parameters have the respective meanings given under formula I above.

In a preferred embodiment of the present invention, the liquid crystalline medium comprises one or more dichroic dyes preferably selected from the group of compounds of formulae I'-1 to I'-7

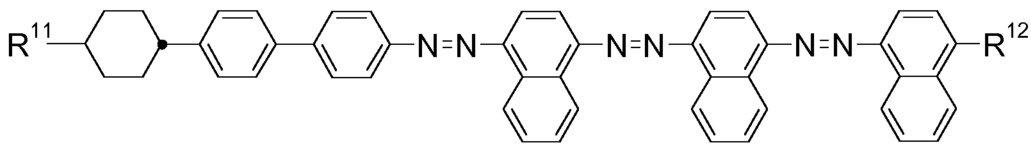

I'-1

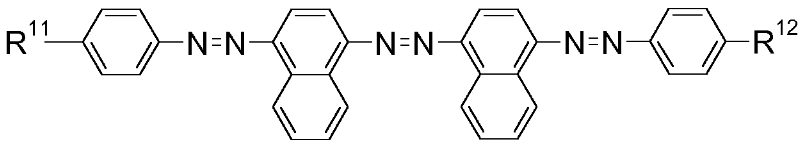

I'-2

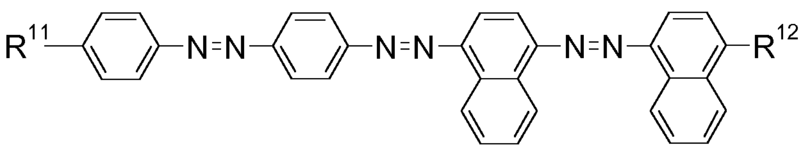

I'-3

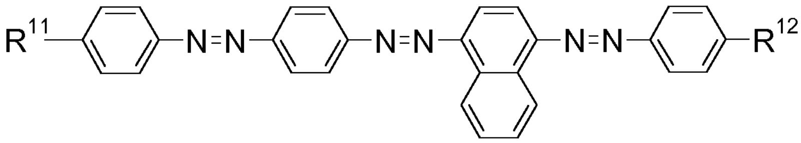

I'-4

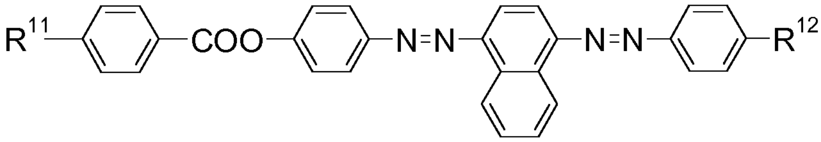

I'-5

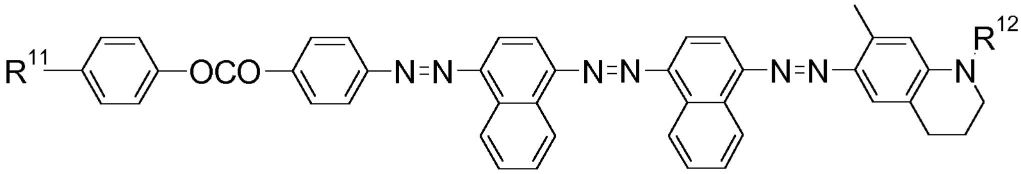

I'-6

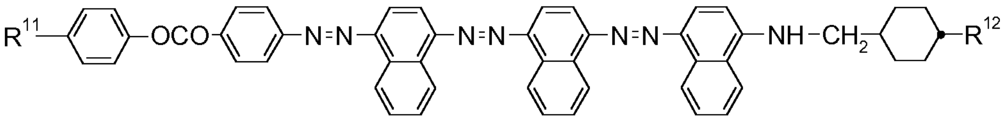

I'-7

wherein the parameters have the respective meanings given under formula I above.

Further preferred compounds of formula I are represented by the following formulae

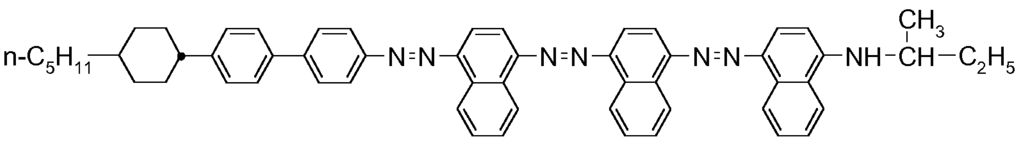

I'-1a

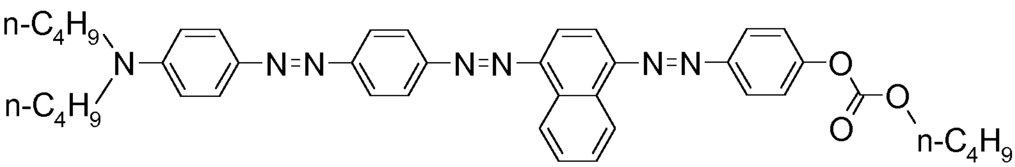

I'-4a

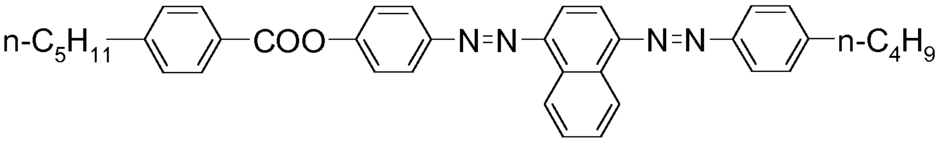

I'-5a

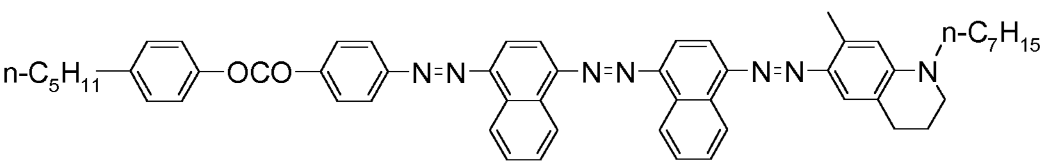

I'-6a

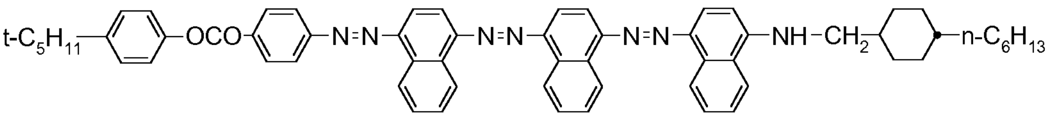

I'-7a

Preferably the concentration of the dichroic dyes in the medium is in the range from 0.1 % to 5 %, more preferably from 0.2 % to 4 %, even more preferably from 0.3 % to 3 %, most preferably from 0.5 % to 2 % and in particular about 1 %.

In a preferred embodiment, the medium comprises a mixture of two or more, preferably of three or more dichroic dyes. Most preferably three dichroic dyes are at present. Preferably, the dichroic dyes have mutually complementing absorption spectra to each other, i. e. complementary absorption colours and are preferably mixed in a ratio relative to each other which results in a neutral colour of the combined absorption of the mixture, i. e. in a black appearance. This means that the absorption is almost constant over the visible spectral range.

For example, the spectral characteristic of a preferred combination of three compounds I'-1a, I'-4a and I'-5a are given in the following table:

| Dye | No. | I'-1a | I'-4a | I'-5a |
|---|---|---|---|---|
| | | F593 | F355 | F357 |
| | | ME-1107 | ME-301 | ME-540 |
| Absorption Spectrum in $CH_2Cl_2$ (1/100,000) | | | | |
| $\lambda_{max}$ | / nm | 621 | 536 | 426 |
| $\Delta\lambda_{max}$ | / nm | ± 2 | ± 2 | ± 2 |
| OD* | | 0.620 | 0.785 | 0.520 |
| ΔOD* | | ± 0.020 | ± 0.020 | ± 0.020 |
| Colour | | Blue | Red | Yellow (Orange) |
| Dichroic Properties | | | | |
| Host LC§ | No. ZLI- | 2903 | 2452 | |
| DR** | | 16.2 | 13.7 | 13.0 |
| S*** | | 0.83 | 0.81 | 0.80 |
| *): Optical Density: OD = $\log_{10} (I_i/I_t)$,<br>Ii = Intensity of incident light,<br>It = Intensity of transmitted light,<br>§): ZLI-mixtures available from Merck KGaA, Germany,<br>**): Dichroic Ratio of Dye in Host LC and<br>***): Order Parameter of Dye in Host LC. | | | | |

In the following conditions for the liquid-crystalline media according to preferred embodiments of the present invention are given. These preferred conditions may be fulfilled individually or, preferably in combinations with each other. Binary combinations thereof are preferred, whereas ternary or higher combinations thereof are particularly preferred.

A suitable liquid-crystalline medium in accordance with the present invention comprises 2 or more, preferably at least 3, particularly preferably at least 4 and very particularly preferably at least 5, different bimesogenic compounds.

It goes without saying to the person skilled in the art that the LC media may also comprise compounds in which, for example, H, N, O, Cl, F have been replaced by the corresponding isotopes.

Typically, the amount of compounds of formula A-I to A-III in the liquid crystalline medium is preferably from 25 to 100 %, in particular from 50 to 100 %, very preferably 75 to 100 % by weight of the total mixture.

Preferably the concentration of the dichroic dyes in the medium is in the range from 0.05 % to 5 %, more preferably from 0.1 % to 4 %, even more preferably from 0.2 % to 3 %.

The liquid-crystalline medium in accordance with the present invention optionally comprises further compounds, for example stabilisers, antioxidants, which are preferably employed in a concentration of 0% to approximately 20%, particularly preferably 0 % to approximately 10%, and very particularly preferably 0 % to approximately 5%, respectively.

In one preferred embodiment, the liquid-crystalline medium preferably exhibits positive values for the dielectric anisotropy $\Delta\varepsilon$. In this case, $\Delta\varepsilon$ preferably has a value of approximately 0 to 8, more preferably approximately 0 to 5, even more preferably approximately 0 to 3.

In another preferred embodiment the liquid-crystalline medium preferably exhibits negative values for the dielectric anisotropy $\Delta\varepsilon$. In this case, $\Delta\varepsilon$ preferably has a value of approximately 0 to -8, more preferably approximately 0 to -5, even more preferably approximately 0 to -3.

The liquid-crystal media in accordance with the present invention preferably have a clearing point of approximately 65°C or more, more preferably approximately 70°C or more, still more preferably 80°C or more, particularly preferably approximately 85°C or more and very particularly preferably approximately 90°C or more.

The nematic phase of the media according to the invention preferably extends at least from approximately 0°C or less to approximately 65°C or more, more preferably at least from approximately 20°C or less to approximately 70°C or more, very preferably at least from approximately 30°C or less to approximately 70°C or more and in particular at least from approximately 40°C or less to approximately 90°C or more. In individual preferred embodiments, it may be necessary for the nematic phase of the media according to the invention to extend to a temperature of approximately 100°C or more and even to approximately 110°C or more.

The $\Delta n$ of a suitable liquid-crystal media is preferably as high as possible. Typically, the $\Delta n$ of the liquid-crystal media in accordance with the present invention, at 589 nm (NaD) and 20°C, is preferably in the range from approximately 0.10 or more to approximately 0.35 or more, more preferably in the range from approximately 0.12 or more to approximately 0.35 or more, even more preferably in the range from approximately 0.15 or more to approximately 0.35 or more and very particularly preferably in the range from approximately 0.17 or more to approximately 0.35 or more.

The liquid crystal medium preferably exhibits a
$k_{11}$ > 1x10-10 N and a flexoelectric coefficient
e > 1x10-10 C/m.

The rotational viscosity of a suitable liquid-crystal media is preferably as low as possible. Typically, the media according to the present invention, exhibit a rotational viscosity of approximately 90 mPas or less, preferably of approximately 80 mPas or less.

The liquid-crystal media utilized in the window comprising the device for the regulation of light transmissionaccording to the present invention are prepared in a manner conventional per se. In general, the desired amount of the components used in lesser amount is dissolved in the components making up the principal constituent, preferably at elevated temperature. It is also possible to mix solutions of the components in an organic solvent, for example in acetone, chloroform or methanol, and to remove the solvent again, for example by distillation, after thorough mixing. It is furthermore possible to prepare the mixtures in other conventional manners, for example using pre-mixes, for example homologue mixtures, or using so-called "multibottle" systems.

The functional principle of the window comprising the device for the regulation of light transmission according to the invention will be explained in detail below. It is noted that no restriction of the scope of the claimed invention, which is not present in the claims, is to be derived from the comments on the assumed way of functioning.

In a preferred embodiment of the invention, the layer of the liquid-crystalline medium is arranged between two substrate layers.

In accordance with the invention, the two substrate layers may consist, inter alia, each and independently from another of a polymeric material, of metal oxide, for example ITO and of glass, preferably each and independently of another of glass and/or ITO, in particular glass/glass.

In a preferred embodiment, the substrates are arranged with a separation in the range from approximately 1 $\mu$m to approximately 50 $\mu$m from one another, preferably in the range from approximately 2 $\mu$m to approximately 40 $\mu$m from one another, and more preferably in the range from approximately 3 $\mu$m to approximately 30 $\mu$m from one another. The layer of the liquid-crystalline medium is thereby located in the interspace.

The substrate layers can be kept at a defined separation from one another, for example, by spacers or electrodes, which extend through the full cell thickness or projecting structures in the layer. Typical spacer materials are commonly known to the expert, as for example spacers made of plastic, silica, epoxy resins, etc.

In a further preferred embodiment of the invention, the layer of the liquid-crystalline medium is located between two flexible layers, for example flexible polymer films. The window comprising the device for the regulation of light transmission according to the invention is consequently flexible and bendable and can be rolled up, for example. The flexible layers can represent the substrate layer, the alignment layer, and/or polarisers. Further layers, which are preferable flexible, may also, be present. For a more detailed disclosure of the preferred embodiments, in which the layer of the liquid-crystalline medium is located between flexible layers, reference is given to the application US 2010/0045924.

As used herein, the term "polymer" will be understood to mean a molecule that encompasses a backbone of one or more distinct types of repeating units (the smallest constitutional unit of the molecule) and is inclusive of the commonly known terms "oligomer", "copolymer", "homopolymer" and the like. Further, it will be understood that the term polymer is inclusive of, in addition to the polymer itself, residues from initiators, catalysts, and other elements attendant to the synthesis of such a polymer, where such residues are understood as not being covalently incorporated thereto. Further, such residues and other elements, while normally removed during post polymerisation purification processes, are typically mixed or co-mingled with the polymer such that they generally remain with the polymer when it is transferred between vessels or between solvents or dispersion media.

In a further preferred embodiment of the invention, the liquid-crystalline medium has a solid or gelatinous consistency. The term "gelatinous" refers to a consistency having the nature of or resembling jelly. The window comprising

the device for the regulation of light transmission according to the invention is consequently less susceptible to damage. If, furthermore, exclusively flexible, bendable and cuttable layers are present in addition to the layer of the liquid-crystalline medium, the window comprising the device for the regulation of light transmission can not only be rolled up, but pieces of an area required in each case can also be cut out.

The window comprising the device for the regulation of light transmission may furthermore have one or more alignment layers, which are in direct contact with the layer of the liquid-crystalline medium and induce homeotropic or planar orientation.

It is likewise possible in accordance with the present invention and advantageous under certain conditions for the window comprising the device for the regulation of light transmission to comprise no alignment layers adjacent to the layer of the liquid-crystalline medium.

The term "hybrid alignment" or orientation of a liquid crystal or mesogenic material in a display cell or between two substrates means that the mesogenic groups adjacent to the first cell wall or on the first substrate exhibit homeotropic orientation and the mesogenic groups adjacent to the second cell wall or on the second substrate exhibit planar orientation.

By using a display cell with hybrid alignment conditions, a very high switching angle of flexoelectric switching, fast response times and a good contrast can be achieved.

Planar alignment can be achieved e.g. by means of an alignment layer, for example a layer of rubbed polyimide or sputtered SiOx, that is applied on top of the substrate.

Homeotropic alignment can be achieved e.g. by means of an alignment layer coated on top of the substrate. Suitable aligning agents used on glass substrates are for example, alkyltrichlorosilane or lecithine, whereas for plastic substrate thin layers of lecithine, silica or high tilt polyimide orientation films as aligning agents may be used. In a preferred embodiment of the invention silica coated plastic film is used as a substrate. However, it is also possible to add self-aligning agents to the liquid crystalline mixture in order to achieve homeotropic alignment, which are commonly known to the skilled person from prior art.

Further suitable methods to achieve planar or homeotropic alignment are described for example in J. Cognard, Mol.Cryst.Liq.Cryst. 78, Supplement 1, 1-77 (1981).

In a preferred embodiment, the alignment layers are rubbed by rubbing techniques known to the skilled person.

The window comprising the device for the regulation of light transmission may furthermore comprise filters which block light of certain wavelengths, for example UV filters. In accordance with the invention, further functional layers, such as, for example, protective films, heat-insulation films or metal-oxide layers, may also be present.

Furthermore, electrodes and further electrical components and connections may be present in the window comprising the device for the regulation of light transmission according to the invention in order to facilitate electrical switching of the light modulation element, comparable to the switching of an LC display.

Depending on the utilized electrode structure, preferably at least one substrate is provided with an electrode structure, but it is likewise preferred that both substrates carry patterns of opposing electrodes on their facing surfaces with the intervening liquid crystal medium there between. A suitable electrode structures is, for example, a comb-like electrode arrangement. Further preferred electrode structures are, for example, IPS, or FFS electrode structures.

In another preferred embodiment, a through cell electrode structure is utilized, which serves as both spacer and electrode. Other suitable electrode structures are commonly known to the expert, such as electrode layers covering the whole substrate.

Suitable electrode materials are commonly known to the expert, as for example electrodes made of metal or metal oxides, such as, for example transparent indium tin oxide (ITO), which is preferred according to the present invention.

Preferably, the electrodes of the window comprising the device for the regulation of light transmission are associated with a switching element, such as a thin film transistor (TFT) or thin film diode (TFD).

The functional principle of the window comprising the device according to the invention will be explained in detail below. It is noted that no restriction of the scope of the claimed invention, which is not present in the claims, is to be derived from the comments on the assumed way of functioning.

The light transmission of the window comprising the device for the regulation of light transmission according to the invention is dependent on the applied electric field. In a preferred embodiment, the light transmission of the window comprising the device for the regulation of light transmission is high in the initial state when no electric field is applied and preferably, gradually decreases when an electric field is applied.

In a preferred embodiment, the window comprising the device for the regulation of light transmission according to the invention has a boundary state A and a boundary state B.

The window comprising the device for the regulation of light transmission preferably has the boundary state A with a transmission $T_A$ when no electrical field is applied, the so called off state.

The window comprising the device for the regulation of light transmission preferably has another boundary state B when an characteristica electric field is applied, the so called "on state", in which the liquid crystal medium is increasingly distorted away from the initial orientation towards the light scattering bend state, whereby

$T_A > T_B$.

The invention thus also relates to the use of the window comprising the device according to the invention for the regulation of light entry and/or energy input into an interior.

As mentioned above, the invention is not restricted to buildings, but can also be used in transport containers, for example shipping containers, or vehicles. It is particularly preferred to install the window comprising the device on glass panes of windows or to use it as a component of multipane insulating glass. The window comprising the device according to the invention can be installed on the outside, the inside or, in the case of multipane glass, in the cavity between two glass panes, where the inside is taken to mean the side of a glass surface, which faces the interior. Preference is given to use on the inside or in the cavity between two glass panes in the case of multipane insulating glass.

The window comprising the device according to the invention may completely cover the respective glass surface on which it is installed or only partly cover it. In the case of complete coverage, the influence on light transmission through the glass surface is at its maximum. In the case of partial coverage, by contrast, a certain amount of light is transmitted by the glass surface through the uncovered parts, even in the state of the device with low transmission. Partial coverage can be achieved, for example, by installing the devices on the glass surface in the form of strips or certain patterns.

In a preferred embodiment of the invention, the device regulates light transmission through the glass surface into the interior electrically.

The required applied electric field strength is mainly dependent on the electrode gap and the $\Delta\varepsilon$ of the LC mixture.

The applied electric field strengths are typically lower than approximately 50 V/$\mu$m$^{-1}$, preferably lower than approximately 30 V/pm$^{-1}$ and more preferably lower than approximately 25 V/$\mu$m$^{-1}$.

In a preferred embodiment, a DC electrical field is applied to the device in accordance with the present invention. Typically, the applied DC driving voltage is in the range from 0.1 V to approximately 25 V, more preferably in the range from approximately 0.3 V to approximately 20 V, and even more preferably in the range from approximately 0.5 V to approximately 15 V.

In another preferred embodiment, an AC electrical field is applied to the device in accordance with the present invention. Typically, the applied DC driving voltage is in the range from 0.1 V to approximately 150 V, more preferably in the range from approximately 0.3 V to approximately 125 V, and even more preferably in the range from approximately 0.5 V to approximately 100 V, each having a voltage frequency from 1 Hz to 100 Hz.

The way in which the window comprising the devices according to the invention are produced is known to the person skilled in the art in the area of devices containing liquid-crystalline media.

However, a typical process for the production of a device for the regulation of light transmission according to the invention comprises the following steps:

- cutting and cleaning glass substrates, on which the electrodes are arranged,
- optionally, coating the substrates with an alignment layer or dielectric layer,
- assembling the cell using a UV curable adhesive, and
- filling the cell with the liquid-crystalline medium.

Unless the context clearly indicates otherwise, as used herein plural forms of the terms herein are to be construed as including the singular form and vice versa.

The parameter ranges indicated in this application all include the limit values including the maximum permissible errors as known by the expert. The different upper and lower limit values indicated for various ranges of properties in combination with one another give rise to additional preferred ranges.

Throughout this application, the following conditions and definitions apply, unless expressly stated otherwise. All concentrations are quoted in per cent by weight and relate to the respective mixture as a whole, all temperatures are quoted in degrees Celsius and all temperature differences are quoted in differential degrees. All physical properties are determined in accordance with "Merck Liquid Crystals, Physical Properties of Liquid Crystals", Status Nov. 1997, Merck KGaA, Germany, and are quoted for a temperature of 20°C, unless expressly stated otherwise. The optical anisotropy ($\Delta n$) is determined at a wavelength of 589.3 nm. The dielectric anisotropy ($\Delta\varepsilon$) is determined at a frequency of 1 kHz or if explicitly stated at a frequency 19 GHz. The threshold voltages, as well as all other electro-optical properties, are determined using test cells produced at Merck KGaA, Germany. The test cells for the determination of $\Delta\varepsilon$ have a cell thickness of approximately 20 $\mu$m. The electrode is a circular ITO electrode having an area of 1.13 cm$^2$ and a guard ring. The orientation layers are SE-1211 from Nissan Chemicals, Japan, for homeotropic orientation ($\varepsilon\|$) and polyimide AL-1054 from Japan Synthetic Rubber, Japan, for homogeneous orientation ($\varepsilon_\perp$). The capacitances are determined using a Solatron 1260 frequency response analyser using a sine wave with a voltage of 0.3 $V_{rms}$. The light used in the electro-optical measurements is white light. A set-up using a commercially available DMS instrument from Autronic-Melchers, Germany, is used here.

Throughout the description and claims of this specification, the words "comprise" and "contain" and variations of the words, for example "comprising" and "comprises", mean "including but not limited to", and are not intended to (and do not) exclude other components. On the other hand, the word "comprise" also encompasses the term "consisting of" but is not limited to it.

It will be appreciated that many of the features described above, particularly of the preferred embodiments, are inventive in their own right and not just as part of an embodiment of the present invention. Independent protection may be sought for these features in addition to, or alternative to any invention presently claimed.

Throughout the present application it is to be understood that the angles of the bonds at a C atom being bound to three adjacent atoms, e.g. in a C=C or C=O double bond or e.g. in a benzene ring, are 120° and that the angles of the bonds at a C atom being bound to two adjacent atoms, e.g. in a C≡C or in a C≡N triple bond or in an allylic position C=C=C are 180°, unless these angles are otherwise restricted, e.g. like being part of small rings, like 3-, 5- or 5-atomic rings, notwithstanding that in some instances in some structural formulae these angles are not represented exactly.

It will be appreciated that variations to the foregoing embodiments of the invention can be made while still falling within the scope of the invention. Alternative features serving the same, equivalent or similar purpose may replace each feature disclosed in this specification, unless stated otherwise. Thus, unless stated otherwise, each feature disclosed is one example only of a generic series of equivalent or similar features.

All of the features disclosed in this specification may be combined in any combination, except combinations where at least some of such features and/or steps are mutually exclusive. In particular, the preferred features of the invention are applicable to all aspects of the invention and may be used in any combination. Likewise, features described in non-essential combinations may be used separately (not in combination).

Without further elaboration, it is believed that one skilled in the art can, using the preceding description, utilize the present invention to its fullest extent. The following examples are, therefore, to be construed as merely illustrative and not limitative of the remainder of the disclosure in any way whatsoever.

The following abbreviations are used to illustrate the liquid crystalline phase behavior of the compounds: K = crystalline; N = nematic; N2 = second nematic; S = smectic; Ch = cholesteric; I = isotropic; Tg = glass transition. The numbers between the symbols indicate the phase transition temperatures in °C.

In the present application and especially in the following examples, the structures of the liquid crystal compounds are represented by abbreviations, which are also called "acronyms". The transformation of the abbreviations into the corresponding structures is straightforward according to the following three tables A to C.

All groups $C_nH_{2n+1}$, $C_mH_{2m+1}$, and $C_lH2_{l+1}$are preferably straight chain alkyl groups with n, m and l C-atoms, respectively, all groups $C_nH_{2n}$, $C_mH_{2m}$ and $C_lH_{2l}$ are preferably $(CH_2)_n$, $(CH_2)_m$ and $(CH_2)_l$, respectively and -CH=CH- preferably is *trans*- respectively E vinylene.

Table A lists the symbols used for the ring elements, table B those for the linking groups and table C those for the symbols for the left hand and the right hand end groups of the molecules.

**Table A: Ring Elements**

| | | | |
|---|---|---|---|
| **C** | 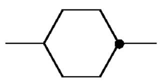 | **P** | 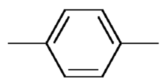 |
| **D** | 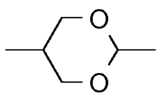 | **DI** | 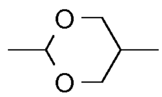 |
| **A** | 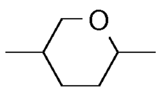 | **AI** | 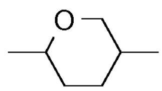 |
| **G** | 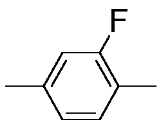 | **GI** | 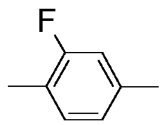 |
| **G(Cl)** | 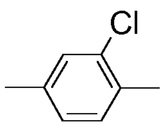 | **GI(Cl)** | 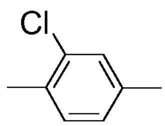 |

(continued)

| | | | |
|---|---|---|---|
| **G(1)** | 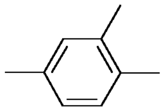 | **GI1)** | 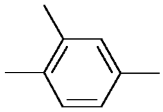 |
| **U** | 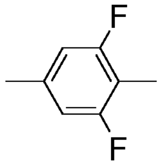 | **UI** | 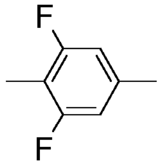 |
| **Y** | 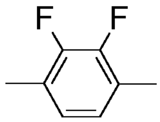 | | |
| **M** | 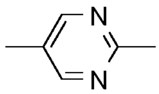 | **MI** | 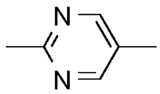 |
| **N** | 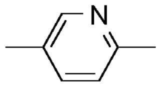 | **NI** | 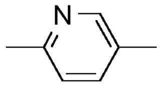 |
| **np** | 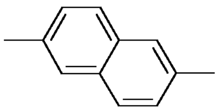 | | |
| **n3f** | 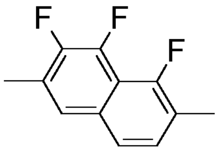 | **n3fI** | 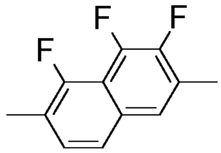 |
| **th** | 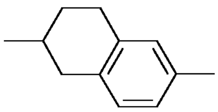 | **thI** | 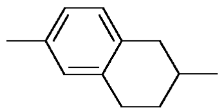 |
| **th2f** | 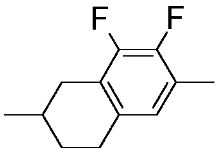 | **th2fI** | 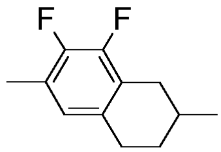 |
| **o2f** | 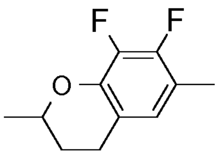 | **o2fI** | 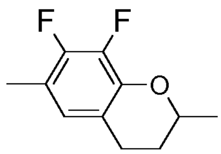 |
| **dh** | 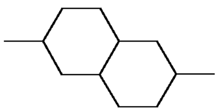 | | |
| **K** | 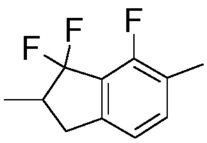 | **KI** | 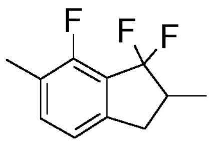 |

(continued)

| | | | |
|---|---|---|---|
| **L** | 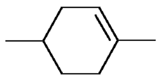 | **LI** | 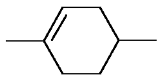 |
| **F** | 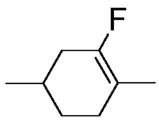 | **FI** | 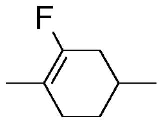 |

**Table B: Linking Groups**

| | | | |
|---|---|---|---|
| **n** | $(-CH_2-)_n$ | "n" is an integer except 0 and 2 | |
| **E** | $-CH_2-CH_2-$ | | |
| **V** | -CH=CH- | | |
| **T** | -C≡C- | | |
| **W** | $-CF_2-CF_2-$ | | |
| **B** | -CF=CF- | | |
| **Z** | -CO-O- | **ZI** | -O-CO- |
| **X** | -CF=CH- | **XI** | -CH=CF- |
| **O** | $-CH_2-O-$ | **OI** | $-O-CH_2-$ |
| **Q** | $-CF_2-O-$ | **QI** | $-O-CF_2-$ |

**Table C: End Groups**

| Left hand side, used alone or in combination with others | | Right hand side, used alone or in combination with others | |
|---|---|---|---|
| **-n-** | $C_nH_{2n+1}-$ | **-n** | $-C_nH_{2n+1}$ |
| **-nO-** | $C_nH_{2n+1}-O-$ | **-nO** | $-O-C_nH_{2n+1}$ |
| **-V-** | $CH_2=CH-$ | **-V** | $-CH=CH_2$ |
| **-nV-** | $C_nH_{2n+1}-CH=CH-$ | **-nV** | $-C_nH_{2n}-CH=CH_2$ |
| **-Vn-** | $CH_2=CH-CnH_{2n}-$ | **-Vn** | $-CH=CH-C_nH_{2n+1}$ |
| **-nVm-** | $C_nH_{2n+1}-CH=CH-C_mH_{2m}-$ | **-nVm** | $-C_nH_{2n}-CH=CH-C_mH_{2m+1}$ |
| **-N-** | N=C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | $CFH_2-$ | **-M** | $-CFH_2$ |
| **-D-** | $CF_2H-$ | **-D** | $-CF_2H$ |
| **-T-** | $CF_3-$ | **-T** | $-CF_3$ |
| **-MO-** | $CFH_2O-$ | **-OM** | $-OCFH_2$ |
| **-DO-** | $CF_2HO-$ | **-OD** | $-OCF_2H$ |
| **-TO-** | $CF_3O-$ | **-OT** | $-OCF_3$ |
| **-A-** | H-C≡C- | **-A** | -C≡C-H |
| **-nA-** | $C_nH_{2n+1}$-C≡C- | **-An** | -C≡C-$C_nH_{2n+1}$ |
| **-NA-** | N≡C-C≡C- | **-AN** | -C≡C-C≡N |
| **-...n...-** | $-C_nH_{2n}-$ | **...n...** | $-C_nH_{2n}-$ |
| **-...M...-** | -CFH- | **-...M...** | -CFH- |
| **-...D...-** | $-CF_2-$ | **-...D...** | $-CF_2-$ |
| **-...V...-** | -CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **...K...** | -CO- |

(continued)

| Left hand side, used alone or in combination with others | | Right hand side, used alone or in combination with others | |
|---|---|---|---|
| **-...W...-** | -CF=CF- | **-...W...** | -CF=CF- |

wherein n und m each are integers and three points "..." indicate a space for other symbols of this table.

**Table D**

Table D indicates possible stabilisers which can be added to the LC media (n here denotes an integer from 1 to 12, terminal methyl groups ar not shown).

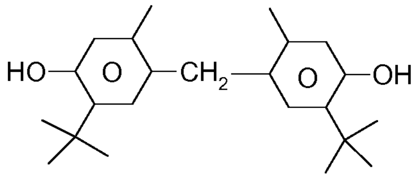
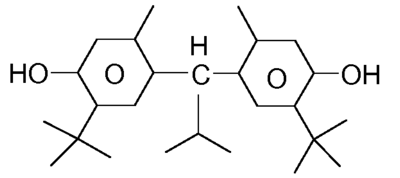
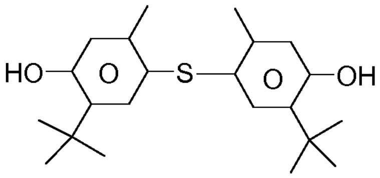
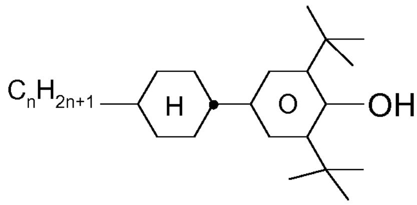
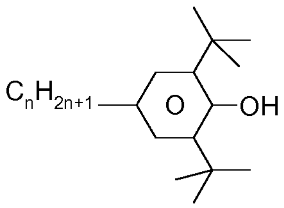
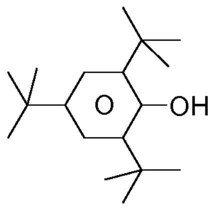
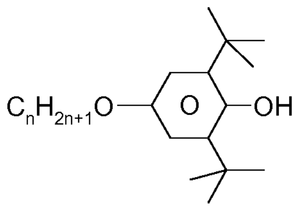
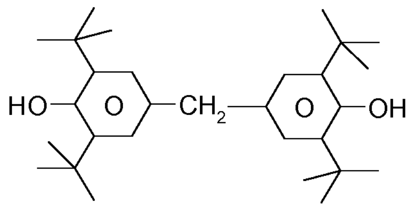
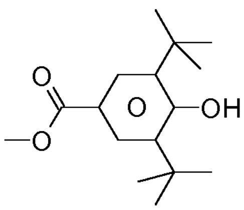
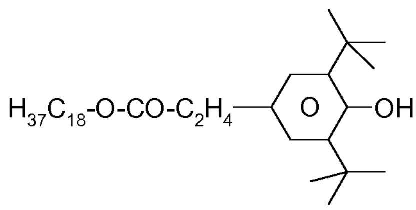
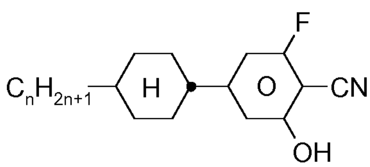
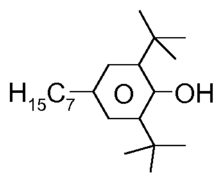

(continued)

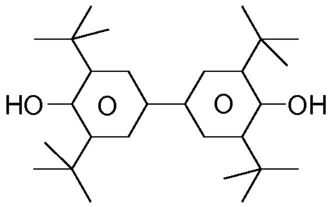

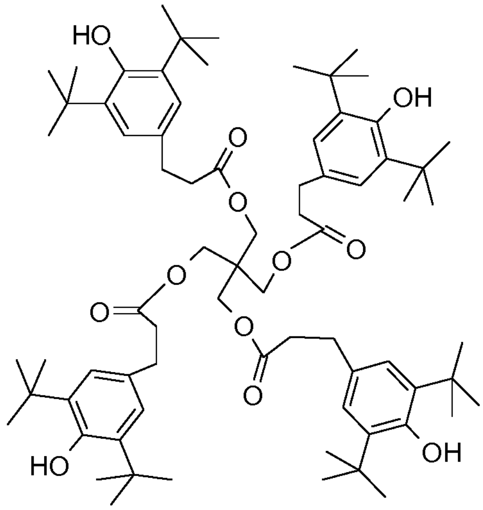

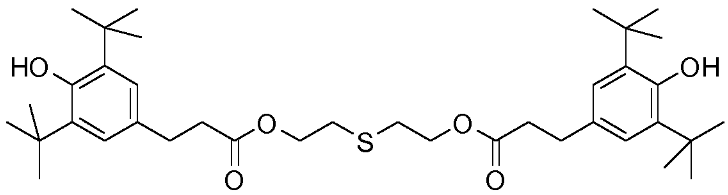

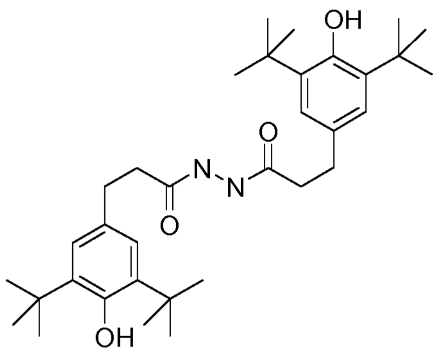

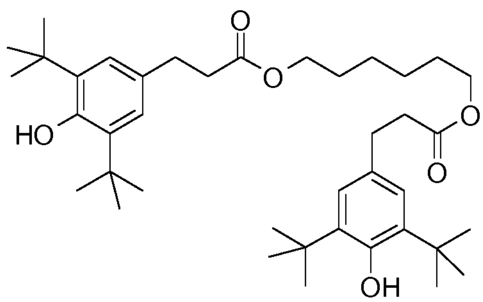

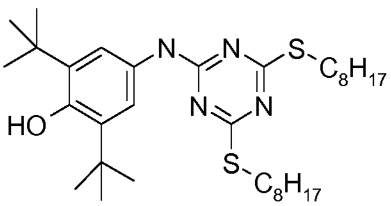

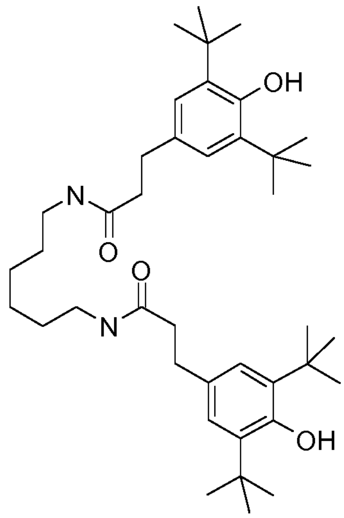

(continued)

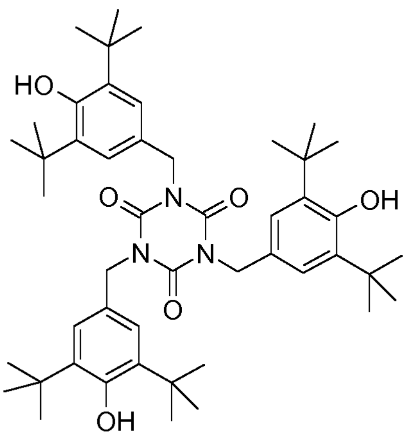

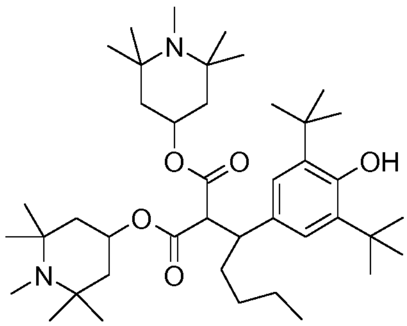

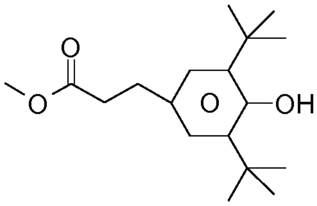

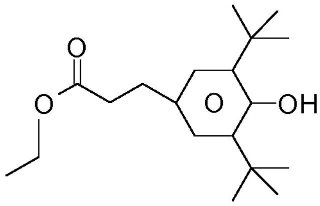

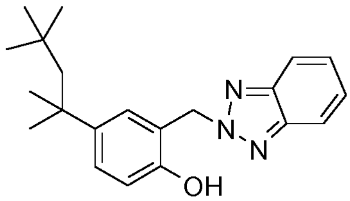

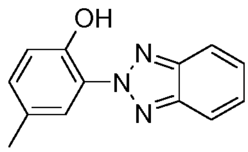

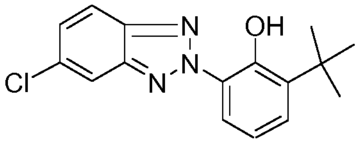

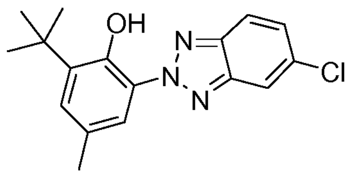

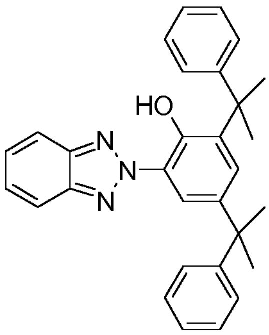

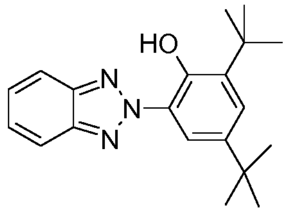

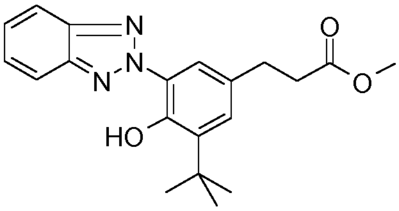

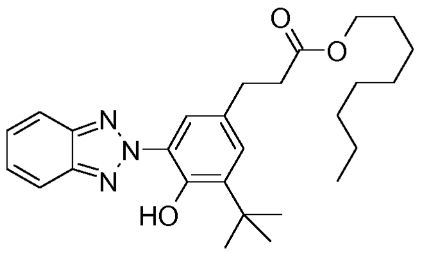

(continued)

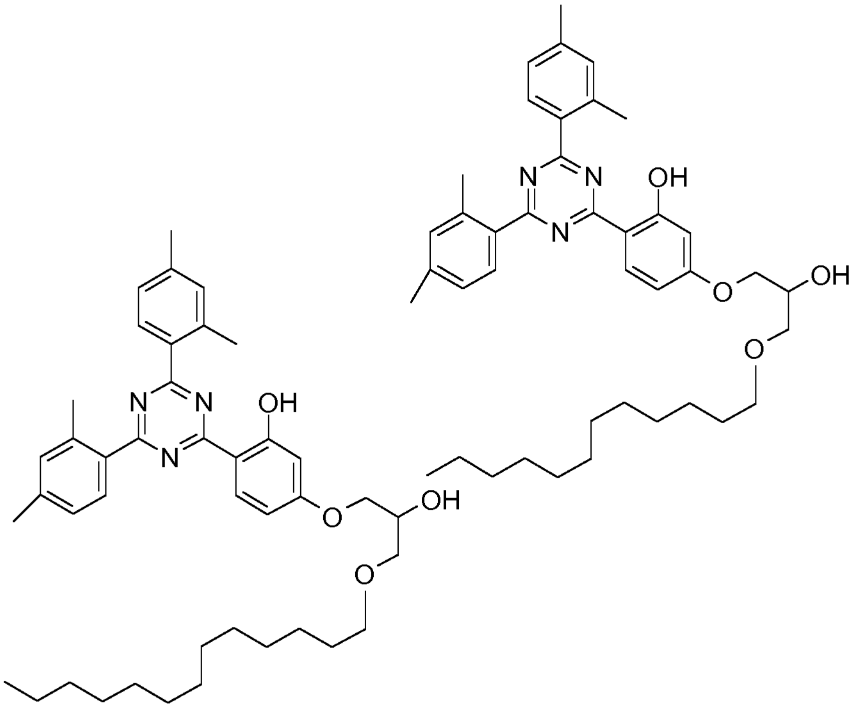

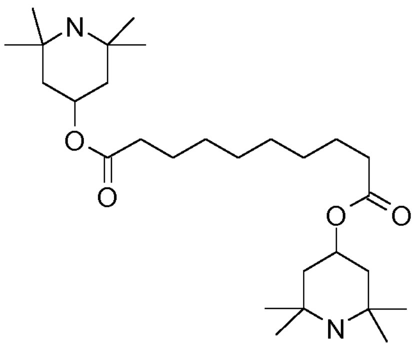

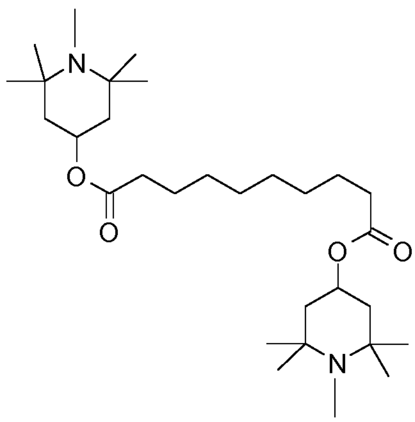

The LC media preferably comprise 0 to 10% by weight, in particular 1 ppm to 5% by weight and particularly preferably 1ppm to 3% by weight, of stabilisers. The LC media preferably comprise one or more stabilisers selected from the group consisting of compounds from Table D.

**Table D**

Preferably the liquid crystalline media according to the present invention comprise, besides the compound(s) of formula A-I to A-III one or more compounds selected from the group of compounds of the formulae of the following table.

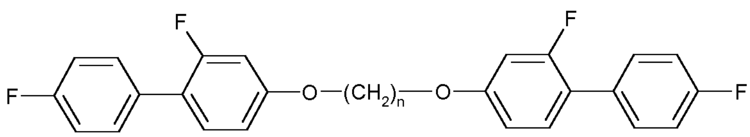

**F-PGI-O-n-O-GP-F**

(continued)

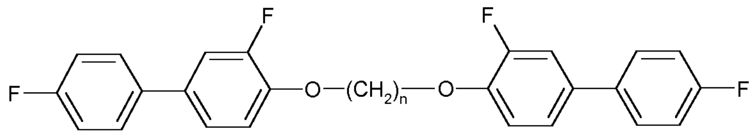

**F-PG-O-n-O-GIP-F**

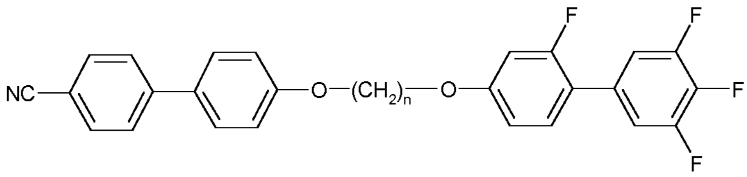

**N-PP-O-n-O-GU-F**

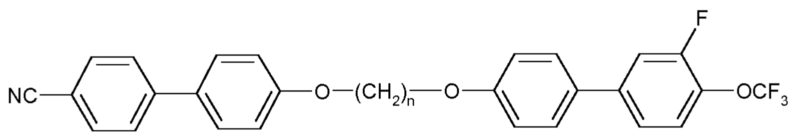

**N-PP-O-n-O-PG-OT**

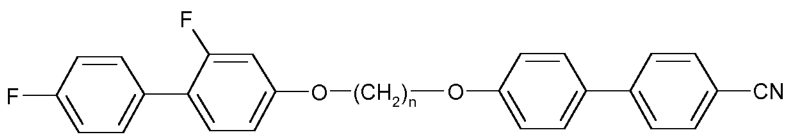

**F-PGI-O-n-O-PP-N**

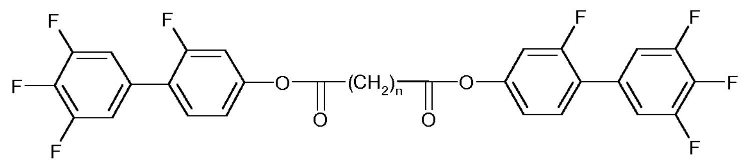

**F-UIGI-ZI-n-Z-GU-F**

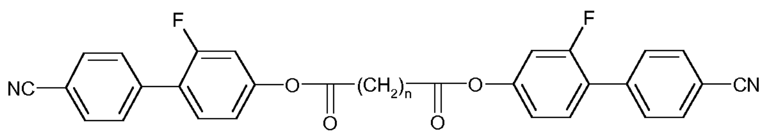

**N-PGI-ZI-n-Z-GP-N**

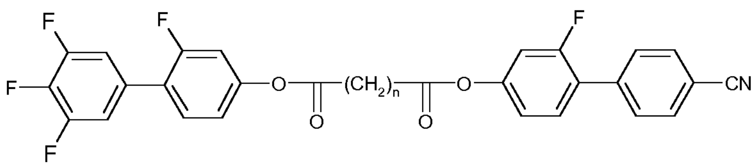

**F-UIGI-ZI-n-Z-GP-N**

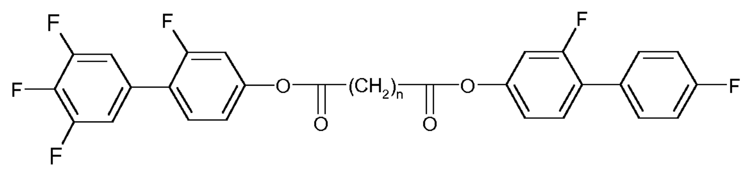

**F-UIGI-ZI-n-Z-GP-F**

(continued)

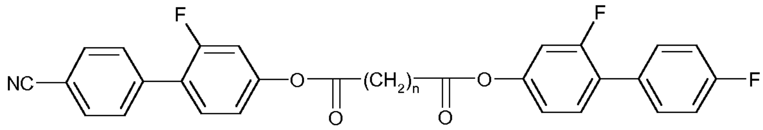

**N-PGI-ZI-n-Z-GP-F**

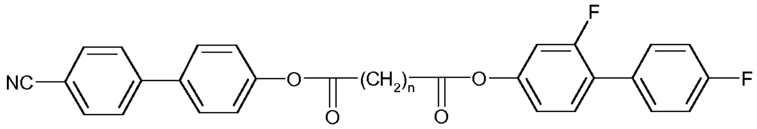

**N-PP-ZI-n-Z-GP-F**

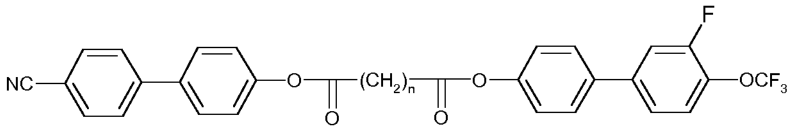

**N-PP-ZI-n-Z-PG-OT**

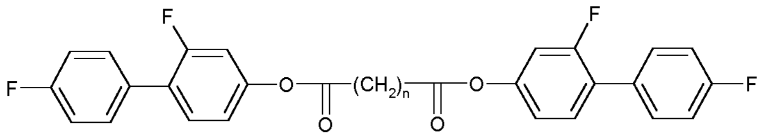

**F-PGI-ZI-n-Z-GP-F**

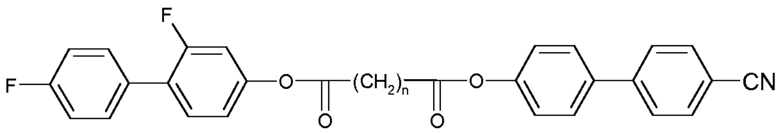

**F-PGI-ZI-n-Z-PP-N**

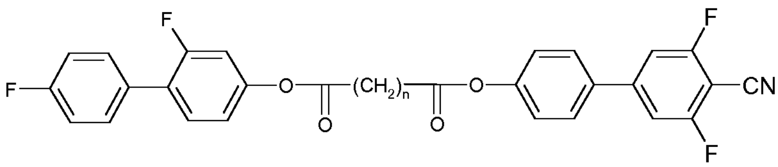

**F-PGI-ZI-n-Z-PU-N**

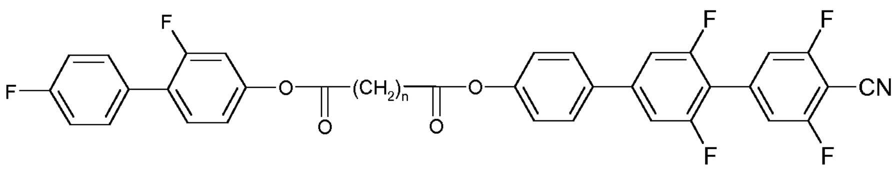

**F-PGI-ZI-n-Z-PUU-N**

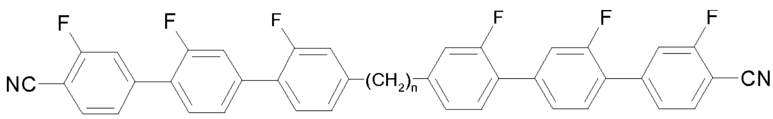

**N-GIGIGI-n-GGG-N**

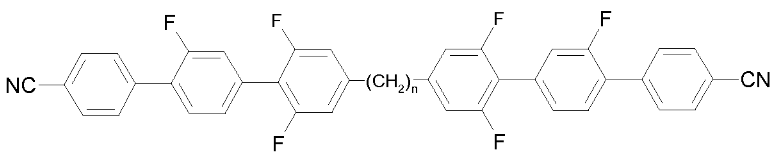

**N-PGIUI-n-UGP-N**

(continued)

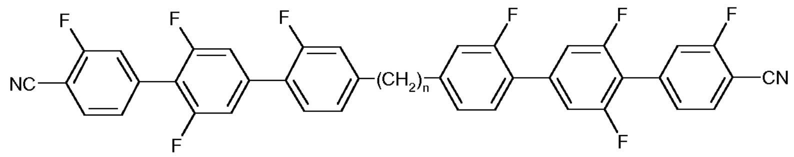

**N-GIUIGI-n-GUG-N**

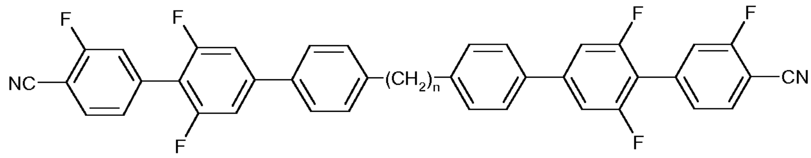

**N-GIUIP-n-PUG-N**

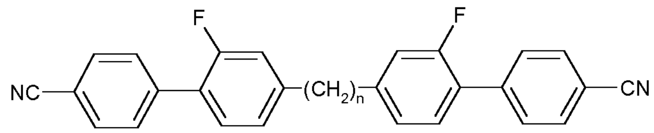

**N-PGI-n-GP-N**

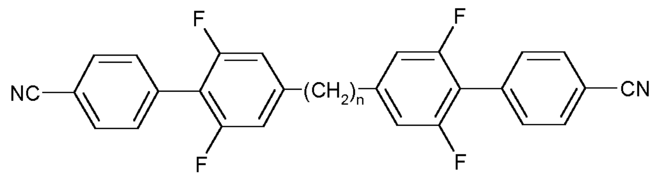

**N-PUI-n-UP-N**

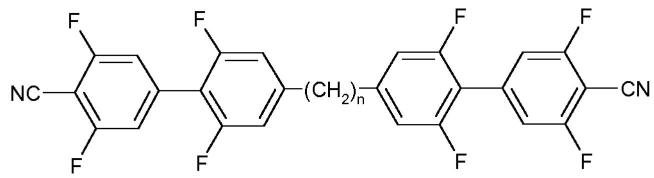

**N-UIUI-n-UU-N**

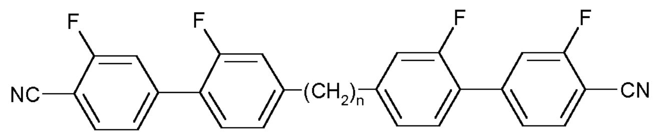

**N-GIGI-n-GG-N**

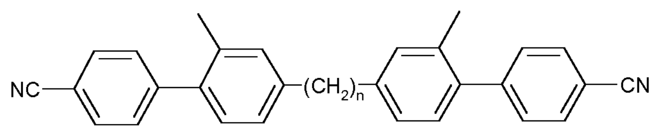

**N-PGI(Me)-n-G(Me)P-N**

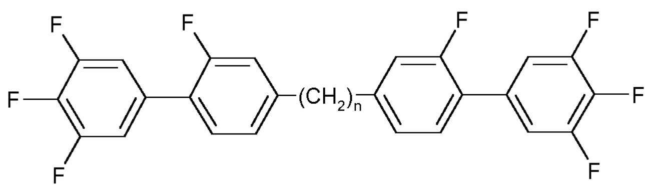

**F-UIGI-n-GU-F**

(continued)

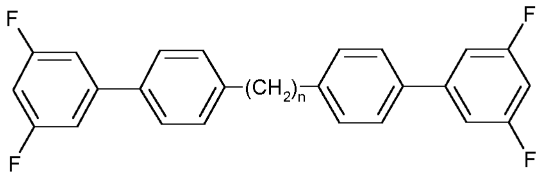

UIP-n-PU

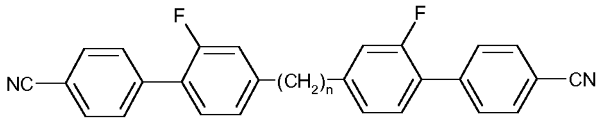

N-PGI-n-GP-N

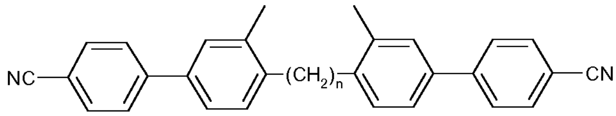

N-PG(Me)-n-GI(Me)P-N

## Examples

The following mixture M1 is prepared:

| Compound | Amount [%-w/w] |
|---|---|
| N-PP-ZI-9-Z-PG-OT | 4.0 |
| F-PGI-ZI-7-Z-PP-N | 15.0 |
| F-PGI-ZI-9-Z-PU-N | 8.6 |
| F-PGI-ZI-9-Z-PUU-N | 5.7 |
| F-UIGI-ZI-9-Z-GP-N | 11.4 |
| N-PGI-ZI-5-Z-GP-F | 12.9 |
| N-PP-ZI-9-Z-GP-F | 15.8 |
| N-PP-O-7-O-PG-OT | 26.7 |

The following mixture M2 is prepared:

| Compound | Amount [%-w/w] |
|---|---|
| N-PP-ZI-9-Z-PG-OT | 3.97 |
| F-PGI-ZI-7-Z-PP-N | 14.91 |
| F-PGI-ZI-9-Z-PU-N | 8.57 |
| F-PGI-ZI-9-Z-PUU-N | 5.66 |
| F-UIGI-ZI-9-Z-GP-N | 11.39 |
| N-PGI-ZI-5-Z-GP-F | 12.82 |
| N-PP-ZI-9-Z-GP-F | 15.69 |
| N-PP-O-7-O-PG-OT | 26.60 |
| F357 (dye) | 0.19 |
| F593 (dye) | 0.21 |

**Experimental set-up**

All measurements are made using a BX 51 microscope (Olympus) with sample mounted on a hotstage (Linkam) set to 25°C. The sample is positioned at the focal plane of an x10 objective lens with N.A: = 0.25. The sample is rotated between crossed polarisers until maximum transmission is achieved then the top polarizer is removed from the optical path. The light intensity is measured using a SM1PD1A photodiode and PDA-200C Photodiode Amplifier (supplied by Thor Labs) and signal captured and recorded via a computer interface in Labview 2013 (National Instruments).

**Example 1:**

A test cell having a cell gap of 6 μm and consisting of two glass substrates, an opposing electrode structure covered with anti-parallel rubbed homogeneous alignment layers (PI) is filled with the liquid crystal mixture M-1. The cell appears transparent with unpolarised light. Upon application of an electric field of 10 V (DC) the cell switches gradually to a translucent and then to a strongly scattering state exhibiting a clear white appearance. The reversible effect is depicted in Fig. 1 and 2.

**Example 2:**

A test cell having a cell gap of 6 μm and consisting of two glass substrates, an opposing electrode structure covered with anti-parallel rubbed homogeneous alignment layers (PI) is filled with the liquid crystal mixture M-1. The cell appears transparent with unpolarised light. Upon application of an increasing electric field (AC) with a voltage frequency of 1Hz the cell switches gradually to a translucent and then to a strongly scattering state exhibiting a clear white appearance. The effect is depicted in Fig. 3.

**Example 3:**

A test cell having a cell gap of 6 μm and consisting of two glass substrates, an opposing electrode structure covered with anti-parallel rubbed homogeneous alignment layers (PI) is filled with the liquid crystal mixture M-1. The cell appears transparent with unpolarised light. Upon application of an increasing electric field (AC) with a voltage frequency of 100 Hz the cell switches gradually to a translucent and then to a strongly scattering state exhibiting a clear white appearance. The effect is depicted in Fig. 4.

**Example 4:**

A test cell having a cell gap of 3.5 μm and consisting of two glass substrates, an IPS electrode structure having an electrode width of 3 μm and an electrode spacing of 5 μm, which is covered with a rubbed (Rubbing direction: 80° with respect to the electrodes) homogeneous alignment layers (PI) is filled with the liquid crystal mixture M-1. The cell appears transparent with unpolarised light. Upon application of an electric field of 15 V (DC) the cell switches gradually to a translucent and then to a scattering state exhibiting a hazy appearance. The reversible effect is depicted in Fig. 5 and 6 .

**Example 5:**

A test cell having a cell gap of 3.5 μm and consisting of two glass substrates, an IPS electrode structure having an electrode width of 3 μm and an electrode spacing of 5 μm, which is covered with a rubbed (Rubbing direction: 80° with respect to the electrodes) homogeneous alignment layers (PI)) is filled with the liquid crystal mixture M-1. The cell appears transparent with unpolarised light. Upon application of an increasing electric field (AC) with a voltage frequency of 1Hz the cell switches gradually to a translucent and then to a strongly scattering state exhibiting a clear white appearance. The effect is depicted in Fig. 7.

**Example 6:**

A test cell having a cell gap of 3.5 μm and consisting of two glass substrates, an IPS electrode structure having an electrode width of 3 μm and an electrode spacing of 5 μm, which is covered with a rubbed (Rubbing direction: 80° with respect to the electrodes) homogeneous alignment layers (PI) is filled with the liquid crystal mixture M-1. The cell appears transparent with unpolarised light. Upon application of an increasing electric field (AC) with a voltage frequency of 100Hz the cell switches gradually to a translucent and then to a scattering state exhibiting a hazy appearance. The effect is depicted in Fig. 8.

**Example 7:**

A test cell having a cell gap of 10 μm and consisting of two glass substrates, an IPS electrode structure having an electrode width of 10 μm and an electrode spacing of 10 μm, is filled with the liquid crystal mixture M-1. The cell appears transparent with unpolarised light. Upon application of an increasing electric field (AC) with a voltage frequency of 1Hz the cell switches gradually to a translucent and then to a strongly scattering state exhibiting a clear white appearance. The effect is depicted in Fig. 9.

**Example 8:**

A test cell having a cell gap of 10 μm and consisting of two glass substrates, an IPS electrode structure having an electrode width of 10 μm and an electrode spacing of 10 μm, is filled with the liquid crystal mixture M-1. The cell appears transparent with unpolarised light. Upon application of an increasing electric field (AC) with a voltage frequency of 100Hz the cell switches gradually to a translucent and then to a scattering state exhibiting a hazy appearance. The effect is depicted in Fig. 10.

**Example 9:**

A test cell having a cell gap of 6 μm and consisting of two glass substrates, an opposing electrode structure covered with anti-parallel rubbed homogeneous alignment layers (PI) is filled with the liquid crystal mixture M-2. The cell appears transparent with unpolarised light. Upon application of an electric field of 10 V (DC) the cell switches gradually to a translucent and then to a strongly scattering state exhibiting a clear white appearance. The reversible effect is depicted in Fig. 11 and 12.

**Example 10:**

A test cell having a cell gap of 6 μm and consisting of two glass substrates, an opposing electrode structure covered with anti-parallel rubbed homogeneous alignment layers (PI) is filled with the liquid crystal mixture M-2. The cell appears transparent with unpolarised light. Upon application of an increasing electric field (AC) with a voltage frequency of 1Hz the cell switches gradually to a translucent and then to a strongly scattering state exhibiting a clear white appearance. The effect is depicted in Fig. 13.

**Example 11**:

A test cell having a cell gap of 6 μm and consisting of two glass substrates, an opposing electrode structure covered with anti-parallel rubbed homogeneous alignment layers (PI) is filled with the liquid crystal mixture M-2. The cell appears transparent with unpolarised light. Upon application of an increasing electric field (AC) with a voltage frequency of 100 Hz the cell switches gradually to a translucent and then to a strongly scattering state exhibiting a clear white appearance. The effect is depicted in Fig. 14.

**Claims**

1. Window comprising a device for the regulation of light transmission, comprising a liquid crystalline medium exhibiting a converse flexoelectric effect, which is sandwiched between two substrates, wherein at least one substrate is provided with an electrode structure.

2. Window according to claim 1, **characterised in that** the device utilizes a liquid crystalline medium comprising one or more bimesogenic compounds.

3. Window according to claim 1 or 2, **characterised in that** the device has two boundary states, one, a boundary state A with a corresponding transmission $T_A$ when no electrical field is applied the so-called "off' state or transparent state, and the other, a boundary state B with a corresponding transmission $T_B$ when an electrical field is applied the so-called "on" state or light scattering state, whereby:
$T_A > T_B$.

4. Window according to one or more of claims 1 to 3, **characterised in that** the liquid crystalline medium comprises one or more bimesogenic compounds which are preferably selected from the group of compounds of formulae A-I

to A-III,

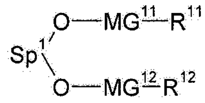

A-I

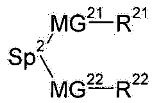

A-II

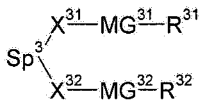

A-III

and wherein

$R^{11}$ and $R^{12}$, $R^{21}$ and $R^{22}$, and $R^{31}$ and $R^{32}$ are each independently H, F, Cl, CN, NCS or a straight-chain or branched alkyl group with 1 to 25 C atoms which may be unsubstituted, mono- or polysubstituted by halogen or CN, it being also possible for one or more non-adjacent $CH_2$ groups to be replaced, in each occurrence independently from one another, by -O-, -S-, -NH-, -N($CH_3$)-, -CO-, -COO-, -OCO-, -O-CO-O-, -S-CO-, -CO-S-, -CH=CH-, -CH=CF-, -CF=CF- or-C≡C- in such a manner that oxygen atoms are not linked directly to one another,

$MG^{11}$ and $MG^{12}$, $MG^{21}$ and $MG^{22}$, and $MG^{31}$ and $MG^{32}$ are each independently a mesogenic group,

$Sp^1$, $Sp^2$ and $Sp^3$ are each independently a spacer group comprising 5 to 40 C atoms, wherein one or more non-adjacent $CH_2$ groups, with the exception of the $CH_2$ groups of $Sp^1$ linked to O-$MG^{11}$ and/or O-$MG^{12}$, of $Sp^2$ linked to $MG^{21}$ and/or $MG^{22}$ and of $Sp^3$ linked to $X^{31}$ and $X^{32}$, may also be replaced by -O-, -S-, -NH-,-N($CH_3$)-, -CO-, -O-CO-, -S-CO-, -O-COO-, -CO-S-, -CO-O-, -CH(halogen)-, -CH(CN)-, -CH=CH- or -C≡C-, however in such a way that no two O-atoms are adjacent to one another, no two-CH=CH- groups are adjacent to each other, and no two groups selected from -O-CO-, -S-CO-,-O-COO-, -CO-S-, -CO-O- and -CH=CH- are adjacent to each other and

$X^{31}$ and $X^{32}$ are independently from one another a linking group selected from -CO-O-, -O-CO-, -CH=CH-, -C≡C- or -S-, and, alternatively, one of them may also be either -O- or a single bond, and, again alternatively, one of them may be -O- and the other one a single bond.

5. Window according to one or more of claims 1 to 4, **characterised in that** the liquid crystalline medium comprises one or more dyes.

6. Window according to one or more of claims 1 to 5, **characterised in that** the liquid crystalline medium comprises one or more dichroic dyes.

7. Window according to one or more of claims 1 to 6, **characterised in that** the liquid crystalline medium comprises one or more dichroic dyes selected from the group of compounds of formula I,

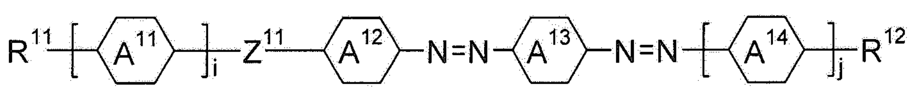

I

wherein,

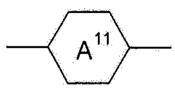

to

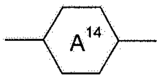

are at each occurrence , identically or differently, selected from

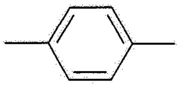 , 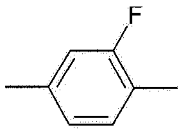 , 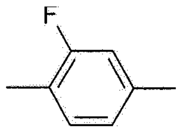 ,

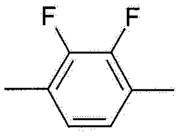 , 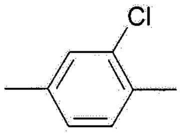 , 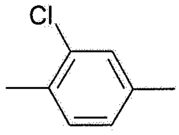 ,

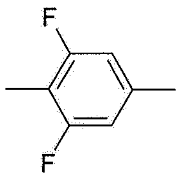 , 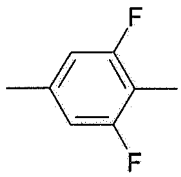

or

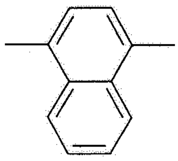 ,

and, in case i is 2 or more, the terminal one of group

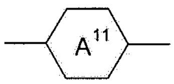

may also be

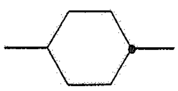 , 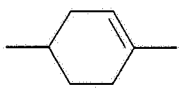 , 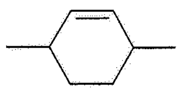 ,

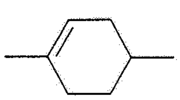 , 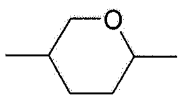 , 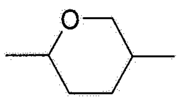 ,

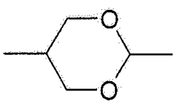 , 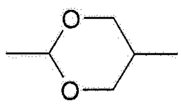

or

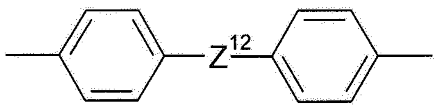

,

and, in case j is 2 or more, the terminal one of group

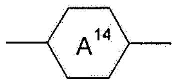

may also be

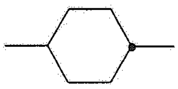 , 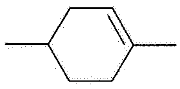 , 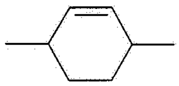 ,

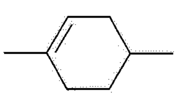 , 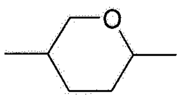 , 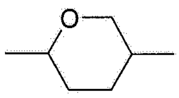 ,

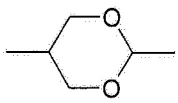 , 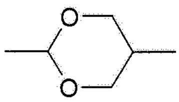 ,

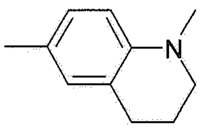 or 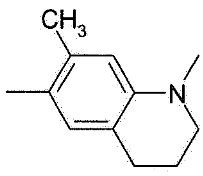 ,

$Z^{11}$ and $Z^{12}$ are, independently of each other, -N=N-, -OCO- or -COO-,
$R^{11}$ and $R^{12}$ are, independently of each other, alkyl, alkoxy, fluorinated alkyl or fluorinated alkoxy, alkenyl, alkenyloxy, alkoxyalkyl or fluorinated alkenyl, alkylaminyl, dialkylaminy, alkylcarbonyl, alkyloxycarbonyl, alkylcarbonyloxy, alkyloxycarbonyloxy or alkylcyclohexylalkyl, and
i and j are independently of each other 1, 2, 3 or 4.

8. Window according to one or more of claims 1 to 7, **characterised in that** the device comprises no polarizer.

9. Window according to one or more of claims 1 to 8, **characterised in that** the device comprises no alignment layer.

10. Window according to one or more of claims 1 to 8, **characterised in that** the device comprises one or more alignment layers capable of inducing a homeotropic orientation to the adjacent liquid-crystalline medium.

11. Window according to one or more of claims 1 to 8, **characterised in that** the device comprises one or more alignment layers capable of inducing a planar orientation to the adjacent liquid-crystalline medium.

12. Use of the window according to one or more of claims 1 to 11 for the regulation of light entry and/or energy input into an interior.

13. Process for the production of the window according to one or more of claims 1 to 11, comprising the steps of

- cutting and cleaning glass substrates, on which the electrodes are arranged,
- optionally, coating the substrates with an alignment layer or dielectric layer,
- assembling the cell using a UV curable adhesive, and
- filling the cell with the liquid-crystalline medium.

**14.** Window according to claim 1 to 11, **characterized in that** it is a privacy window.

**Patentansprüche**

**1.** Fenster enthaltend eine Vorrichtung zur Regulierung der Lichttransmission, enthaltend ein einen umgekehrten flexoelektrischen Effekt zeigendes flüssigkristallines Medium, das zwischen zwei Substraten angeordnet ist, bei dem mindestens ein Substrat mit einer Elektrodenstruktur versehen ist.

**2.** Fenster nach Anspruch 1, **dadurch gekennzeichnet, dass** die Vorrichtung ein flüssigkristallines Medium nutzt, das eine oder mehrere bimesogene Verbindungen enthält.

**3.** Fenster nach Anspruch 1 oder 2, **dadurch gekennzeichnet, dass** die Vorrichtung zwei Grenzzustände aufweist, den einen, einen Grenzzustand A mit einer entsprechenden Transmission $T_A$, wenn kein elektrisches Feld angelegt ist, den sogenannten "Aus"-Zustand oder transparenten Zustand, und den anderen, einen Grenzzustand B mit einer entsprechenden Transmission $T_B$, wenn ein elektrisches Feld angelegt ist, den sogenannten "An"-Zustand oder lichtstreuenden Zustand, WO:
$T_A > T_B$.

**4.** Fenster nach einem oder mehreren der Ansprüche 1 bis 3, **dadurch gekennzeichnet, dass** das flüssigkristalline Medium eine oder mehrere bimesogene Verbindungen enthält, die vorzugsweise ausgewählt sind aus der Gruppe der Verbindungen der Formeln A-I bis A-III

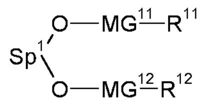

A-I

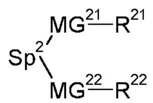

A-II

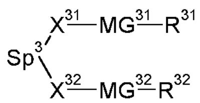

A-III

bei denen

$R^{11}$ und $R^{12}$, $R^{21}$ und $R^{22}$, und $R^{31}$ und $R^{32}$ jeweils unabhängig H, F, Cl, CN, NCS oder eine geradkettige oder verzweigte Alkylgruppe mit 1 bis 25 C-Atomen sind, die unsubstituiert oder ein-oder mehrfach durch Halogen oder CN substi-tuiert sein kann, wobei auch eine oder mehrere nicht benachbarte $CH_2$-Gruppen bei jedem Auftreten unabhängig voneinander so durch -O-, -S-, -NH-, -N($CH_3$)-, -CO-, -COO-, -OCO-, -O-CO-O-, -S-CO-, -CO-S-, -CH=CH-, -CH=CF-, -CF=CF- oder -C≡C- ersetzt sein können, dass Sauerstoff-atome nicht direkt miteinander verknüpft sind,
$MG^{11}$ und $MG^{12}$, $MG^{21}$ und $MG^{22}$, und $MG^{31}$ und $MG^{32}$ jeweils unabhängig eine mesogene Gruppe sind,
$Sp^1$, $Sp^2$ und $Sp^3$ jeweils unabhängig eine Spacergruppe mit 5 bis 40 C-Atomen sind, bei der eine oder mehrere nicht benachbarte $CH_2$-Gruppen, mit Ausnahme der $CH_2$-Gruppen von $Sp^1$, die mit O-$MG^{11}$ und/ oder O-$MG^{12}$ verknüpft sind, von $Sp^2$, die mit $MG^{21}$ und/oder $MG^{22}$ verknüpft sind, und von $Sp^3$, die mit $X^{31}$ und $X^{32}$ verknüpft sind, auch durch -O-, -S-, -NH-, -N($CH_3$)-, -CO-, -O-CO-, -S-CO-, -O-COO-, -CO-S-, -CO-O-, -CH(Halogen)-, -CH(CN)-, -CH=CH- oder -C≡C-ersetzt sein können, jedoch so, dass keine zwei O-Atome einander benachbart sind, keine zwei -CH=CH-Gruppen einander benachbart sind und keine zwei aus -O-CO-, -S-CO-, -O-COO-,

-CO-S-, -CO-O- und -CH=CH- ausgewählten Gruppen einander benachbart sind, und
$X^{31}$ und $X^{32}$ unabhängig voneinander eine aus -CO-O-, -O-CO-, -CH=CH-, -C≡C- oder -S- ausgewählte Verknüpfungsgruppe sind und einer von ihnen alternativ auch entweder -O- oder eine Einfachbindung sein kann und wiederum alternativ einer von ihnen -O- und der andere eine Einfachbindung sein kann.

**5.** Fenster nach einem oder mehreren der Ansprüche 1 bis 4, **dadurch gekennzeichnet, dass** das flüssigkristalline Medium einen oder mehrere Farbstoffe enthält.

**6.** Fenster nach einem oder mehreren der Ansprüche 1 bis 5, **dadurch gekennzeichnet, dass** das flüssigkristalline Medium einen oder mehrere dichroitische Farbstoffe enthält.

**7.** Fenster nach einem oder mehreren der Ansprüche 1 bis 6, **dadurch gekennzeichnet, dass** das flüssigkristalline Medium einen oder mehrere dichroitische Farbstoffe enthält, die ausgewählt sind aus der Gruppe der Verbindungen der Formel I

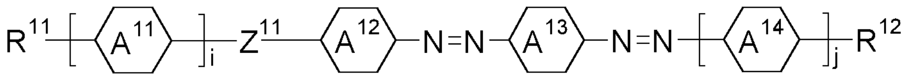 I

bei der

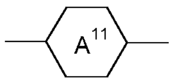

bis

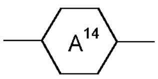

bei jedem Auftreten, gleich oder verschieden, ausgewählt sind aus

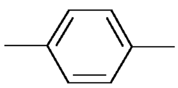 , 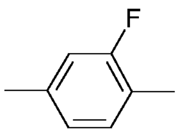 , 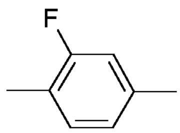 ,

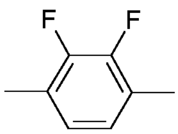 , 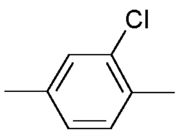 , 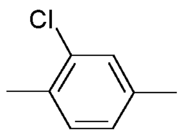 ,

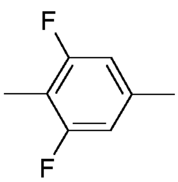 , 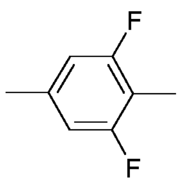

oder

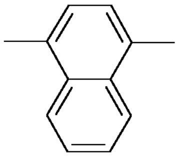
,

und, wenn i 2 oder mehr ist, die endständige der Gruppe

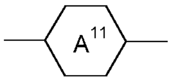

auch

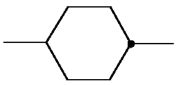 , 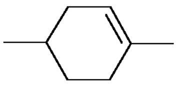 , 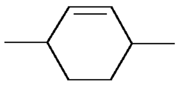 ,

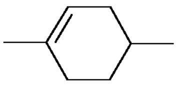 , 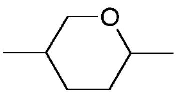 , 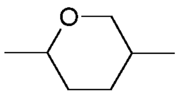 ,

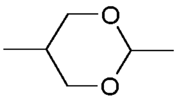 , 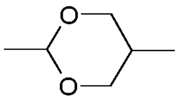

oder

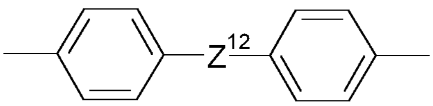

sein kann, und, wenn j 2 oder mehr ist, die endständige der Gruppe

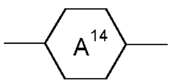

auch

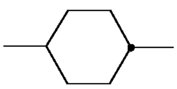 , 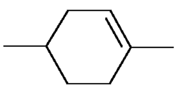 , 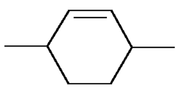 ,

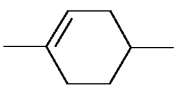 , 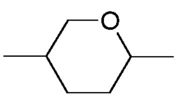 , 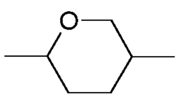 ,

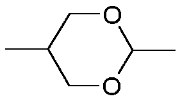 , 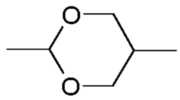 ,

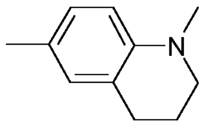

oder

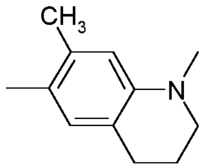

sein kann,

$Z^{11}$ und $Z^{12}$ unabhängig voneinander -N=N-, -OCO- oder-COO- sind,
$R^{11}$ und $R^{12}$ unabhängig voneinander Alkyl, Alkoxy, fluoriertes Alkyl oder fluoriertes Alkoxy, Alkenyl, Alkenyloxy, Alkoxyalkyl oder fluoriertes Alkenyl, Alkylaminyl, Dialkylaminyl, Alkylcarbonyl, Alkyloxycarbonyl, Alkylcarbonyloxy, Alkyloxycarbonyloxy oder Alkylcyclohexylalkyl sind und
i und j unabhängig voneinander 1, 2, 3 oder 4 sind.

8. Fenster nach einem oder mehreren der Ansprüche 1 bis 7, **dadurch gekennzeichnet, dass** die Vorrichtung keinen Polarisator enthält.

9. Fenster nach einem oder mehreren der Ansprüche 1 bis 8, **dadurch gekennzeichnet, dass** die Vorrichtung keine Orientierungsschicht enthält.

10. Fenster nach einem oder mehreren der Ansprüche 1 bis 8, **dadurch gekennzeichnet, dass** die Vorrichtung eine oder mehrere Orientierungsschichten enthält, die in der Lage sind, eine homöotrope Ausrichtung im benachbarten flüssigkristallinen Medium zu induzieren.

11. Fenster nach einem oder mehreren der Ansprüche 1 bis 8, **dadurch gekennzeichnet, dass** die Vorrichtung eine oder mehrere Orientierungsschichten enthält, die in der Lage sind, eine planare Ausrichtung zum benachbarten flüssigkristallinen Medium zu induzieren.

12. Verwendung des Fensters nach einem oder mehreren der Ansprüche 1 bis 11 zur Regulierung des Lichteintritts und/oder der Energiezufuhr in einen Innenraum.

13. Verfahren zur Herstellung des Fensters nach einem oder mehreren der Ansprüche 1 bis 11, umfassend die Schritte

- Schneiden und Reinigen von Glassubstraten, auf denen die Elektroden angeordnet sind,
- gegebenenfalls Beschichten der Substrate mit einer Orientierungsschicht oder dielektrischen Schicht,
- Zusammensetzen der Zelle mit einem UV-härtbaren Klebstoff und
- Füllen der Zelle mit dem flüssigkristallinen Medium.

14. Fenster nach Anspruch 1 bis 11, **dadurch gekennzeichnet, dass** es sich um ein Sichtschutzfenster handelt.

## Revendications

1. Fenêtre comprenant un dispositif pour la régulation de la transmission de la lumière, comprenant un milieu cristallin liquide qui présente un effet flexoélectrique inverse, lequel est pris en sandwich entre deux substrats, dans laquelle

au moins un substrat est muni d'une structure d'électrodes.

2. Fenêtre selon la revendication 1, **caractérisée en ce que** le dispositif utilise un milieu cristallin liquide qui comprend un ou plusieurs composé(s) bimésogène(s).

3. Fenêtre selon la revendication 1 ou 2, **caractérisée en ce que** le dispositif comporte deux états de limite, à savoir un premier état de limite A qui présente une transmission correspondante $T_A$ lorsqu'aucun champ électrique n'est appliqué, lequel état est appelé état "de désactivation" ou état transparent, et un autre état de limite B qui présente une transmission correspondante $T_B$ lorsqu'un champ électrique est appliqué, lequel état est appelé état "d'activation" ou état de diffusion de lumière, états selon lesquels :
$T_A > T_B$.

4. Fenêtre selon une ou plusieurs des revendications 1 à 3, **caractérisée en ce que** le milieu cristallin liquide comprend un ou plusieurs composé(s) bimésogène(s) qui est/sont de préférence sélectionné(s) parmi le groupe de composés des formules A-I à A-III,

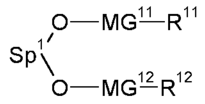

A-I

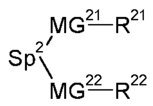

A-II

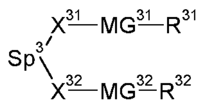

A-III

dans lesquelles

$R^{11}$ et $R^{12}$, $R^{21}$ et $R^{22}$, et $R^{31}$ et $R^{32}$ sont, chacun de manière indépendante, H, F, Cl, CN, NCS ou un groupe alkyle en chaîne droite ou ramifié qui comporte de 1 à 25 atome(s) de C, lequel peut être non substitué, mono- ou polysubstitué par halogène ou par CN, étant entendu qu'il est également possible qu'un ou que plusieurs groupe(s) $CH_2$ non adjacents soi(en)t remplacé(s), pour chaque occurrence de manière indépendante les unes des autres, par -O-, -S-, -NH-, -N($CH_3$)-, -CO-, -COO-, -OCO-, -O-CO-O-, -S-CO-, -CO-S-, -CH=CH-, -CH=CF-, -CF=CF- ou -C≡C- de telle sorte que des atomes d'oxygène ne soient pas liés directement les uns aux autres,
$MG^{11}$ et $MG^{12}$, $MG^{21}$ et $MG^{22}$, et $MG^{31}$ et $MG^{32}$ sont, chacun de manière indépendante, un groupe mésogène,
$Sp^1$, $Sp^2$ et $Sp^3$ sont, chacun de manière indépendante, un groupe d'espaceur qui comprend de 5 à 40 atomes de C, où un ou plusieurs groupe(s) $CH_2$ non adjacents, à l'exception des groupes $CH_2$ de $Sp^1$ lié à O-$MG^{11}$ et/ou à O-$MG^{12}$, de $Sp^2$ lié à $MG^{21}$ et/ou à $MG^{22}$ et de $Sp^3$ lié à $X^{31}$ et à $X^{32}$, peut/peuvent également être remplacé(s) par -O-, -S-, -NH-, -N($CH_3$)-, -CO-, -O-CO-, -S-CO-, -O-COO-, -CO-S-, -CO-O-, -CH(halogène)-, -CH(CN)-, -CH=CH- ou -C≡C-, cependant de telle sorte que deux atomes de O ne soient pas adjacents l'un à l'autre, deux groupes -CH=CH-ne soient pas adjacents l'un à l'autre, et deux groupes sélectionnés parmi -O-CO-, -S-CO-, -O-COO-, -CO-S-, -CO-O- et -CH=CH- ne soient pas adjacents l'un à l'autre et
$X^{31}$ et $X^{32}$ sont, de manière indépendante l'un de l'autre, un groupe de liaison qui est sélectionné parmi -CO-O-, -O-CO-, -CH=CH-, -C≡C- ou -S-, et, à titre d'alternative, l'un d'entre eux peut également être soit -O-, soit une liaison simple, et, à nouveau à titre d'alternative, l'un d'entre eux peut être -O- et l'autre peut être une liaison simple.

5. Fenêtre selon une ou plusieurs des revendications 1 à 4, **caractérisée en ce que** le milieu cristallin liquide comprend un ou plusieurs colorant(s).

6. Fenêtre selon une ou plusieurs des revendications 1 à 5, **caractérisée en ce que** le milieu cristallin liquide comprend un ou plusieurs colorant(s)dichroïque(s).

**7.** Fenêtre selon une ou plusieurs des revendications 1 à 6, **caractérisée en ce que** le milieu cristallin liquide comprend un ou plusieurs colorant(s)dichroïque(s) qui est/sont sélectionné(s) parmi le groupe de composés de la formule I,

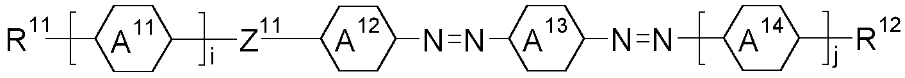

I

dans laquelle,

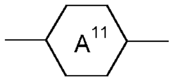

à

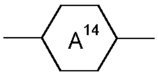

sont pour chaque occurrence, de manière identique ou différente, sélectionnés parmi

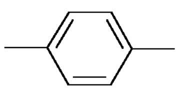
,
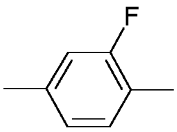
,
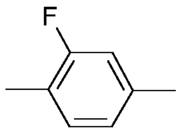
,
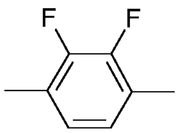
,
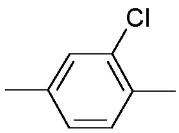
,
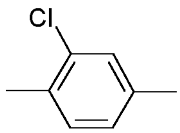
,
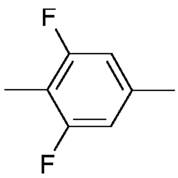
,
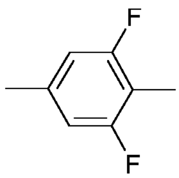

ou

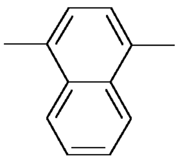
.

et, dans le cas où i est 2 ou plus, l'élément terminal de groupe

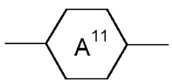

peut également être

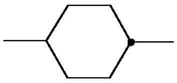, 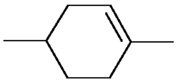, 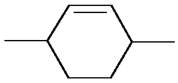,

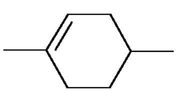, 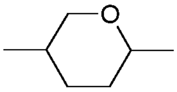, 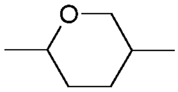,

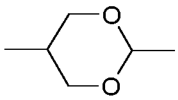, 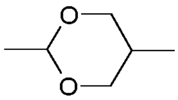

ou

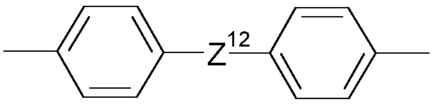,

et, dans le cas où j est 2 ou plus, l'élément terminal de groupe

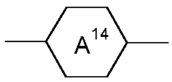

peut également être

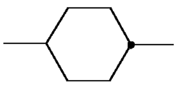, 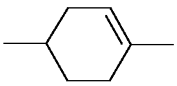, 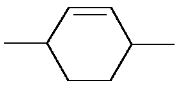,

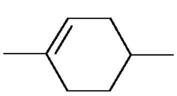, 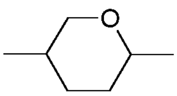, 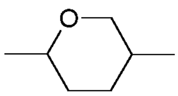,

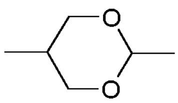, 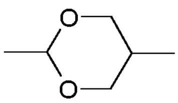,

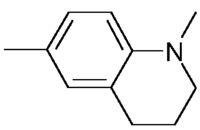 ou 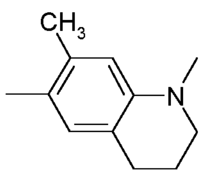,

$Z^{11}$ et $Z^{12}$ sont, de manière indépendante l'un de l'autre,-N=N-, -OCO- ou -COO-,

$R^{11}$ et $R^{12}$ sont, de manière indépendante l'un de l'autre, alkyle, alcoxy, alkyle fluoré ou alcoxy fluoré, alkényle, alkényloxy, alcoxyalkyle ou alkényle fluoré, alkylaminyle, dialkylaminyle, alkyl-carbonyle, alkyloxycarbonyle, alkylcarbonyloxy, alkyloxycarbonyloxy ou alkylcyclohexylalkyle, et

i et j sont, de manière indépendante l'un de l'autre 1, 2, 3 ou 4.

8. Fenêtre selon une ou plusieurs des revendications 1 à 7, **caractérisée en ce que** le dispositif ne comprend pas de polariseur.

9. Fenêtre selon une ou plusieurs des revendications 1 à 8, **caractérisée en ce que** le dispositif ne comprend pas de couche d'alignement.

10. Fenêtre selon une ou plusieurs des revendications 1 à 8, **caractérisée en ce que** le dispositif comprend une ou plusieurs couche(s) d'alignement disposant de la capacité d'induire une orientation homéotrope par rapport au milieu cristallin liquide adjacent.

11. Fenêtre selon une ou plusieurs des revendications 1 à 8, **caractérisée en ce que** le dispositif comprend une ou plusieurs couche(s) d'alignement disposant de la capacité d'induire une orientation plane par rapport au milieu cristallin liquide adjacent..

12. Utilisation de la fenêtre selon une ou plusieurs des revendications 1 à 11 pour la régulation de l'entrée de la lumière et/ou de l'entrée de l'énergie à l'intérieur d'un intérieur.

13. Procédé pour la fabrication de la fenêtre selon une ou plusieurs des revendications 1 à 11, comprenant les étapes constituées par

    - la découpe et le nettoyage de substrats en verre, sur lesquels les électrodes sont agencées,
    - en option, le revêtement des substrats avec une couche d'alignement ou une couche diélectrique,
    - l'assemblage de la cellule en utilisant un adhésif durcissable aux UV, et
    - le remplissage de la cellule avec le milieu cristallin liquide.

14. Fenêtre selon une ou plusieurs des revendications 1 à 11, **caractérisée en ce qu'**il s'agit d'une fenêtre de confidentialité.

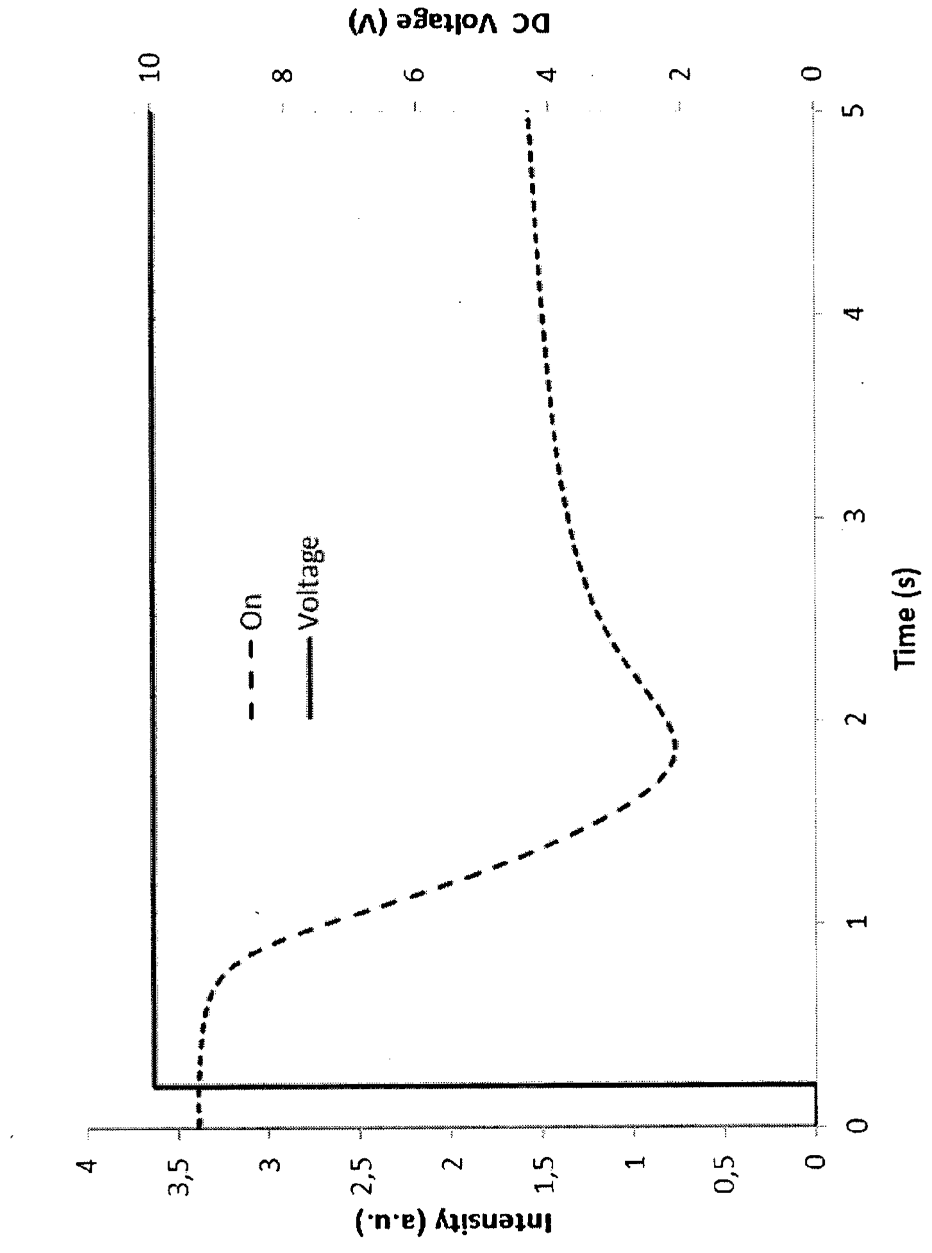
Intensity (a.u.)
DC Voltage (V)
Time (s)
On
Voltage
0
0,5
1
1,5
2
2,5
3
3,5
4
0
2
4
6
8
10
0
1
2
3
4
5

Figure 1

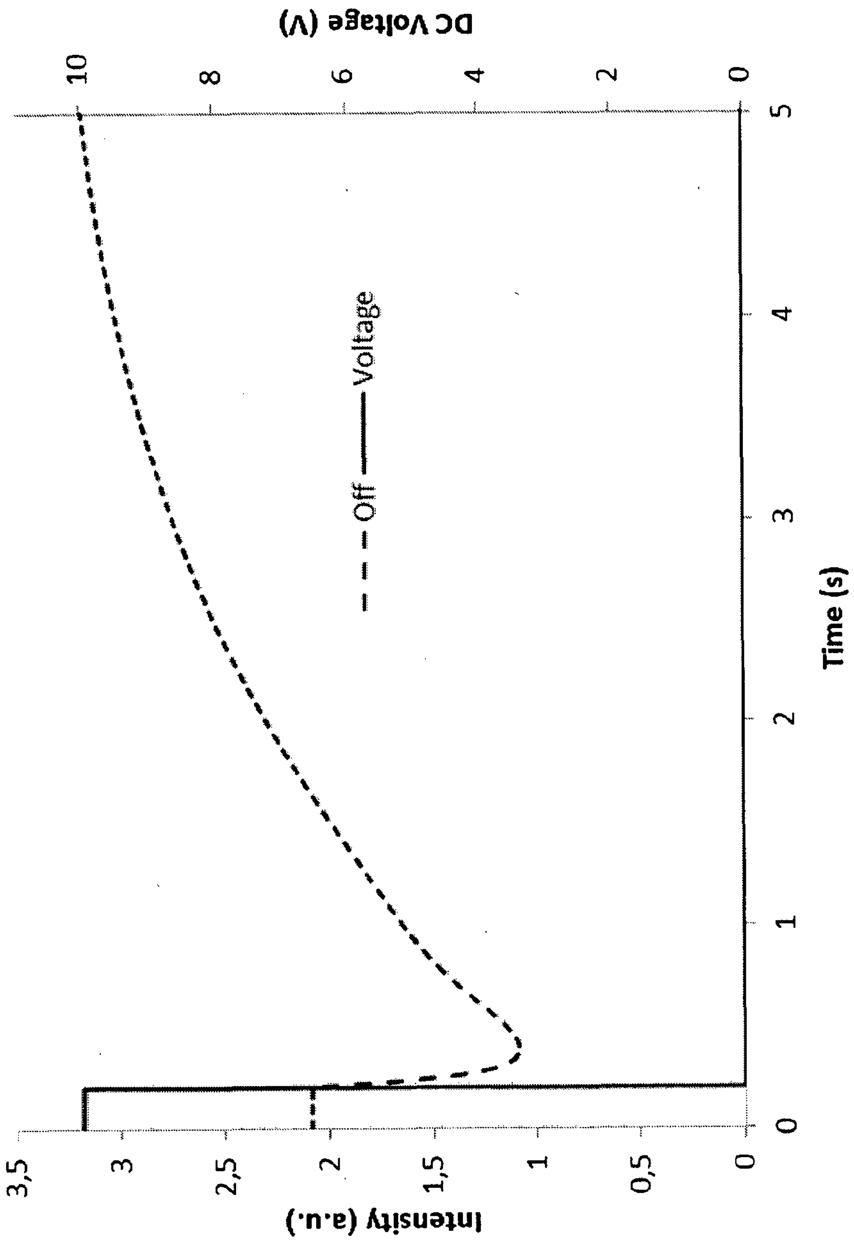


Figure 2

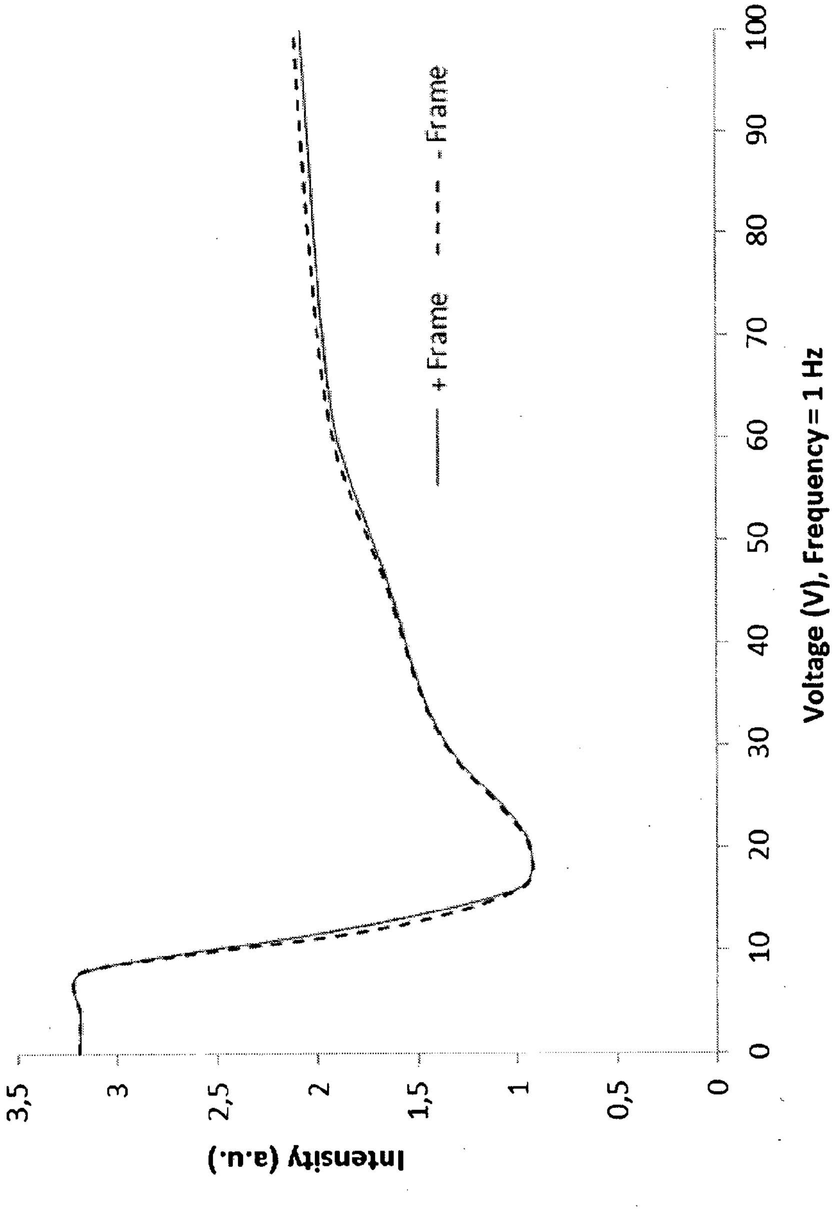
Intensity (a.u.)
3,5
3
2,5
2
1,5
1
0,5
0
0
10
20
30
40
50
60
70
80
90
100
Voltage (V), Frequency = 1 Hz
+ Frame
- Frame

Figure 3

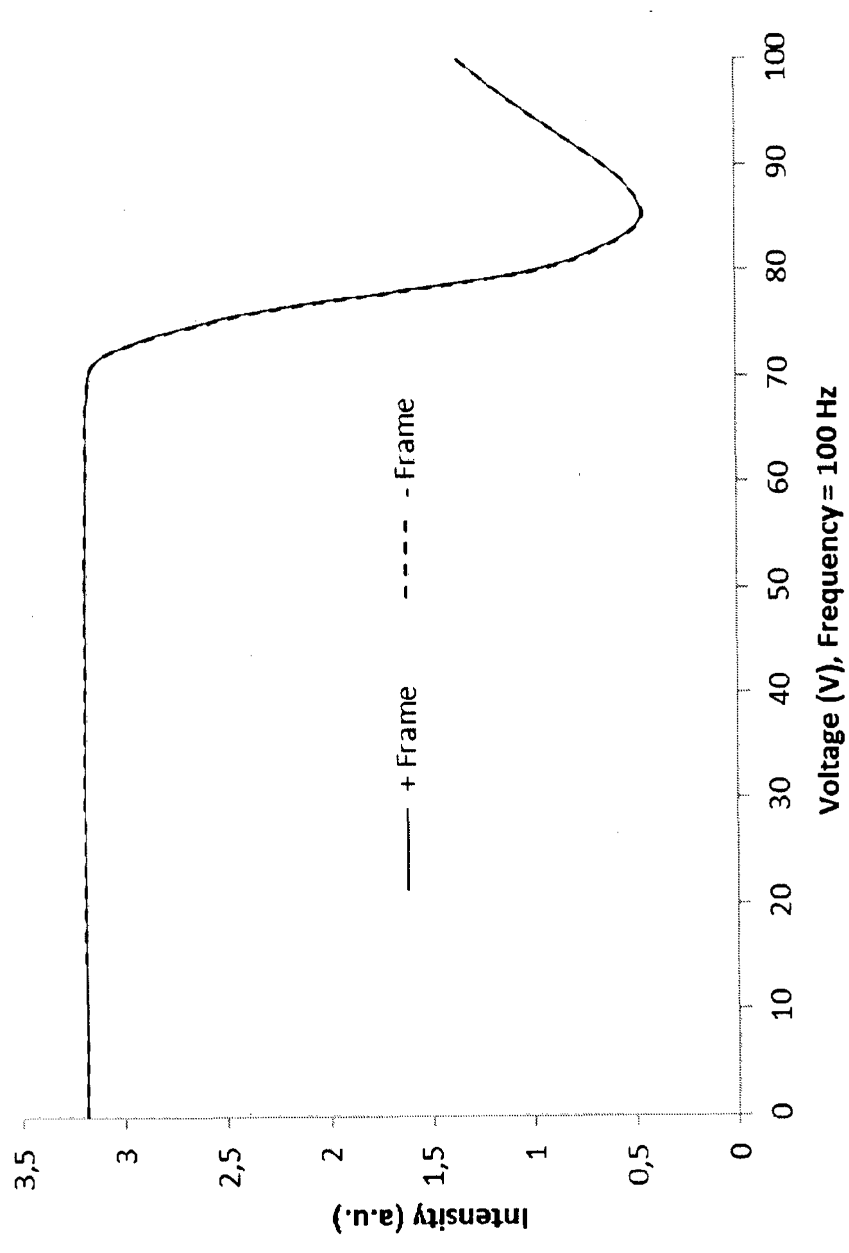
Intensity (a.u.)
3,5
3
2,5
2
1,5
1
0,5
0
0
10
20
30
40
50
60
70
80
90
100
Voltage (V), Frequency = 100 Hz
+ Frame
- Frame

Figure 4

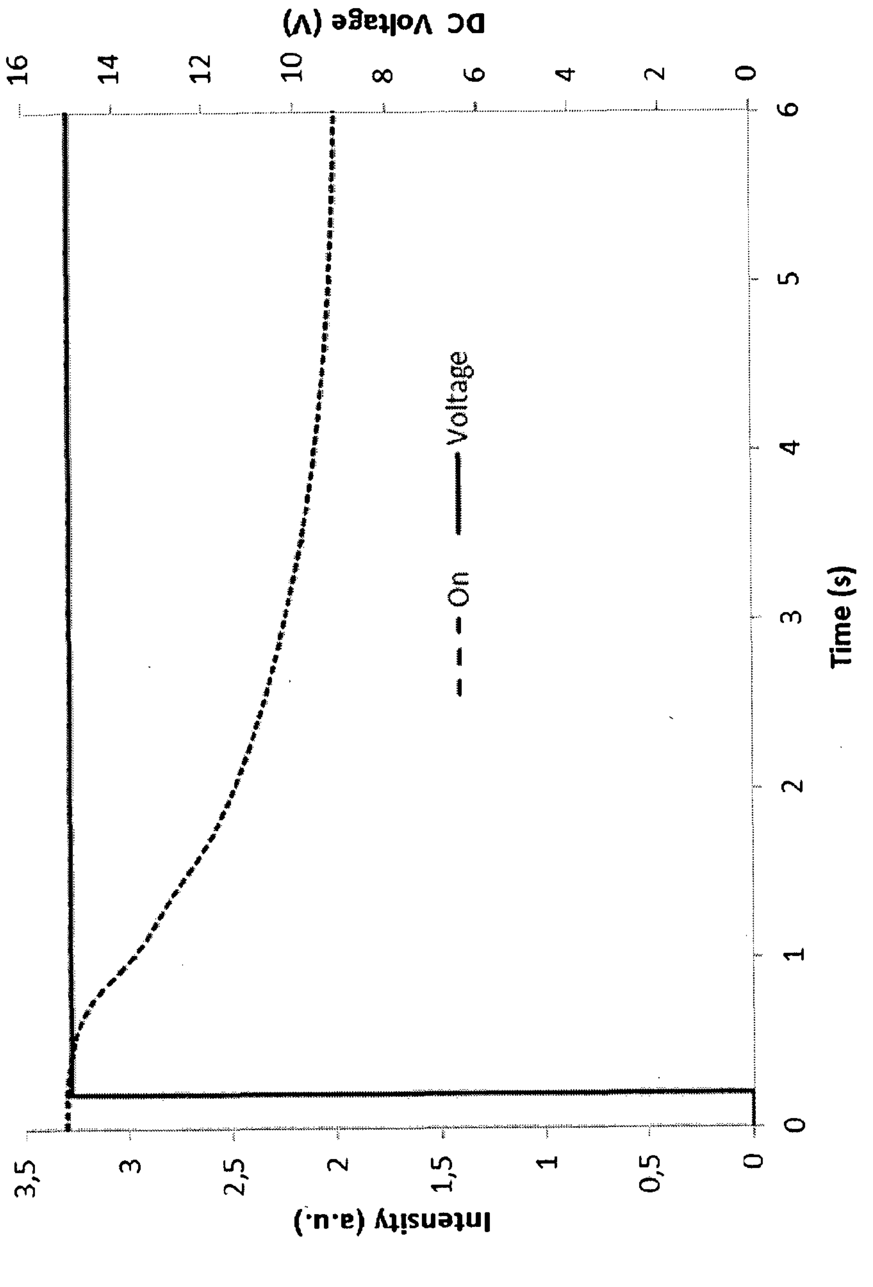

Intensity (a.u.)
DC Voltage (V)
Time (s)
On
Voltage
0
0,5
1
1,5
2
2,5
3
3,5
0
2
4
6
8
10
12
14
16
0
1
2
3
4
5
6


Figure 5

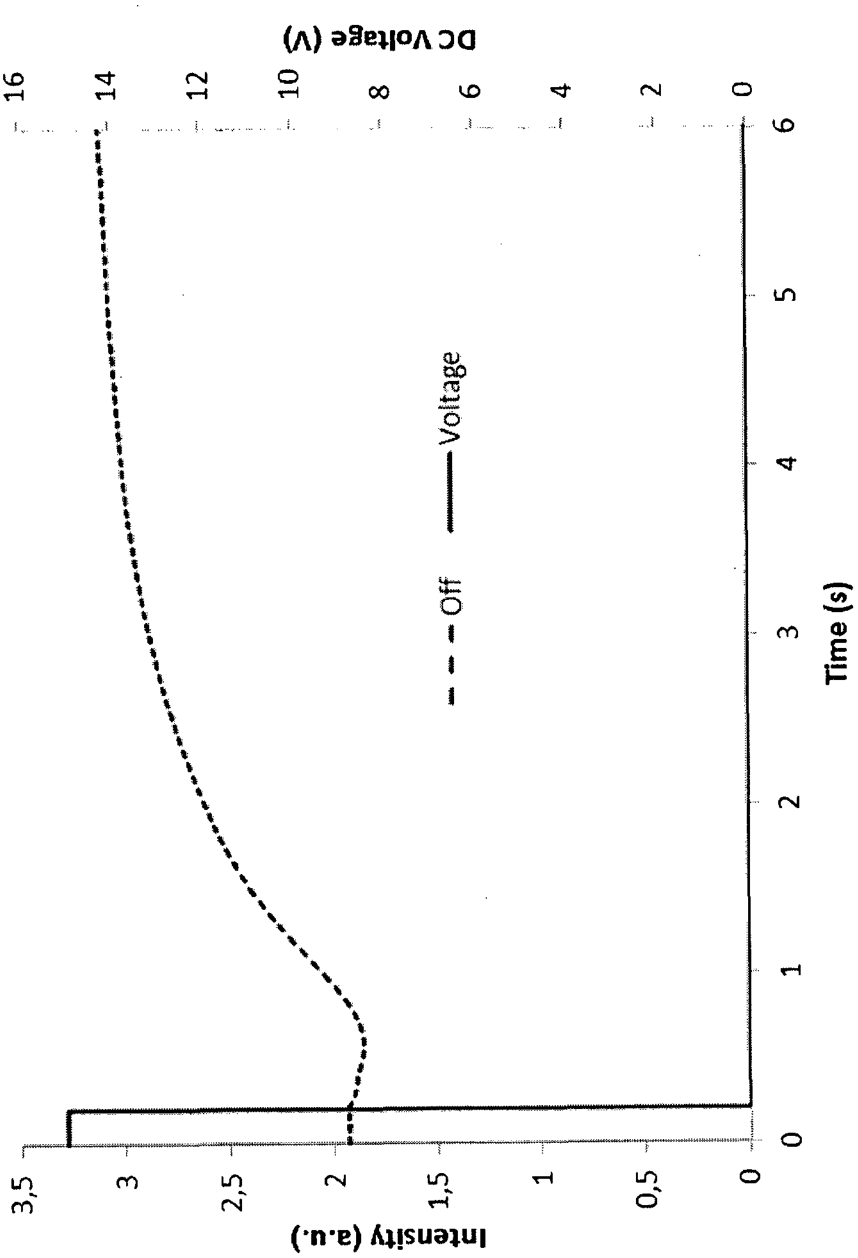
Intensity (a.u.)
DC Voltage (V)
Time (s)
Off
Voltage
0
0,5
1
1,5
2
2,5
3
3,5
0
2
4
6
8
10
12
14
16
0
1
2
3
4
5
6

Figure 6

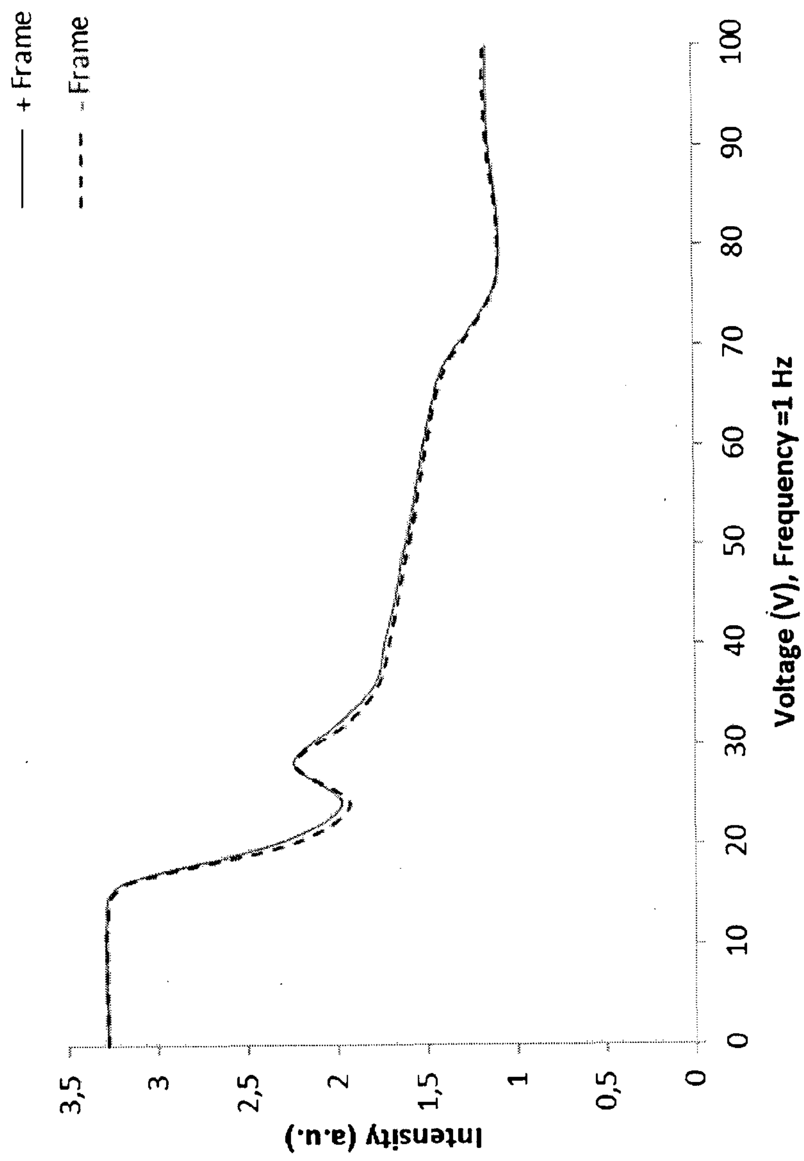
+ Frame
- Frame
Intensity (a.u.)
3,5
3
2,5
2
1,5
1
0,5
0
0
10
20
30
40
50
60
70
80
90
100
Voltage (V), Frequency=1 Hz

Figure 7

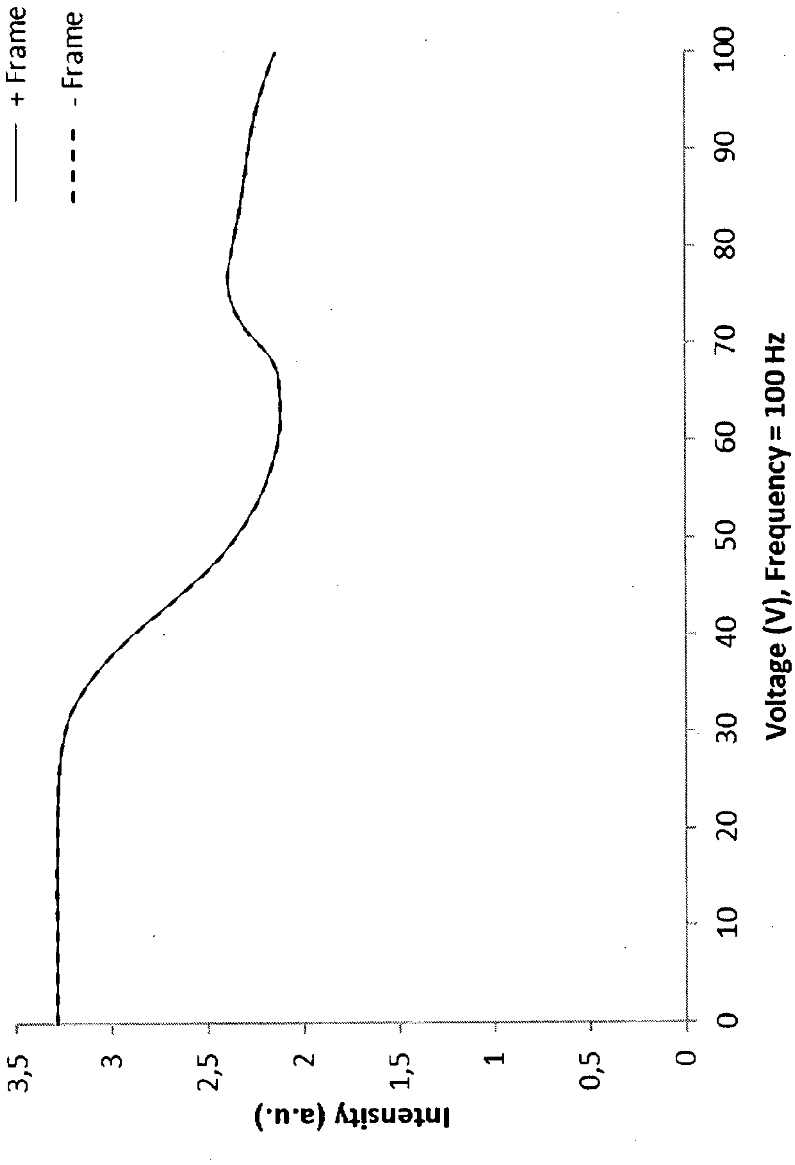
+ Frame
- Frame
Intensity (a.u.)
3,5
3
2,5
2
1,5
1
0,5
0
0
10
20
30
40
50
60
70
80
90
100
Voltage (V), Frequency = 100 Hz

Figure 8

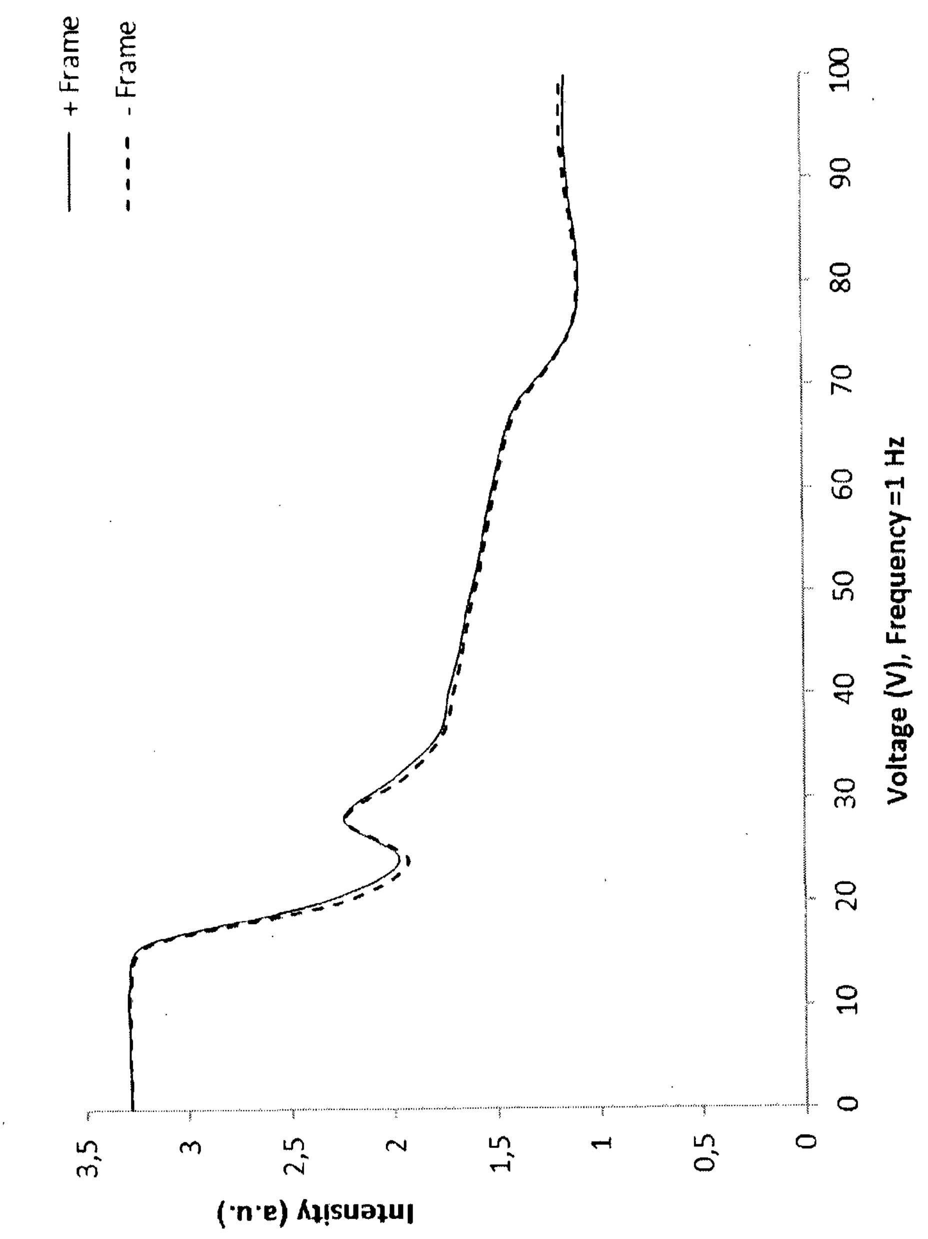
Intensity (a.u.)
3,5
3
2,5
2
1,5
1
0,5
0
0
10
20
30
40
50
60
70
80
90
100
Voltage (V), Frequency =1 Hz
+ Frame
- Frame

Figure 9

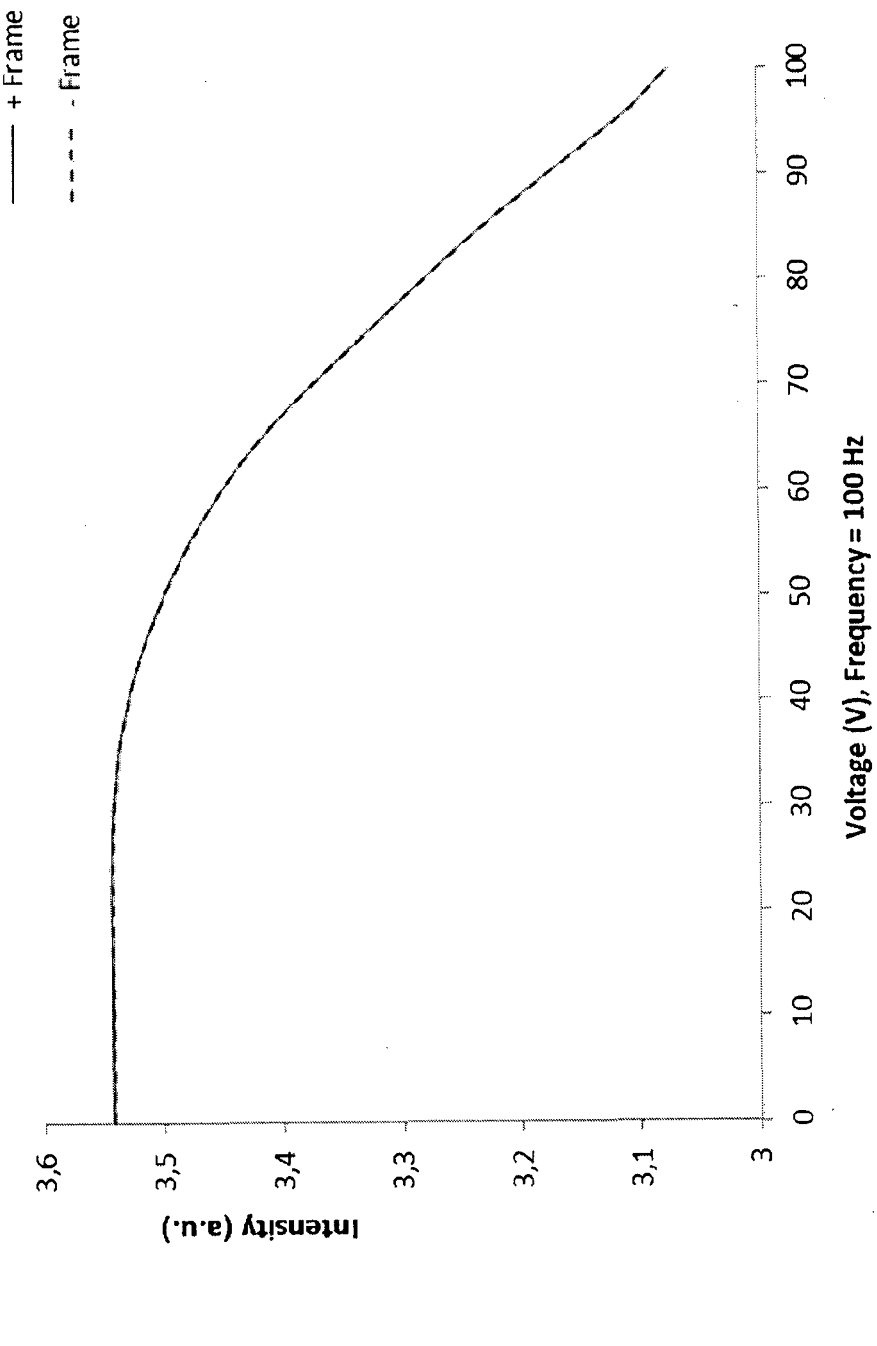
+ Frame
- Frame
Intensity (a.u.)
3,6
3,5
3,4
3,3
3,2
3,1
3
0
10
20
30
40
50
60
70
80
90
100
Voltage (V), Frequency = 100 Hz

Figure 10

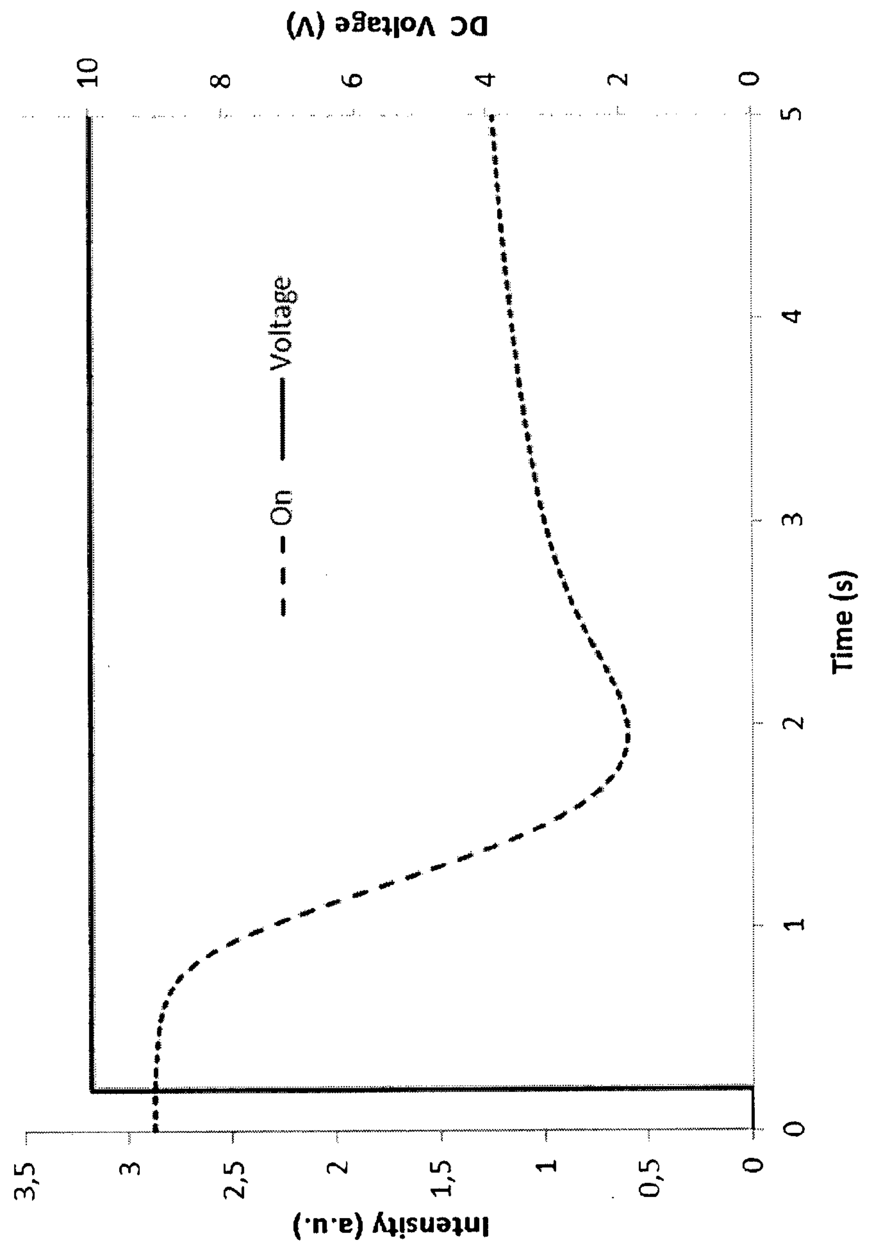
Intensity (a.u.)
3,5
3
2,5
2
1,5
1
0,5
0
DC Voltage (V)
10
8
6
4
2
0
On
Voltage
Time (s)
0
1
2
3
4
5

Figure 11

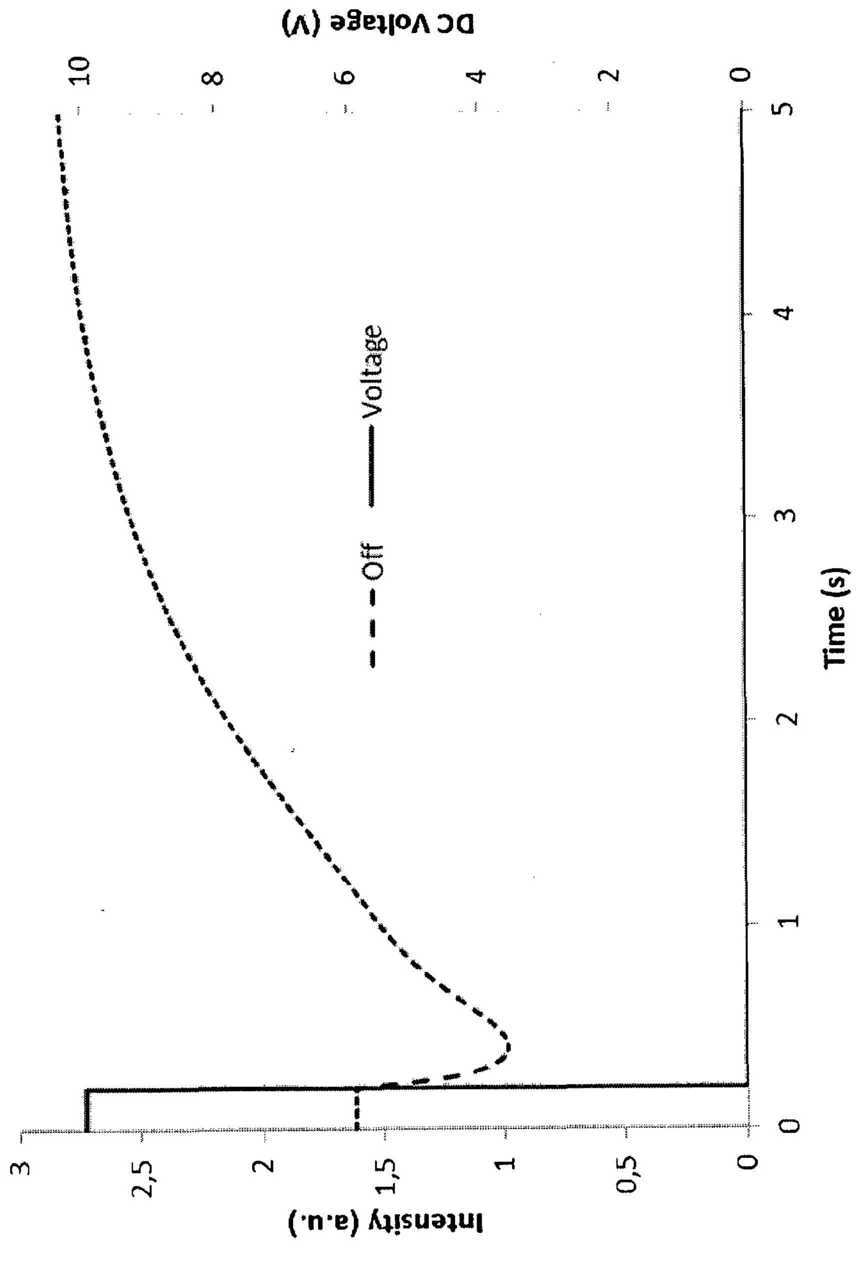
Intensity (a.u.)
0
0,5
1
1,5
2
2,5
3
DC Voltage (V)
0
2
4
6
8
10
Time (s)
0
1
2
3
4
5
Off
Voltage

Figure 12

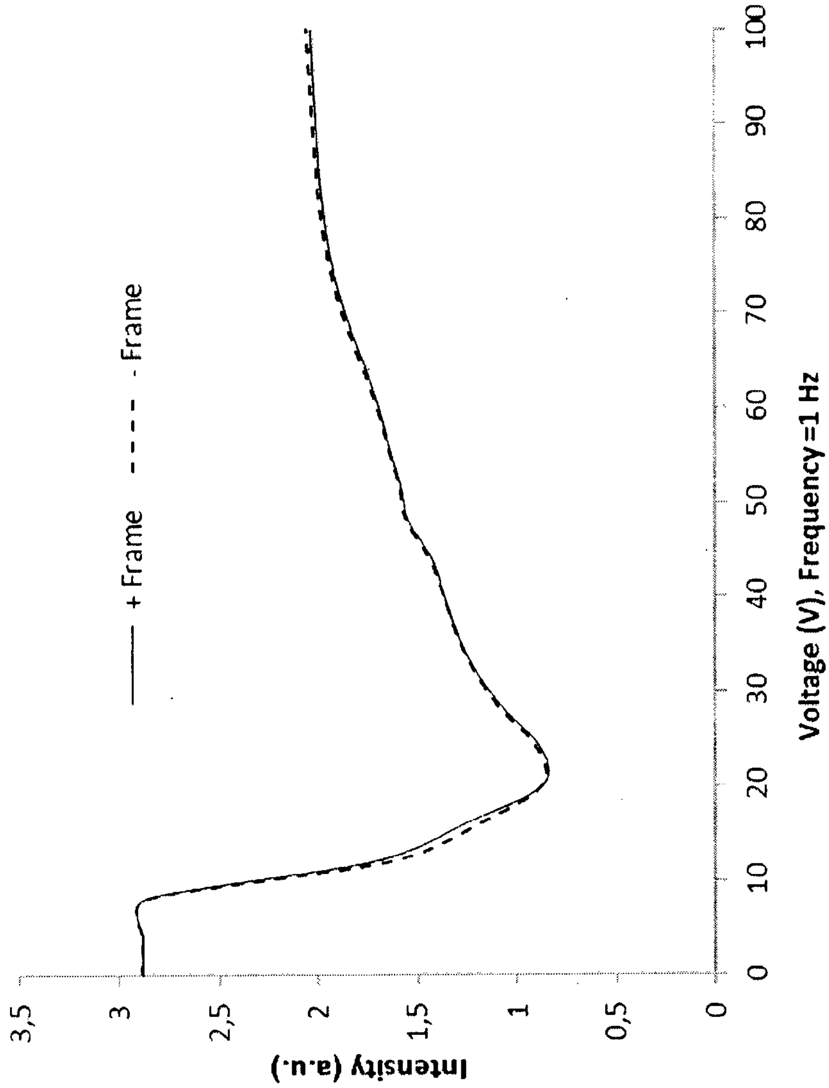

Intensity (a.u.)
3,5
3
2,5
2
1,5
1
0,5
0
0
10
20
30
40
50
60
70
80
90
100
Voltage (V), Frequency =1 Hz
+ Frame
- Frame


Figure 13

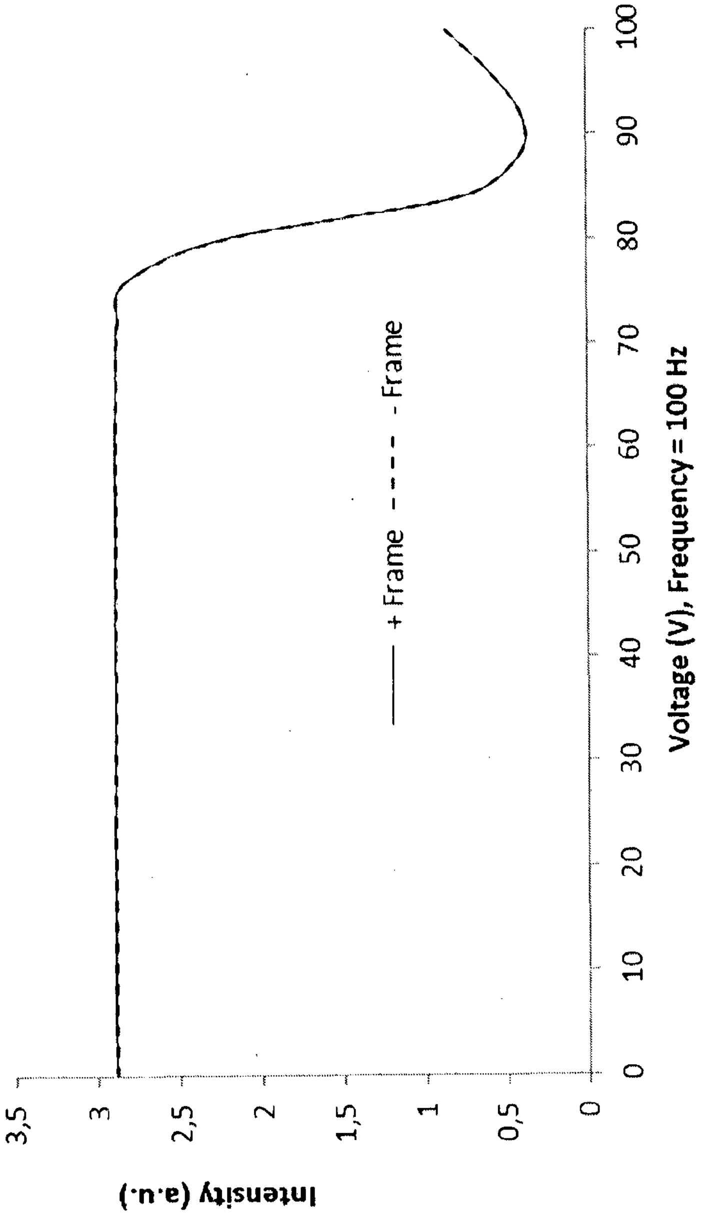
Intensity (a.u.)
3,5
3
2,5
2
1,5
1
0,5
0
0
10
20
30
40
50
60
70
80
90
100
Voltage (V), Frequency = 100 Hz
+ Frame
- Frame

Figure 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9219695 A
- US 5384067 A
- US 5453863 A
- WO 2015090511 A1
- WO 2015096879 A1
- WO 2014005670 A1
- WO 2014183825 A1
- GB 2356629 A
- EP 0971016 A
- US 20100045924 A


### Non-patent literature cited in the description


- **PRAMODA KUMAR et al.** Converse Flexoelectric Effect in Bent-Core Nematic Liquid Crystals. *JOURNAL OF PHYSICAL CHEMISTRY PART B: CONDENSED MATTER, MATERIALS, SURFACES, INTERFACES & BIOPHYSICAL,* 09 July 2009, vol. 1 13 (27), ISSN 1520-6106, 91 68-9174
- **VAN LE K et al.** Flexoelectric effect in a bent-core mesogen. *LIQUID CRYSTALS, TAYLOR & FRANCIS,* 01 October 2009, vol. 36 (10-1 1), ISSN 0267-8292, 1 1 1 9-1 1 24
- **J. HARDEN et al.** Converse flexoelectric effect in a bent-core nematic liquid crystal. *PHYSICAL REVIEW E (STATISTICAL, NONLINEAR, AND SOFT MATTER PHYSICS),* 01 September 2008, vol. 78 (3), ISSN 1539-3755
- **H.J. COLES et al.** *J. Appl. Phys.,* 2006, vol. 99, 034104
- **C. TSCHIERSKE ; G. PELZL ; S. DIELE.** *Angew. Chem.,* 2004, vol. 116, 6340-6368
- **HORI, K. ; LIMURO, M. ; NAKAO, A. ; TORIUMI, H.** *J. Mol. Struc.,* 2004, vol. 699, 23-29
- **JOO-HOON PARK et al.** Liquid Crystalline Properties of Dimers Having o-, m- and p- Positional Molecular structures. *Bill. Korean Chem. Soc.,* 2012, vol. 33 (5), 1647-1652
- **J. COGNARD.** *Mol.Cryst.Liq.Cryst.,* 1981, vol. 78 (1), 1-77